# EUROPEAN PATENT APPLICATION

(11) **EP 4 344 281 A1**
(43) Date of publication of application: **27.03.2024**
(21) Application number: 22815248.4
(22) Date of filing: 31.05.2022
(51) Int. Cl.: H04W 16/28, H04W 74/08

(54) **COMMUNICATION METHOD AND COMMUNICATION APPARATUS**

(30) Priority: 31.05.2021 CN 202110603552
(71) Applicant: Huawei Technologies Co., Ltd., Shenzhen, Guangdong 518129 (CN)
(72) Inventor: GAO, Fei, Shenzhen, Guangdong 518129 (CN); LIU, Xianda, Shenzhen, Guangdong 518129 (CN); FAN, Bo, Shenzhen, Guangdong 518129 (CN); JI, Liuliu, Shenzhen, Guangdong 518129 (CN)
(74) Representative: Pfenning, Meinig & Partner mbB
(86) International application number: PCT/CN2022/096116
(87) International publication number: WO 2022/253203

(57) **Abstract**

This application provides a communication method and a communication apparatus. The method includes: when at least two physical downlink control channel monitoring occasions PDCCH MOs overlap in time domain, determining a first SS set from at least two search space sets SS sets associated with the at least two PDCCH MOs, where the first SS set is associated with a first control resource set CORESET; and if the first SS set is configured for PDCCH repetition transmission in a frequency division multiplexing manner, determining a second SS set associated with the first SS set, and monitoring a PDCCH on the first CORESET and a second CORESET that is associated with the second SS set, where the first CORESET and the second CORESET correspond to different beams. In embodiments of this application, a beam conflict problem during control channel monitoring can be resolved, and PDCCH transmission reliability can be improved.

## Description

This application claims priority to Chinese Patent Application No. 202110603552.1, filed with the China National Intellectual Property Administration on May 31, 2021 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

In a communication system, a network device may send downlink control information (downlink control information, DCI) to a terminal device (or described as user equipment (user equipment, UE)) through a physical downlink control channel (physical downlink control channel, PDCCH). For example, the network device may configure, for the terminal device by using higher layer signaling, a plurality of search space sets (search space sets, SS sets) and a control resource set (control resource set, CORESET) associated with each SS set, so that the terminal device may determine a plurality of PDCCH monitoring occasions (PDCCH monitoring occasions, PDCCH MOs) based on the configured SS sets and CORESETs associated with the SS sets. However, the network device does not notify the terminal device of a specific candidate (candidate) PDCCH or specific candidate PDCCHs, included in a search space set, through which the network device is to send DCI. Therefore, the terminal device monitors, on each PDCCH monitoring occasion (PDCCH monitoring occasion, PDCCH MO), whether each candidate PDCCH included in a corresponding search space set carries DCI, and attempts to perform decoding on each candidate PDCCH to determine whether the corresponding DCI is received. This behavior is referred to as blind detection (blind detection, BD).

The plurality of PDCCH MOs may overlap in time domain, and QCL-TypeD properties of a plurality of CORESETs associated with the plurality of PDCCH MOs that overlap in time domain may be the same or may be different. When the QCL-TypeD properties of the plurality of CORESETs associated with the plurality of PDCCH MOs that overlap in time domain are different (that is, the plurality of CORESETs correspond to different beams), it is usually considered that the plurality of PDCCH MOs have a resource conflict (or the plurality of CORESETs have a resource conflict).

For UE that can support simultaneous reception of a plurality of different beams, when a plurality of PDCCH MOs have a resource conflict, how to monitor a PDCCH becomes one of urgent problems that need to be resolved.

### SUMMARY

This application provides a communication method and a communication apparatus, to resolve a beam conflict problem during control channel monitoring, and improve PDCCH transmission reliability.

According to a first aspect, this application provides a communication method. The method includes:
when at least two physical downlink control channel monitoring occasions PDCCH MOs overlap in time domain, determining a first SS set from at least two search space sets SS sets associated with the at least two PDCCH MOs, where the first SS set is associated with a first control resource set CORESET; and
monitoring a PDCCH on the first CORESET under one or more of the following conditions:
   if the first SS set is configured for PDCCH repetition transmission in a frequency division multiplexing manner (FDMed PDCCH repetition), determining a second SS set associated with the first SS set, and monitoring a PDCCH on the first CORESET and a second CORESET that is associated with the second SS set, where the first CORESET and the second CORESET correspond to different beams, the at least two PDCCH MOs include a PDCCH MO corresponding to the second SS set, the first SS set and the second SS set are configured for PDCCH repetition transmission in the frequency division multiplexing manner, and an association relationship between the first SS set and the second SS set is configured by using a radio resource control RRC parameter; or
   if the first SS set is configured for PDCCH repetition transmission in a time division multiplexing manner (TDMed PDCCH repetition), or the first SS set is configured for PDCCH independent transmission, monitoring a PDCCH on the first CORESET and a third CORESET, where a beam corresponding to the third CORESET and a beam corresponding to the first CORESET are simultaneous-reception beams, the third CORESET is associated with a third SS set, and the at least two PDCCH MOs include a PDCCH MO corresponding to the third SS set.

In other words, when the first SS set is an SS set for FDMed PDCCH repetition, and the first CORESET and the second CORESET correspond to different beams, a terminal device may monitor the PDCCH on the first CORESET and the second CORESET that is associated with the second SS set; or when the first SS set is an SS set for TDMed PDCCH repetition, a terminal device may monitor the PDCCH on the first CORESET and the third CORESET; or when the first SS set is an SS set for independent transmission, a terminal device may monitor the PDCCH on the first CORESET and the third CORESET. The second SS set and the first SS set are two SS sets (or referred to as a pair of SS sets) for performing PDCCH repetition transmission in the frequency division multiplexing manner, and the beam corresponding to the third CORESET and the beam corresponding to the first CORESET are the simultaneous-reception beams.

In this application, when a plurality of PDCCH MOs overlap in time domain and there are a plurality of beams, for UE that supports simultaneous reception of two different beams, the UE may determine two different beams according to a priority rule provided in the first aspect, and then monitor a PDCCH on the two beams, to resolve a beam conflict problem during control channel monitoring. In addition, PDCCH repetition transmission can be implemented in a PDCCH MO resource conflict scenario, to ensure robustness of PDCCH transmission. The first SS set may be determined based on a QCL-TypeD conflict resolution mechanism corresponding to a PDCCH defined in the protocol 38.213. Then, based on the first SS set, the second CORESET associated with the second SS set that has an association relationship with the first SS set and that is configured for PDCCH repetition transmission in the frequency division multiplexing manner is determined, to obtain two beams, or the third CORESET that has a simultaneous-reception beam relationship with the first CORESET is determined, to obtain two beams. Therefore, the communication method provided in this embodiment of this application is compatible with a conventional technology, and is more applicable.

In a possible implementation, the method further includes:
if the first CORESET and the second CORESET correspond to a same beam, monitoring a PDCCH on the first CORESET, the second CORESET, and a fourth CORESET, where
a beam corresponding to the fourth CORESET and the beam corresponding to the first CORESET or the second CORESET are simultaneous-reception beams, the fourth CORESET is associated with a fourth SS set, and the at least two PDCCH MOs include a PDCCH MO corresponding to the fourth SS set.

In this application, when the first CORESET and the second CORESET are determined, but the first CORESET and the second CORESET correspond to the same beam, the fourth CORESET that has a simultaneous-reception beam relationship with the first CORESET (or the second CORESET) is further determined, so that two beams may alternatively be determined to monitor a PDCCH on the two beams, to resolve a beam conflict problem during control channel monitoring, and improve implementation diversity.

In a possible implementation, if beams corresponding to a plurality of CORESETs included in at least two CORESETs corresponding to the at least two PDCCH MOs and the beam corresponding to the first CORESET are simultaneous-reception beams, the third CORESET or the fourth CORESET is one of the plurality of CORESETs.

In a possible implementation, the third CORESET or the fourth CORESET is a CORESET in the plurality of CORESETs that meets a first predefined rule.

In a possible implementation, the method further includes:
monitoring a PDCCH on a fifth CORESET and a sixth CORESET, where
at least two CORESETs corresponding to the at least two PDCCH MOs include the fifth CORESET and the sixth CORESET, the fifth CORESET and the first CORESET correspond to a same beam, and the sixth CORESET and the second CORESET correspond to a same beam.

In a possible implementation, the method further includes:
monitoring a PDCCH on a fifth CORESET and a seventh CORESET, where
at least two CORESETs corresponding to the at least two PDCCH MOs include the fifth CORESET and the seventh CORESET, the fifth CORESET and the first CORESET correspond to a same beam, and the seventh CORESET and the third CORESET correspond to a same beam.

In a possible implementation, the method further includes:
monitoring a PDCCH on an eighth CORESET and a ninth CORESET, where
at least two CORESETs corresponding to the at least two PDCCH MOs include the eighth CORESET and the ninth CORESET, the eighth CORESET and the first CORESET or the second CORESET correspond to a same beam, and the ninth CORESET and the fourth CORESET correspond to a same beam.

In a possible implementation, the SS set is a common search space CSS set or a user-specific search space USS set.

In a possible implementation, the first SS set is an SS set corresponding to a smallest search space set index in at least one SS set configured for a first cell, the first cell is a cell corresponding to a smallest cell index in cells for which one or more of the at least two SS sets are configured, the at least two SS sets include the at least one SS set configured for the first cell, and an SS set configured for each cell includes a CSS in the cells for which the one or more of the at least two SS sets are configured.

In a possible implementation, the first SS set is an SS set corresponding to a smallest search space set index in at least one SS set configured for a first cell, the first cell is a cell corresponding to a smallest cell index in cells for which one or more of the at least two SS sets are configured, the at least two SS sets include the at least one SS set configured for the first cell, and an SS set configured for each cell includes a USS but does not include a CSS in the cells for which the one or more of the at least two SS sets are configured.

In a possible implementation, the beam is represented by a QCL-TypeD property.

According to a second aspect, this application provides a communication method. The method includes:
when at least two physical downlink control channel monitoring occasions PDCCH MOs overlap in time domain, determining a first SS set from at least two search space sets SS sets associated with the at least two PDCCH MOs; and
determining a first control resource set CORESET associated with the first SS set under one or more of the following conditions:
   if the first SS set is configured for PDCCH repetition transmission in a frequency division multiplexing manner, determining a second SS set associated with the first SS set, and determining the first CORESET and a second CORESET that is associated with the second SS set, where the first CORESET and the second CORESET correspond to different beams, the at least two PDCCH MOs include a PDCCH MO corresponding to the second SS set, the first SS set and the second SS set are configured for PDCCH repetition transmission in the frequency division multiplexing manner, and an association relationship between the first SS set and the second SS set is configured by using a radio resource control RRC parameter; or
   if the first SS set is configured for PDCCH repetition transmission in a time division multiplexing manner, or the first SS set is configured for PDCCH independent transmission, determining the first CORESET and a third CORESET, where a beam corresponding to the third CORESET and a beam corresponding to the first CORESET are simultaneous-reception beams, the third CORESET is associated with a third SS set, and the at least two PDCCH MOs include a PDCCH MO corresponding to the third SS set.

In a possible implementation, the method further includes:
if the first CORESET and the second CORESET correspond to a same beam, determining the first CORESET, the second CORESET, and a fourth CORESET, where
a beam corresponding to the fourth CORESET and the beam corresponding to the first CORESET or the second CORESET are simultaneous-reception beams, the fourth CORESET is associated with a fourth SS set, and the at least two PDCCH MOs include a PDCCH MO corresponding to the fourth SS set.

In a possible implementation, if beams corresponding to a plurality of CORESETs included in at least two CORESETs corresponding to the at least two PDCCH MOs and the beam corresponding to the first CORESET are simultaneous-reception beams, the third CORESET or the fourth CORESET is one of the plurality of CORESETs.

In a possible implementation, the third CORESET or the fourth CORESET is a CORESET in the plurality of CORESETs that meets a first predefined rule.

In a possible implementation, the method further includes:
determining a fifth CORESET and a sixth CORESET, where
at least two CORESETs corresponding to the at least two PDCCH MOs include the fifth CORESET and the sixth CORESET, the fifth CORESET and the first CORESET correspond to a same beam, and the sixth CORESET and the second CORESET correspond to a same beam.

In a possible implementation, the method further includes:
determining a fifth CORESET and a seventh CORESET, where
at least two CORESETs corresponding to the at least two PDCCH MOs include the fifth CORESET and the seventh CORESET, the fifth CORESET and the first CORESET correspond to a same beam, and the seventh CORESET and the third CORESET correspond to a same beam.

In a possible implementation, the method further includes:
determining an eighth CORESET and a ninth CORESET, where
at least two CORESETs corresponding to the at least two PDCCH MOs include the eighth CORESET and the ninth CORESET, the eighth CORESET and the first CORESET or the second CORESET correspond to a same beam, and the ninth CORESET and the fourth CORESET correspond to a same beam.

In a possible implementation, the SS set is a common search space CSS set or a user-specific search space USS set.

In a possible implementation, the first SS set is an SS set corresponding to a smallest search space set index in at least one SS set configured for a first cell, the first cell is a cell corresponding to a smallest cell index in cells for which one or more of the at least two SS sets are configured, the at least two SS sets include the at least one SS set configured for the first cell, and an SS set configured for each cell includes a CSS in the cells for which the one or more of the at least two SS sets are configured.

In a possible implementation, the first SS set is an SS set corresponding to a smallest search space set index in at least one SS set configured for a first cell, the first cell is a cell corresponding to a smallest cell index in cells for which one or more of the at least two SS sets are configured, the at least two SS sets include the at least one SS set configured for the first cell, and an SS set configured for each cell includes a USS but does not include a CSS in the cells for which the one or more of the at least two SS sets are configured.

In a possible implementation, the beam is represented by a QCL-TypeD property.

According to a third aspect, this application provides a communication method. The method includes:
when at least two physical downlink control channel monitoring occasions PDCCH MOs overlap in time domain, determining a first SS set from at least two search space sets SS sets associated with the at least two PDCCH MOs, where the first SS set is associated with a first control resource set CORESET; and
determining a third CORESET, where a beam corresponding to the third CORESET and a beam corresponding to the first CORESET are simultaneous-reception beams, the third CORESET is associated with a third SS set, and the at least two PDCCH MOs include a PDCCH MO corresponding to the third SS set; and
monitoring a PDCCH on the first CORESET and the third CORESET.

In this application, when a plurality of PDCCH MOs overlap in time domain, and there are a plurality of beams, for UE that supports simultaneous reception of two different beams, the UE may determine two different beams according to the communication method in this embodiment of this application, and then monitor a PDCCH on the two beams, to resolve a beam conflict problem during control channel monitoring. In addition, the first CORESET may be determined based on a conventional technology, and then the third CORESET that has a simultaneous-reception beam relationship with the first CORESET is determined based on the first CORESET, to monitor the PDCCH on the first CORESET and the third CORESET. Therefore, the communication method provided in this application is compatible with the conventional technology, is more applicable.

In a possible implementation, if beams corresponding to a plurality of CORESETs included in at least two CORESETs corresponding to the at least two PDCCH MOs and the beam corresponding to the first CORESET are simultaneous-reception beams, the third CORESET is one of the plurality of CORESETs.

In a possible implementation, the third CORESET is a CORESET in the plurality of CORESETs that meets a first predefined rule.

In a possible implementation, the method further includes:
monitoring a PDCCH on a fifth CORESET and a seventh CORESET, where
at least two CORESETs corresponding to the at least two PDCCH MOs include the fifth CORESET and the seventh CORESET, the fifth CORESET and the first CORESET correspond to a same beam, and the seventh CORESET and the third CORESET correspond to a same beam.

In a possible implementation, the SS set is a common search space CSS or a user-specific search space USS.

In a possible implementation, the first SS set is an SS set corresponding to a smallest search space set index in at least one SS set configured for a first cell, the first cell is a cell corresponding to a smallest cell index in cells for which one or more of the at least two SS sets are configured, the at least two SS sets include the at least one SS set configured for the first cell, and an SS set configured for each cell includes a CSS in the cells for which the one or more of the at least two SS sets are configured.

In a possible implementation, the first SS set is an SS set corresponding to a smallest search space set index in at least one SS set configured for a first cell, the first cell is a cell corresponding to a smallest cell index in cells for which one or more of the at least two SS sets are configured, the at least two SS sets include the at least one SS set configured for the first cell, and an SS set configured for each cell includes a USS but does not include a CSS in the cells for which the one or more of the at least two SS sets are configured.

In a possible implementation, the beam is represented by a QCL-TypeD property.

According to a fourth aspect, this application provides a communication method. The method includes:
when at least two physical downlink control channel monitoring occasions PDCCH MOs overlap in time domain, determining a first SS set from at least two search space sets SS sets associated with the at least two PDCCH MOs; and
determining a third control resource set CORESET and a first CORESET that is associated with the first SS set, where
a beam corresponding to the third CORESET and a beam corresponding to the first CORESET are simultaneous-reception beams, the third CORESET is associated with a third SS set, and the at least two PDCCH MOs include a PDCCH MO corresponding to the third SS set.

In a possible implementation, if beams corresponding to a plurality of CORESETs included in at least two CORESETs corresponding to the at least two PDCCH MOs and the beam corresponding to the first CORESET are simultaneous-reception beams, the third CORESET is one of the plurality of CORESETs.

In a possible implementation, the third CORESET is a CORESET in the plurality of CORESETs that meets a first predefined rule.

In a possible implementation, the method further includes:
determining a fifth CORESET and a seventh CORESET, where
at least two CORESETs corresponding to the at least two PDCCH MOs include the fifth CORESET and the seventh CORESET, the fifth CORESET and the first CORESET correspond to a same beam, and the seventh CORESET and the third CORESET correspond to a same beam.

In a possible implementation, the SS set is a common search space CSS or a user-specific search space USS.

In a possible implementation, the first SS set is an SS set corresponding to a smallest search space set index in at least one SS set configured for a first cell, the first cell is a cell corresponding to a smallest cell index in cells for which one or more of the at least two SS sets are configured, the at least two SS sets include the at least one SS set configured for the first cell, and an SS set configured for each cell includes a CSS in the cells for which the one or more of the at least two SS sets are configured.

In a possible implementation, the first SS set is an SS set corresponding to a smallest search space set index in at least one SS set configured for a first cell, the first cell is a cell corresponding to a smallest cell index in cells for which one or more of the at least two SS sets are configured, the at least two SS sets include the at least one SS set configured for the first cell, and an SS set configured for each cell includes a USS but does not include a CSS in the cells for which the one or more of the at least two SS sets are configured.

In a possible implementation, the beam is represented by a QCL-TypeD property.

According to a fifth aspect, this application provides a communication method. The method includes:
when at least two physical downlink control channel monitoring occasions PDCCH MOs overlap in time domain, determining a first cell, where the at least two PDCCH MOs are associated with at least two search space sets SS sets; and
if a tenth SS set configured for the first cell includes an eleventh SS set and a twelfth SS set that are configured for PDCCH repetition transmission in a frequency division multiplexing manner, and an eleventh control resource set CORESET and a twelfth CORESET correspond to different beams, monitoring a PDCCH on the eleventh CORESET and the twelfth CORESET, where
the eleventh CORESET is associated with the eleventh SS set, the twelfth CORESET is associated with the twelfth SS set, and the at least two SS sets include the tenth SS set.

In this application, for UE that supports simultaneous reception of two beams, when a plurality of PDCCH MOs overlap and QCL-TypeDs are different, two beam directions are determined according to a newly defined priority rule, and a control channel is monitored in the determined beam directions. This resolves a beam conflict problem during control channel monitoring, and ensures robust PDCCH transmission as much as possible.

In a possible implementation, the eleventh SS set and the twelfth SS set are a pair of SS sets that meet a second predefined rule in at least two pairs of SS sets configured for PDCCH repetition transmission in the frequency division multiplexing manner in the tenth SS set.

In a possible implementation, the method further includes:
if the tenth SS set includes the eleventh SS set and the twelfth SS set that are configured for PDCCH repetition transmission in the frequency division multiplexing manner, and the eleventh CORESET and the twelfth CORESET correspond to a same beam, monitoring a PDCCH on the eleventh CORESET, the twelfth CORESET, and a thirteenth CORESET, where
a beam corresponding to the thirteenth CORESET and a beam corresponding to the eleventh CORESET or the twelfth CORESET are simultaneous-reception beams, the thirteenth CORESET is associated with a thirteenth SS set, and the at least two PDCCH MOs include a PDCCH MO corresponding to the thirteenth SS set.

In a possible implementation, if beams corresponding to a plurality of CORESETs included in at least two CORESETs corresponding to the at least two PDCCH MOs and the beam corresponding to the eleventh CORESET or the twelfth CORESET are simultaneous-reception beams, the thirteenth CORESET is one of the plurality of CORESETs.

In a possible implementation, the thirteenth CORESET is a CORESET in the plurality of CORESETs that meets a first predefined rule.

In a possible implementation, the method further includes:
if the tenth SS set does not include the eleventh SS set and the twelfth SS set that are configured for PDCCH repetition transmission in the frequency division multiplexing manner, and includes a fourteenth SS set that is configured for PDCCH repetition transmission in a time division multiplexing manner, monitoring a PDCCH on a fourteenth CORESET and a fifteenth CORESET, where
the fourteenth CORESET is associated with the fourteenth SS set, the fifteenth CORESET is associated with a fifteenth SS set, a beam corresponding to the fifteenth CORESET and a beam corresponding to the fourteenth CORESET are simultaneous-reception beams, and the at least two PDCCH MOs include a PDCCH MO corresponding to the fifteenth SS set.

In a possible implementation, the method further includes:
if the tenth SS set does not include the eleventh SS set and the twelfth SS set that are configured for PDCCH repetition transmission in the frequency division multiplexing manner, and includes a sixteenth SS set that is configured for PDCCH independent transmission, monitoring a PDCCH on a sixteenth CORESET and a seventeenth CORESET, where
the sixteenth CORESET is associated with the sixteenth SS set, the seventeenth CORESET is associated with a seventeenth SS set, a beam corresponding to the seventeenth CORESET and a beam corresponding to the sixteenth CORESET are simultaneous-reception beams, and the at least two PDCCH MOs include a PDCCH MO corresponding to the seventeenth SS set.

In a possible implementation, the method further includes:
if the tenth SS set does not include the eleventh SS set and the twelfth SS set that are configured for PDCCH repetition transmission in the frequency division multiplexing manner, and includes the fourteenth SS set that is configured for PDCCH repetition transmission in the time division multiplexing manner and the sixteenth SS set that is configured for PDCCH independent transmission, when the fourteenth CORESET and the sixteenth CORESET correspond to different beams, and a beam corresponding to the fourteenth CORESET and a beam corresponding to the sixteenth CORESET are simultaneous-reception beams, monitoring a PDCCH on the fourteenth CORESET and the sixteenth CORESET, where
the fourteenth CORESET is associated with the fourteenth SS set, and the sixteenth CORESET is associated with the sixteenth SS set.

In a possible implementation, the method further includes:
if the tenth SS set does not include the eleventh SS set and the twelfth SS set that are configured for PDCCH repetition transmission in the frequency division multiplexing manner, and includes the fourteenth SS set that is configured for PDCCH repetition transmission in the time division multiplexing manner and the sixteenth SS set that is configured for PDCCH independent transmission, when the fourteenth CORESET and the sixteenth CORESET correspond to different beams, and a beam corresponding to the fourteenth CORESET and a beam corresponding to the sixteenth CORESET are non-simultaneous-reception beams,
monitoring a PDCCH on the fourteenth CORESET and the fifteenth CORESET; or
monitoring a PDCCH on the sixteenth CORESET and the seventeenth CORESET, where
the fourteenth CORESET is associated with the fourteenth SS set, the fifteenth CORESET is associated with the fifteenth SS set, the sixteenth CORESET is associated with the sixteenth SS set, the seventeenth CORESET is associated with the seventeenth SS set, the beam corresponding to the fifteenth CORESET and the beam corresponding to the fourteenth CORESET are simultaneous-reception beams, the beam corresponding to the seventeenth CORESET and the beam corresponding to the sixteenth CORESET are simultaneous-reception beams, the at least two PDCCH MOs include a PDCCH MO corresponding to the fifteenth SS set, and the at least two PDCCH MOs include a PDCCH MO corresponding to the seventeenth SS set.

In a possible implementation, the method further includes:
if the tenth SS set does not include the eleventh SS set and the twelfth SS set that are configured for PDCCH repetition transmission in the frequency division multiplexing manner, and includes the fourteenth SS set that is configured for PDCCH repetition transmission in the time division multiplexing manner and the sixteenth SS set that is configured for PDCCH independent transmission, when the fourteenth CORESET and the sixteenth CORESET correspond to a same beam, monitoring a PDCCH on the fourteenth CORESET, the sixteenth CORESET, and an eighteenth CORESET, where
the fourteenth CORESET is associated with the fourteenth SS set, the sixteenth CORESET is associated with the sixteenth SS set, the eighteenth CORESET is associated with an eighteenth SS set, a beam corresponding to the eighteenth CORESET and the beam corresponding to the twelfth CORESET or the sixteenth CORESET are simultaneous-reception beams, and the at least two PDCCH MOs include a PDCCH MO corresponding to the eighteenth SS set.

In a possible implementation, the fourteenth SS set is an SS set included in a pair of SS sets that are determined from at least two pairs of SS sets according to a third predefined rule, and the at least two pairs of SS sets are SS sets that are configured for PDCCH repetition transmission in the time division multiplexing manner in the tenth SS set.

In a possible implementation, the sixteenth SS set is an SS set that meets a fourth predefined rule in at least two SS sets configured for PDCCH independent transmission in the tenth SS set.

In a possible implementation, the method further includes:
monitoring a PDCCH on a nineteenth CORESET and a twentieth CORESET, where
the at least two CORESETs include the nineteenth CORESET and the twentieth CORESET, the nineteenth CORESET and the eleventh CORESET correspond to a same beam, and the twentieth CORESET and the twelfth CORESET correspond to a same beam.

In a possible implementation, the at least two SS sets include a CSS and a USS, and the first cell is a cell with a smallest cell index in cells for which one or more CSSs in the at least two SS sets are configured.

In a possible implementation, the at least two SS sets include a USS and do not include a CSS, and the first cell is a cell with a smallest cell index in cells for which one or more USSs in the at least two SS sets are configured.

In a possible implementation, the first cell is a cell with a smallest cell index in cells for which one or more of the at least two SS sets are configured.

In a possible implementation, the first SS set is an SS set corresponding to a smallest search space set index in at least one SS set configured for a first cell, the first cell is a cell corresponding to a smallest cell index in cells for which one or more of the at least two SS sets are configured, the at least two SS sets include the at least one SS set configured for the first cell, and an SS set configured for each cell includes a CSS in the cells for which the one or more of the at least two SS sets are configured.

In a possible implementation, the first SS set is an SS set corresponding to a smallest search space set index in at least one SS set configured for a first cell, the first cell is a cell corresponding to a smallest cell index in cells for which one or more of the at least two SS sets are configured, the at least two SS sets include the at least one SS set configured for the first cell, and an SS set configured for each cell includes a USS but does not include a CSS in the cells for which the one or more of the at least two SS sets are configured.

In a possible implementation, the beam is represented by a QCL-TypeD property.

According to a sixth aspect, this application provides a communication method. The method includes:
when at least two physical downlink control channel monitoring occasions PDCCH MOs overlap in time domain, determining a first cell, where the at least two PDCCH MOs are associated with at least two search space sets SS sets; and
if a tenth SS set configured for the first cell includes an eleventh SS set and a twelfth SS set that are configured for PDCCH repetition transmission in a frequency division multiplexing manner, and an eleventh CORESET associated with the eleventh control resource set SS set and a twelfth CORESET associated with the twelfth SS set correspond to different beams, determining the eleventh CORESET and the twelfth CORESET, where
the at least two SS sets include the tenth SS set.

In a possible implementation, the eleventh SS set and the twelfth SS set are a pair of SS sets that meet a second predefined rule in at least two pairs of SS sets configured for PDCCH repetition transmission in the frequency division multiplexing manner in the tenth SS set.

In a possible implementation, the method further includes:
if the tenth SS set includes the eleventh SS set and the twelfth SS set that are configured for PDCCH repetition transmission in the frequency division multiplexing manner, and the eleventh CORESET and the twelfth CORESET correspond to a same beam, determining the eleventh CORESET, the twelfth CORESET, and a thirteenth CORESET, where
a beam corresponding to the thirteenth CORESET and a beam corresponding to the eleventh CORESET or the twelfth CORESET are simultaneous-reception beams, the thirteenth CORESET is associated with a thirteenth SS set, and the at least two PDCCH MOs include a PDCCH MO corresponding to the thirteenth SS set.

In a possible implementation, if beams corresponding to a plurality of CORESETs included in at least two CORESETs corresponding to the at least two PDCCH MOs and the beam corresponding to the eleventh CORESET or the twelfth CORESET are simultaneous-reception beams, the thirteenth CORESET is one of the plurality of CORESETs.

In a possible implementation, the thirteenth CORESET is a CORESET in the plurality of CORESETs that meets a first predefined rule.

In a possible implementation, the method further includes:
if the tenth SS set does not include the eleventh SS set and the twelfth SS set that are configured for PDCCH repetition transmission in the frequency division multiplexing manner, and includes a fourteenth SS set that is configured for PDCCH repetition transmission in a time division multiplexing manner, determining a fourteenth CORESET and a fifteenth CORESET, where
the fourteenth CORESET is associated with the fourteenth SS set, the fifteenth CORESET is associated with a fifteenth SS set, a beam corresponding to the fifteenth CORESET and a beam corresponding to the fourteenth CORESET are simultaneous-reception beams, and the at least two PDCCH MOs include a PDCCH MO corresponding to the fifteenth SS set.

In a possible implementation, the method further includes:
if the tenth SS set does not include the eleventh SS set and the twelfth SS set that are configured for PDCCH repetition transmission in the frequency division multiplexing manner, and includes a sixteenth SS set that is configured for PDCCH independent transmission, determining a sixteenth CORESET and a seventeenth CORESET, where
the sixteenth CORESET is associated with the sixteenth SS set, the seventeenth CORESET is associated with a seventeenth SS set, a beam corresponding to the seventeenth CORESET and a beam corresponding to the sixteenth CORESET are simultaneous-reception beams, and the at least two PDCCH MOs include a PDCCH MO corresponding to the seventeenth SS set.

In a possible implementation, the method further includes:
if the tenth SS set does not include the eleventh SS set and the twelfth SS set that are configured for PDCCH repetition transmission in the frequency division multiplexing manner, and includes the fourteenth SS set that is configured for PDCCH repetition transmission in the time division multiplexing manner and the sixteenth SS set that is configured for PDCCH independent transmission, when the fourteenth CORESET and the sixteenth CORESET correspond to different beams, and a beam corresponding to the fourteenth CORESET and a beam corresponding to the sixteenth CORESET are simultaneous-reception beams, determining the fourteenth CORESET and the sixteenth CORESET, where
the fourteenth CORESET is associated with the fourteenth SS set, and the sixteenth CORESET is associated with the sixteenth SS set.

In a possible implementation, the method further includes:
if the tenth SS set does not include the eleventh SS set and the twelfth SS set that are configured for PDCCH repetition transmission in the frequency division multiplexing manner, and includes the fourteenth SS set that is configured for PDCCH repetition transmission in the time division multiplexing manner and the sixteenth SS set that is configured for PDCCH independent transmission, when the fourteenth CORESET and the sixteenth CORESET correspond to different beams, and a beam corresponding to the fourteenth CORESET and a beam corresponding to the sixteenth CORESET are non-simultaneous-reception beams,
determining the fourteenth CORESET and the fifteenth CORESET; or
determining the sixteenth CORESET and the seventeenth CORESET, where
the fourteenth CORESET is associated with the fourteenth SS set, the fifteenth CORESET is associated with the fifteenth SS set, the sixteenth CORESET is associated with the sixteenth SS set, the seventeenth CORESET is associated with the seventeenth SS set, the beam corresponding to the fifteenth CORESET and the beam corresponding to the fourteenth CORESET are simultaneous-reception beams, the beam corresponding to the seventeenth CORESET and the beam corresponding to the sixteenth CORESET are simultaneous-reception beams, the at least two PDCCH MOs include a PDCCH MO corresponding to the fifteenth SS set, and the at least two PDCCH MOs include a PDCCH MO corresponding to the seventeenth SS set.

In a possible implementation, the method further includes:
if the tenth SS set does not include the eleventh SS set and the twelfth SS set that are configured for PDCCH repetition transmission in the frequency division multiplexing manner, and includes the fourteenth SS set that is configured for PDCCH repetition transmission in the time division multiplexing manner and the sixteenth SS set that is configured for PDCCH independent transmission, when the fourteenth CORESET and the sixteenth CORESET correspond to a same beam, determining the fourteenth CORESET, the sixteenth CORESET, and an eighteenth CORESET, where
the fourteenth CORESET is associated with the fourteenth SS set, the sixteenth CORESET is associated with the sixteenth SS set, the eighteenth CORESET is associated with an eighteenth SS set, a beam corresponding to the eighteenth CORESET and the beam corresponding to the twelfth CORESET or the sixteenth CORESET are simultaneous-reception beams, and the at least two PDCCH MOs include a PDCCH MO corresponding to the eighteenth SS set.

In a possible implementation, the fourteenth SS set is an SS set included in a pair of SS sets that are determined from at least two pairs of SS sets according to a third predefined rule, and the at least two pairs of SS sets are SS sets that are configured for PDCCH repetition transmission in the time division multiplexing manner in the tenth SS set.

In a possible implementation, the sixteenth SS set is an SS set that meets a fourth predefined rule in at least two SS sets configured for PDCCH independent transmission in the tenth SS set.

In a possible implementation, the method further includes:
determining a nineteenth CORESET and a twentieth CORESET, where
the at least two CORESETs include the nineteenth CORESET and the twentieth CORESET, the nineteenth CORESET and the eleventh CORESET correspond to a same beam, and the twentieth CORESET and the twelfth CORESET correspond to a same beam.

In a possible implementation, the at least two SS sets include a CSS and a USS, and the first cell is a cell with a smallest cell index in cells for which one or more CSSs in the at least two SS sets are configured.

In a possible implementation, the at least two SS sets include a USS and do not include a CSS, and the first cell is a cell with a smallest cell index in cells for which one or more USSs in the at least two SS sets are configured.

In a possible implementation, the first cell is a cell with a smallest cell index in cells for which one or more of the at least two SS sets are configured.

In a possible implementation, the first SS set is an SS set corresponding to a smallest search space set index in at least one SS set configured for a first cell, the first cell is a cell corresponding to a smallest cell index in cells for which one or more of the at least two SS sets are configured, the at least two SS sets include the at least one SS set configured for the first cell, and an SS set configured for each cell includes a CSS in the cells for which the one or more of the at least two SS sets are configured.

In a possible implementation, the first SS set is an SS set corresponding to a smallest search space set index in at least one SS set configured for a first cell, the first cell is a cell corresponding to a smallest cell index in cells for which one or more of the at least two SS sets are configured, the at least two SS sets include the at least one SS set configured for the first cell, and an SS set configured for each cell includes a USS but does not include a CSS in the cells for which the one or more of the at least two SS sets are configured.

In a possible implementation, the beam is represented by a QCL-TypeD property.

According to a seventh aspect, this application provides a communication apparatus. The apparatus is a terminal device, and the apparatus includes:
a processing unit, configured to: when at least two physical downlink control channel monitoring occasions PDCCH MOs overlap in time domain, determine a first SS set from at least two search space sets SS sets associated with the at least two PDCCH MOs, where the first SS set is associated with a first control resource set CORESET; and
a transceiver unit, configured to monitor a PDCCH on the first CORESET under one or more of the following conditions:
   if the first SS set is configured for PDCCH repetition transmission in a frequency division multiplexing manner, determining, based on the processing unit, a second SS set associated with the first SS set, and monitoring a PDCCH on the first CORESET and a second CORESET that is associated with the second SS set, where the first CORESET and the second CORESET correspond to different beams, the at least two PDCCH MOs include a PDCCH MO corresponding to the second SS set, the first SS set and the second SS set are configured for PDCCH repetition transmission in the frequency division multiplexing manner, and an association relationship between the first SS set and the second SS set is configured by using a radio resource control RRC parameter; or
   if the first SS set is configured for PDCCH repetition transmission in a time division multiplexing manner, or the first SS set is configured for PDCCH independent transmission, monitoring a PDCCH on the first CORESET and a third CORESET, where a beam corresponding to the third CORESET and a beam corresponding to the first CORESET are simultaneous-reception beams, the third CORESET is associated with a third SS set, and the at least two PDCCH MOs include a PDCCH MO corresponding to the third SS set.

In a possible implementation, the transceiver unit is further configured to: if the first CORESET and the second CORESET correspond to a same beam, monitor a PDCCH on the first CORESET, the second CORESET, and a fourth CORESET, where
a beam corresponding to the fourth CORESET and the beam corresponding to the first CORESET or the second CORESET are simultaneous-reception beams, the fourth CORESET is associated with a fourth SS set, and the at least two PDCCH MOs include a PDCCH MO corresponding to the fourth SS set.

In a possible implementation, if beams corresponding to a plurality of CORESETs included in at least two CORESETs corresponding to the at least two PDCCH MOs and the beam corresponding to the first CORESET are simultaneous-reception beams, the third CORESET or the fourth CORESET is one of the plurality of CORESETs.

In a possible implementation, the third CORESET or the fourth CORESET is a CORESET in the plurality of CORESETs that meets a first predefined rule.

In a possible implementation, the transceiver unit is further configured to monitor a PDCCH on a fifth CORESET and a sixth CORESET, where
at least two CORESETs corresponding to the at least two PDCCH MOs include the fifth CORESET and the sixth CORESET, the fifth CORESET and the first CORESET correspond to a same beam, and the sixth CORESET and the second CORESET correspond to a same beam.

In a possible implementation, the transceiver unit is further configured to monitor a PDCCH on the fifth CORESET and a seventh CORESET, where
at least two CORESETs corresponding to the at least two PDCCH MOs include the fifth CORESET and the seventh CORESET, the fifth CORESET and the first CORESET correspond to a same beam, and the seventh CORESET and the third CORESET correspond to a same beam.

In a possible implementation, the transceiver unit is further configured to monitor a PDCCH on an eighth CORESET and a ninth CORESET, where
at least two CORESETs corresponding to the at least two PDCCH MOs include the eighth CORESET and the ninth CORESET, the eighth CORESET and the first CORESET or the second CORESET correspond to a same beam, and the ninth CORESET and the fourth CORESET correspond to a same beam.

In a possible implementation, the SS set is a common search space CSS set or a user-specific search space USS set.

In a possible implementation, the first SS set is an SS set corresponding to a smallest search space set index in at least one SS set configured for a first cell, the first cell is a cell corresponding to a smallest cell index in cells for which one or more of the at least two SS sets are configured, the at least two SS sets include the at least one SS set configured for the first cell, and an SS set configured for each cell includes a CSS in the cells for which the one or more of the at least two SS sets are configured.

In a possible implementation, the first SS set is an SS set corresponding to a smallest search space set index in at least one SS set configured for a first cell, the first cell is a cell corresponding to a smallest cell index in cells for which one or more of the at least two SS sets are configured, the at least two SS sets include the at least one SS set configured for the first cell, and an SS set configured for each cell includes a USS but does not include a CSS in the cells for which the one or more of the at least two SS sets are configured.

In a possible implementation, the beam is represented by a QCL-TypeD property.

According to an eighth aspect, this application provides a communication apparatus. The apparatus is an access network device, and the apparatus includes:
a processing unit, configured to: when at least two physical downlink control channel monitoring occasions PDCCH MOs overlap in time domain, determine a first SS set from at least two search space sets SS sets associated with the at least two PDCCH MOs, where
the processing unit is further configured to determine a first control resource set CORESET associated with the first SS set under one or more of the following conditions:
   if the first SS set is configured for PDCCH repetition transmission in a frequency division multiplexing manner, determining a second SS set associated with the first SS set, and determining the first CORESET and a second CORESET that is associated with the second SS set, where the first CORESET and the second CORESET correspond to different beams, the at least two PDCCH MOs include a PDCCH MO corresponding to the second SS set, the first SS set and the second SS set are configured for PDCCH repetition transmission in the frequency division multiplexing manner, and an association relationship between the first SS set and the second SS set is configured by using a radio resource control RRC parameter; or
   if the first SS set is configured for PDCCH repetition transmission in a time division multiplexing manner, or the first SS set is configured for PDCCH independent transmission, determining the first CORESET and a third CORESET, where a beam corresponding to the third CORESET and a beam corresponding to the first CORESET are simultaneous-reception beams, the third CORESET is associated with a third SS set, and the at least two PDCCH MOs include a PDCCH MO corresponding to the third SS set.

In a possible implementation, the processing unit is further configured to: if the first CORESET and the second CORESET correspond to a same beam, determine the first CORESET, the second CORESET, and a fourth CORESET, where
a beam corresponding to the fourth CORESET and the beam corresponding to the first CORESET or the second CORESET are simultaneous-reception beams, the fourth CORESET is associated with a fourth SS set, and the at least two PDCCH MOs include a PDCCH MO corresponding to the fourth SS set.

In a possible implementation, if beams corresponding to a plurality of CORESETs included in at least two CORESETs corresponding to the at least two PDCCH MOs and the beam corresponding to the first CORESET are simultaneous-reception beams, the third CORESET or the fourth CORESET is one of the plurality of CORESETs.

In a possible implementation, the third CORESET or the fourth CORESET is a CORESET in the plurality of CORESETs that meets a first predefined rule.

In a possible implementation, the processing unit is further configured to determine a fifth CORESET and a sixth CORESET, where
at least two CORESETs corresponding to the at least two PDCCH MOs include the fifth CORESET and the sixth CORESET, the fifth CORESET and the first CORESET correspond to a same beam, and the sixth CORESET and the second CORESET correspond to a same beam.

In a possible implementation, the processing unit is further configured to determine the fifth CORESET and a seventh CORESET, where
at least two CORESETs corresponding to the at least two PDCCH MOs include the fifth CORESET and the seventh CORESET, the fifth CORESET and the first CORESET correspond to a same beam, and the seventh CORESET and the third CORESET correspond to a same beam.

In a possible implementation, the processing unit is further configured to determine an eighth CORESET and a ninth CORESET, where
at least two CORESETs corresponding to the at least two PDCCH MOs include the eighth CORESET and the ninth CORESET, the eighth CORESET and the first CORESET or the second CORESET correspond to a same beam, and the ninth CORESET and the fourth CORESET correspond to a same beam.

In a possible implementation, the SS set is a common search space CSS set or a user-specific search space USS set.

In a possible implementation, the first SS set is an SS set corresponding to a smallest search space set index in at least one SS set configured for a first cell, the first cell is a cell corresponding to a smallest cell index in cells for which one or more of the at least two SS sets are configured, the at least two SS sets include the at least one SS set configured for the first cell, and an SS set configured for each cell includes a CSS in the cells for which the one or more of the at least two SS sets are configured.

In a possible implementation, the first SS set is an SS set corresponding to a smallest search space set index in at least one SS set configured for a first cell, the first cell is a cell corresponding to a smallest cell index in cells for which one or more of the at least two SS sets are configured, the at least two SS sets include the at least one SS set configured for the first cell, and an SS set configured for each cell includes a USS but does not include a CSS in the cells for which the one or more of the at least two SS sets are configured.

In a possible implementation, the beam is represented by a QCL-TypeD property.

According to a ninth aspect, this application provides a communication apparatus. The apparatus is a terminal device, and the apparatus includes:
a processing unit, configured to: when at least two physical downlink control channel monitoring occasions PDCCH MOs overlap in time domain, determine a first SS set from at least two search space sets SS sets associated with the at least two PDCCH MOs, where the first SS set is associated with a first control resource set CORESET; and
the processing unit is further configured to determine a third CORESET, where a beam corresponding to the third CORESET and a beam corresponding to the first CORESET are simultaneous-reception beams, the third CORESET is associated with a third SS set, and the at least two PDCCH MOs include a PDCCH MO corresponding to the third SS set; and
a transceiver unit, configured to monitor a PDCCH on the first CORESET and the third CORESET.

In a possible implementation, if beams corresponding to a plurality of CORESETs included in at least two CORESETs corresponding to the at least two PDCCH MOs and the beam corresponding to the first CORESET are simultaneous-reception beams, the third CORESET is one of the plurality of CORESETs.

In a possible implementation, the third CORESET is a CORESET in the plurality of CORESETs that meets a first predefined rule.

In a possible implementation, the transceiver unit is further configured to monitor a PDCCH on the fifth CORESET and a seventh CORESET, where
at least two CORESETs corresponding to the at least two PDCCH MOs include the fifth CORESET and the seventh CORESET, the fifth CORESET and the first CORESET correspond to a same beam, and the seventh CORESET and the third CORESET correspond to a same beam.

In a possible implementation, the SS set is a common search space CSS or a user-specific search space USS.

In a possible implementation, the first SS set is an SS set corresponding to a smallest search space set index in at least one SS set configured for a first cell, the first cell is a cell corresponding to a smallest cell index in cells for which one or more of the at least two SS sets are configured, the at least two SS sets include the at least one SS set configured for the first cell, and an SS set configured for each cell includes a CSS in the cells for which the one or more of the at least two SS sets are configured.

In a possible implementation, the first SS set is an SS set corresponding to a smallest search space set index in at least one SS set configured for a first cell, the first cell is a cell corresponding to a smallest cell index in cells for which one or more of the at least two SS sets are configured, the at least two SS sets include the at least one SS set configured for the first cell, and an SS set configured for each cell includes a USS but does not include a CSS in the cells for which the one or more of the at least two SS sets are configured.

In a possible implementation, the beam is represented by a QCL-TypeD property.

According to a tenth aspect, this application provides a communication apparatus. The apparatus is an access network device, and the apparatus includes:
a processing unit, configured to: when at least two physical downlink control channel monitoring occasions PDCCH MOs overlap in time domain, determine a first SS set from at least two search space sets SS sets associated with the at least two PDCCH MOs, where
the processing unit is further configured to determine a third control resource set CORESET and a first CORESET that is associated with the first SS set, where
a beam corresponding to the third CORESET and a beam corresponding to the first CORESET are simultaneous-reception beams, the third CORESET is associated with a third SS set, and the at least two PDCCH MOs include a PDCCH MO corresponding to the third SS set.

In a possible implementation, if beams corresponding to a plurality of CORESETs included in at least two CORESETs corresponding to the at least two PDCCH MOs and the beam corresponding to the first CORESET are simultaneous-reception beams, the third CORESET is one of the plurality of CORESETs.

In a possible implementation, the third CORESET is a CORESET in the plurality of CORESETs that meets a first predefined rule.

In a possible implementation, the processing unit is further configured to determine the fifth CORESET and a seventh CORESET, where
at least two CORESETs corresponding to the at least two PDCCH MOs include the fifth CORESET and the seventh CORESET, the fifth CORESET and the first CORESET correspond to a same beam, and the seventh CORESET and the third CORESET correspond to a same beam.

In a possible implementation, the SS set is a common search space CSS or a user-specific search space USS.

In a possible implementation, the first SS set is an SS set corresponding to a smallest search space set index in at least one SS set configured for a first cell, the first cell is a cell corresponding to a smallest cell index in cells for which one or more of the at least two SS sets are configured, the at least two SS sets include the at least one SS set configured for the first cell, and an SS set configured for each cell includes a CSS in the cells for which the one or more of the at least two SS sets are configured.

In a possible implementation, the first SS set is an SS set corresponding to a smallest search space set index in at least one SS set configured for a first cell, the first cell is a cell corresponding to a smallest cell index in cells for which one or more of the at least two SS sets are configured, the at least two SS sets include the at least one SS set configured for the first cell, and an SS set configured for each cell includes a USS but does not include a CSS in the cells for which the one or more of the at least two SS sets are configured.

In a possible implementation, the beam is represented by a QCL-TypeD property.

According to an eleventh aspect, this application provides a communication apparatus. The apparatus is a terminal device, and the apparatus includes:
a processing unit, configured to: when at least two physical downlink control channel monitoring occasions PDCCH MOs overlap in time domain, determine a first cell, where the at least two PDCCH MOs are associated with at least two search space sets SS sets; and
a transceiver unit, configured to: if a tenth SS set configured for the first cell includes an eleventh SS set and a twelfth SS set that are configured for PDCCH repetition transmission in a frequency division multiplexing manner, and an eleventh control resource set CORESET and a twelfth CORESET correspond to different beams, monitor a PDCCH on the eleventh CORESET and the twelfth CORESET, where
the eleventh CORESET is associated with the eleventh SS set, the twelfth CORESET is associated with the twelfth SS set, and the at least two SS sets include the tenth SS set.

In a possible implementation, the eleventh SS set and the twelfth SS set are a pair of SS sets that meet a second predefined rule in at least two pairs of SS sets configured for PDCCH repetition transmission in the frequency division multiplexing manner in the tenth SS set.

In a possible implementation, the transceiver unit is further configured to: if the tenth SS set includes the eleventh SS set and the twelfth SS set that are configured for PDCCH repetition transmission in the frequency division multiplexing manner, and the eleventh CORESET and the twelfth CORESET correspond to a same beam, monitor a PDCCH on the eleventh CORESET, the twelfth CORESET, and a thirteenth CORESET, where
a beam corresponding to the thirteenth CORESET and a beam corresponding to the eleventh CORESET or the twelfth CORESET are simultaneous-reception beams, the thirteenth CORESET is associated with a thirteenth SS set, and the at least two PDCCH MOs include a PDCCH MO corresponding to the thirteenth SS set.

In a possible implementation, if beams corresponding to a plurality of CORESETs included in at least two CORESETs corresponding to the at least two PDCCH MOs and the beam corresponding to the eleventh CORESET or the twelfth CORESET are simultaneous-reception beams, the thirteenth CORESET is one of the plurality of CORESETs.

In a possible implementation, the thirteenth CORESET is a CORESET in the plurality of CORESETs that meets a first predefined rule.

In a possible implementation, the transceiver unit is further configured to: if the tenth SS set does not include the eleventh SS set and the twelfth SS set that are configured for PDCCH repetition transmission in the frequency division multiplexing manner, and includes a fourteenth SS set that is configured for PDCCH repetition transmission in a time division multiplexing manner, monitor a PDCCH on a fourteenth CORESET and a fifteenth CORESET, where
the fourteenth CORESET is associated with the fourteenth SS set, the fifteenth CORESET is associated with a fifteenth SS set, a beam corresponding to the fifteenth CORESET and a beam corresponding to the fourteenth CORESET are simultaneous-reception beams, and the at least two PDCCH MOs include a PDCCH MO corresponding to the fifteenth SS set.

In a possible implementation, the transceiver unit is further configured to: if the tenth SS set does not include the eleventh SS set and the twelfth SS set that are configured for PDCCH repetition transmission in the frequency division multiplexing manner, and includes a sixteenth SS set that is configured for PDCCH independent transmission, monitor a PDCCH on a sixteenth CORESET and a seventeenth CORESET, where
the sixteenth CORESET is associated with the sixteenth SS set, the seventeenth CORESET is associated with a seventeenth SS set, a beam corresponding to the seventeenth CORESET and a beam corresponding to the sixteenth CORESET are simultaneous-reception beams, and the at least two PDCCH MOs include a PDCCH MO corresponding to the seventeenth SS set.

In a possible implementation, the transceiver unit is further configured to: if the tenth SS set does not include the eleventh SS set and the twelfth SS set that are configured for PDCCH repetition transmission in the frequency division multiplexing manner, and includes the fourteenth SS set that is configured for PDCCH repetition transmission in the time division multiplexing manner and the sixteenth SS set that is configured for PDCCH independent transmission, when the fourteenth CORESET and the sixteenth CORESET correspond to different beams, and a beam corresponding to the fourteenth CORESET and a beam corresponding to the sixteenth CORESET are simultaneous-reception beams, monitor a PDCCH on the fourteenth CORESET and the sixteenth CORESET, where
the fourteenth CORESET is associated with the fourteenth SS set, and the sixteenth CORESET is associated with the sixteenth SS set.

In a possible implementation, the transceiver unit is further configured to: if the tenth SS set does not include the eleventh SS set and the twelfth SS set that are configured for PDCCH repetition transmission in the frequency division multiplexing manner, and includes the fourteenth SS set that is configured for PDCCH repetition transmission in the time division multiplexing manner and the sixteenth SS set that is configured for PDCCH independent transmission, when the fourteenth CORESET and the sixteenth CORESET correspond to different beams, and a beam corresponding to the fourteenth CORESET and a beam corresponding to the sixteenth CORESET are non-simultaneous-reception beams,
monitor a PDCCH on the fourteenth CORESET and the fifteenth CORESET; or
monitor a PDCCH on the sixteenth CORESET and the seventeenth CORESET, where
the fourteenth CORESET is associated with the fourteenth SS set, the fifteenth CORESET is associated with the fifteenth SS set, the sixteenth CORESET is associated with the sixteenth SS set, the seventeenth CORESET is associated with the seventeenth SS set, the beam corresponding to the fifteenth CORESET and the beam corresponding to the fourteenth CORESET are simultaneous-reception beams, the beam corresponding to the seventeenth CORESET and the beam corresponding to the sixteenth CORESET are simultaneous-reception beams, the at least two PDCCH MOs include a PDCCH MO corresponding to the fifteenth SS set, and the at least two PDCCH MOs include a PDCCH MO corresponding to the seventeenth SS set.

In a possible implementation, the transceiver unit is further configured to: if the tenth SS set does not include the eleventh SS set and the twelfth SS set that are configured for PDCCH repetition transmission in the frequency division multiplexing manner, and includes the fourteenth SS set that is configured for PDCCH repetition transmission in the time division multiplexing manner and the sixteenth SS set that is configured for PDCCH independent transmission, when the fourteenth CORESET and the sixteenth CORESET correspond to a same beam, monitor a PDCCH on the fourteenth CORESET, the sixteenth CORESET, and an eighteenth CORESET, where
the fourteenth CORESET is associated with the fourteenth SS set, the sixteenth CORESET is associated with the sixteenth SS set, the eighteenth CORESET is associated with an eighteenth SS set, a beam corresponding to the eighteenth CORESET and the beam corresponding to the twelfth CORESET or the sixteenth CORESET are simultaneous-reception beams, and the at least two PDCCH MOs include a PDCCH MO corresponding to the eighteenth SS set.

In a possible implementation, the fourteenth SS set is an SS set included in a pair of SS sets that are determined from at least two pairs of SS sets according to a third predefined rule, and the at least two pairs of SS sets are SS sets that are configured for PDCCH repetition transmission in the time division multiplexing manner in the tenth SS set.

In a possible implementation, the sixteenth SS set is an SS set that meets a fourth predefined rule in at least two SS sets configured for PDCCH independent transmission in the tenth SS set.

In a possible implementation, the transceiver unit is further configured to monitor a PDCCH on a nineteenth CORESET and a twentieth CORESET, where
the at least two CORESETs include the nineteenth CORESET and the twentieth CORESET, the nineteenth CORESET and the eleventh CORESET correspond to a same beam, and the twentieth CORESET and the twelfth CORESET correspond to a same beam.

In a possible implementation, the at least two SS sets include a CSS and a USS, and the first cell is a cell with a smallest cell index in cells for which one or more CSSs in the at least two SS sets are configured.

In a possible implementation, the at least two SS sets include a USS and do not include a CSS, and the first cell is a cell with a smallest cell index in cells for which one or more USSs in the at least two SS sets are configured.

In a possible implementation, the first cell is a cell with a smallest cell index in cells for which one or more of the at least two SS sets are configured.

In a possible implementation, the first SS set is an SS set corresponding to a smallest search space set index in at least one SS set configured for a first cell, the first cell is a cell corresponding to a smallest cell index in cells for which one or more of the at least two SS sets are configured, the at least two SS sets include the at least one SS set configured for the first cell, and an SS set configured for each cell includes a CSS in the cells for which the one or more of the at least two SS sets are configured.

In a possible implementation, the first SS set is an SS set corresponding to a smallest search space set index in at least one SS set configured for a first cell, the first cell is a cell corresponding to a smallest cell index in cells for which one or more of the at least two SS sets are configured, the at least two SS sets include the at least one SS set configured for the first cell, and an SS set configured for each cell includes a USS but does not include a CSS in the cells for which the one or more of the at least two SS sets are configured.

In a possible implementation, the beam is represented by a QCL-TypeD property.

According to a twelfth aspect, this application provides a communication apparatus. The apparatus is an access network device, and the apparatus includes:
a processing unit, configured to: when at least two physical downlink control channel monitoring occasions PDCCH MOs overlap in time domain, determine a first cell, where the at least two PDCCH MOs are associated with at least two search space sets SS sets; and
the processing unit is further configured to: if a tenth SS set configured for the first cell includes an eleventh SS set and a twelfth SS set that are configured for PDCCH repetition transmission in a frequency division multiplexing manner, and an eleventh CORESET associated with the eleventh control resource set SS set and a twelfth CORESET associated with the twelfth SS set correspond to different beams, determine the eleventh CORESET and the twelfth CORESET, where
the at least two SS sets include the tenth SS set.

In a possible implementation, the eleventh SS set and the twelfth SS set are a pair of SS sets that meet a second predefined rule in at least two pairs of SS sets configured for PDCCH repetition transmission in the frequency division multiplexing manner in the tenth SS set.

In a possible implementation, the processing unit is further configured to: if the tenth SS set includes the eleventh SS set and the twelfth SS set that are configured for PDCCH repetition transmission in the frequency division multiplexing manner, and the eleventh CORESET and the twelfth CORESET correspond to a same beam, determine the eleventh CORESET, the twelfth CORESET, and a thirteenth CORESET, where
a beam corresponding to the thirteenth CORESET and a beam corresponding to the eleventh CORESET or the twelfth CORESET are simultaneous-reception beams, the thirteenth CORESET is associated with a thirteenth SS set, and the at least two PDCCH MOs include a PDCCH MO corresponding to the thirteenth SS set.

In a possible implementation, if beams corresponding to a plurality of CORESETs included in at least two CORESETs corresponding to the at least two PDCCH MOs and the beam corresponding to the eleventh CORESET or the twelfth CORESET are simultaneous-reception beams, the thirteenth CORESET is one of the plurality of CORESETs.

In a possible implementation, the thirteenth CORESET is a CORESET in the plurality of CORESETs that meets a first predefined rule.

In a possible implementation, the processing unit is further configured to: if the tenth SS set does not include the eleventh SS set and the twelfth SS set that are configured for PDCCH repetition transmission in the frequency division multiplexing manner, and includes a fourteenth SS set that is configured for PDCCH repetition transmission in a time division multiplexing manner, determine a fourteenth CORESET and a fifteenth CORESET, where
the fourteenth CORESET is associated with the fourteenth SS set, the fifteenth CORESET is associated with a fifteenth SS set, a beam corresponding to the fifteenth CORESET and a beam corresponding to the fourteenth CORESET are simultaneous-reception beams, and the at least two PDCCH MOs include a PDCCH MO corresponding to the fifteenth SS set.

In a possible implementation, the processing unit is further configured to: if the tenth SS set does not include the eleventh SS set and the twelfth SS set that are configured for PDCCH repetition transmission in the frequency division multiplexing manner, and includes a sixteenth SS set that is configured for PDCCH independent transmission, determine a sixteenth CORESET and a seventeenth CORESET, where
the sixteenth CORESET is associated with the sixteenth SS set, the seventeenth CORESET is associated with a seventeenth SS set, a beam corresponding to the seventeenth CORESET and a beam corresponding to the sixteenth CORESET are simultaneous-reception beams, and the at least two PDCCH MOs include a PDCCH MO corresponding to the seventeenth SS set.

In a possible implementation, the processing unit is further configured to: if the tenth SS set does not include the eleventh SS set and the twelfth SS set that are configured for PDCCH repetition transmission in the frequency division multiplexing manner, and includes the fourteenth SS set that is configured for PDCCH repetition transmission in the time division multiplexing manner and the sixteenth SS set that is configured for PDCCH independent transmission, when the fourteenth CORESET and the sixteenth CORESET correspond to different beams, and a beam corresponding to the fourteenth CORESET and a beam corresponding to the sixteenth CORESET are simultaneous-reception beams, determine the fourteenth CORESET and the sixteenth CORESET, where
the fourteenth CORESET is associated with the fourteenth SS set, and the sixteenth CORESET is associated with the sixteenth SS set.

In a possible implementation, the processing unit is further configured to: if the tenth SS set does not include the eleventh SS set and the twelfth SS set that are configured for PDCCH repetition transmission in the frequency division multiplexing manner, and includes the fourteenth SS set that is configured for PDCCH repetition transmission in the time division multiplexing manner and the sixteenth SS set that is configured for PDCCH independent transmission, when the fourteenth CORESET and the sixteenth CORESET correspond to different beams, and a beam corresponding to the fourteenth CORESET and a beam corresponding to the sixteenth CORESET are non-simultaneous-reception beams,
determine the fourteenth CORESET and the fifteenth CORESET; or
determine the sixteenth CORESET and the seventeenth CORESET, where
the fourteenth CORESET is associated with the fourteenth SS set, the fifteenth CORESET is associated with the fifteenth SS set, the sixteenth CORESET is associated with the sixteenth SS set, the seventeenth CORESET is associated with the seventeenth SS set, the beam corresponding to the fifteenth CORESET and the beam corresponding to the fourteenth CORESET are simultaneous-reception beams, the beam corresponding to the seventeenth CORESET and the beam corresponding to the sixteenth CORESET are simultaneous-reception beams, the at least two PDCCH MOs include a PDCCH MO corresponding to the fifteenth SS set, and the at least two PDCCH MOs include a PDCCH MO corresponding to the seventeenth SS set.

In a possible implementation, the processing unit is further configured to: if the tenth SS set does not include the eleventh SS set and the twelfth SS set that are configured for PDCCH repetition transmission in the frequency division multiplexing manner, and includes the fourteenth SS set that is configured for PDCCH repetition transmission in the time division multiplexing manner and the sixteenth SS set that is configured for PDCCH independent transmission, when the fourteenth CORESET and the sixteenth CORESET correspond to a same beam, determine the fourteenth CORESET, the sixteenth CORESET, and an eighteenth CORESET, where

the fourteenth CORESET is associated with the fourteenth SS set, the sixteenth CORESET is associated with the sixteenth SS set, the eighteenth CORESET is associated with an eighteenth SS set, a beam corresponding to the eighteenth CORESET and the beam corresponding to the twelfth CORESET or the sixteenth CORESET are simultaneous-reception beams, and the at least two PDCCH MOs include a PDCCH MO corresponding to the eighteenth SS set.

In a possible implementation, the fourteenth SS set is an SS set included in a pair of SS sets that are determined from at least two pairs of SS sets according to a third predefined rule, and the at least two pairs of SS sets are SS sets that are configured for PDCCH repetition transmission in the time division multiplexing manner in the tenth SS set.

In a possible implementation, the sixteenth SS set is an SS set that meets a fourth predefined rule in at least two SS sets configured for PDCCH independent transmission in the tenth SS set.

In a possible implementation, the processing unit is further configured to determine a nineteenth CORESET and a twentieth CORESET, where
the at least two CORESETs include the nineteenth CORESET and the twentieth CORESET, the nineteenth CORESET and the eleventh CORESET correspond to a same beam, and the twentieth CORESET and the twelfth CORESET correspond to a same beam.

In a possible implementation, the at least two SS sets include a CSS and a USS, and the first cell is a cell with a smallest cell index in cells for which one or more CSSs in the at least two SS sets are configured.

In a possible implementation, the at least two SS sets include a USS and do not include a CSS, and the first cell is a cell with a smallest cell index in cells for which one or more USSs in the at least two SS sets are configured.

In a possible implementation, the first cell is a cell with a smallest cell index in cells for which one or more of the at least two SS sets are configured.

In a possible implementation, the first SS set is an SS set corresponding to a smallest search space set index in at least one SS set configured for a first cell, the first cell is a cell corresponding to a smallest cell index in cells for which one or more of the at least two SS sets are configured, the at least two SS sets include the at least one SS set configured for the first cell, and an SS set configured for each cell includes a CSS in the cells for which the one or more of the at least two SS sets are configured.

In a possible implementation, the first SS set is an SS set corresponding to a smallest search space set index in at least one SS set configured for a first cell, the first cell is a cell corresponding to a smallest cell index in cells for which one or more of the at least two SS sets are configured, the at least two SS sets include the at least one SS set configured for the first cell, and an SS set configured for each cell includes a USS but does not include a CSS in the cells for which the one or more of the at least two SS sets are configured.

In a possible implementation, the beam is represented by a QCL-TypeD property.

According to a thirteenth aspect, this application provides a communication apparatus. The apparatus may be a terminal device, an apparatus in the terminal device, or an apparatus that can be used with the terminal device. The communication apparatus may alternatively be a chip system. The communication apparatus may perform the method according to the first aspect, the third aspect, or the fifth aspect. A function of the communication apparatus may be implemented by hardware, or may be implemented by hardware by executing corresponding software. The hardware or the software includes one or more units or modules corresponding to the foregoing function. The unit or module may be software and/or hardware. For operations performed by the communication apparatus and beneficial effects, refer to the method and the beneficial effects according to the first aspect, the third aspect, or the fifth aspect. Details are not described again.

According to a fourteenth aspect, this application provides a communication apparatus. The apparatus may be an access network device, an apparatus in the access network device, or an apparatus that can be used with the access network device. The communication apparatus may alternatively be a chip system. The communication apparatus may perform the method according to the second aspect, the fourth aspect, or the sixth aspect. A function of the communication apparatus may be implemented by hardware, or may be implemented by hardware by executing corresponding software. The hardware or the software includes one or more units or modules corresponding to the foregoing function. The unit or module may be software and/or hardware. For operations performed by the communication apparatus and beneficial effects, refer to the method and the beneficial effects according to the second aspect, the fourth aspect, or the sixth aspect. Details are not described again.

According to a fifteenth aspect, this application provides a communication apparatus. The communication apparatus includes a processor and a transceiver. The processor and the transceiver are configured to execute a computer program or instructions stored in at least one memory, so that the apparatus implements the method according to any one of the first aspect to the sixth aspect.

According to a sixteenth aspect, this application provides a communication apparatus. The communication apparatus includes a processor, a transceiver, and a memory. The processor, the transceiver, and the memory are coupled. The processor and the transceiver are configured to implement the method according to any one of the first aspect to the sixth aspect.

According to a seventeenth aspect, this application provides a computer-readable storage medium. The storage medium stores a computer program or instructions, and when the computer program or the instructions are executed by a computer, the method according to any one of the first aspect to the sixth aspect is implemented.

According to an eighteenth aspect, this application provides a computer program product including instructions. The computer program product includes computer program code, and when the computer program code is run on a computer, the method according to any one of the first aspect to the sixth aspect is implemented.

### BRIEF DESCRIPTION OF DRAWINGS

FIG. 1 is a schematic diagram of an application scenario of a communication system according to an embodiment of this application;
FIG. 2 is a schematic diagram of a search space set according to an embodiment of this application;
FIG. 3 is a schematic diagram of a PDCCH MO of an SS set within one slot according to an embodiment of this application;
FIG. 4 is a schematic diagram in which a plurality of PDCCH MOs overlap in time domain according to an embodiment of this application;
FIG. 5 is a schematic diagram of a QCL relationship between a source reference signal and a target reference signal according to an embodiment of this application;
FIG. 6 is a schematic diagram of a structure of a MAC CE indicating a TCI-state of a CORESET;
FIG. 7 is a schematic diagram of a timeline for activating a PDCCH TCI by using a MAC CE according to an embodiment of this application;
FIG. 8 is a schematic diagram of an overall procedure defined for PDCCH repetition transmission according to an embodiment of this application;
FIG. 9 is a schematic diagram of PDCCH repetition transmission based on multipoint transmission according to an embodiment of this application;
FIG. 10 is a schematic diagram of PDCCH candidate repetition transmission between two SS sets according to an embodiment of this application;
FIG. 11 is a schematic diagram of a scenario of a PDCCH MO resource conflict according to an embodiment of this application;
FIG. 12 is a schematic diagram of another scenario of a PDCCH MO resource conflict according to an embodiment of this application;
FIG. 13 is a schematic flowchart of a communication method according to an embodiment of this application;
FIG. 14 is another schematic flowchart of a communication method according to an embodiment of this application;
FIG. 15A and FIG. 15B are another schematic flowchart of a communication method according to an embodiment of this application;
FIG. 16 is a schematic diagram of a structure of a communication apparatus according to an embodiment of this application; and
FIG. 17 is a schematic diagram of a structure of another communication apparatus according to an embodiment of this application.

### DESCRIPTION OF EMBODIMENTS

The following clearly and completely describes the technical solutions in embodiments of this application with reference to the accompanying drawings in embodiments of this application.

In descriptions of this application, unless otherwise specified, "/" means "or". For example, A/B may indicate A or B. The term "and/or" in embodiments of this application describes only an association relationship between associated objects and represents that three relationships may exist. For example, A and/or B may represent the following three cases: Only A exists, both A and B exist, and only B exists. In addition, "at least one" means one or more, and "a plurality of' means two or more. Terms such as "first" and "second" do not limit a quantity and an execution sequence, and the terms such as "first" and "second" do not indicate a definite difference.

In this application, the word such as "example" or "for example" is used to represent giving an example, an illustration, or a description. Any embodiment or design scheme described as an "example" or "for example" in this application should not be explained as being more preferred or having more advantages than another embodiment or design scheme. Exactly, use of the word "example", "for example", or the like is intended to present a related concept in a specific manner.

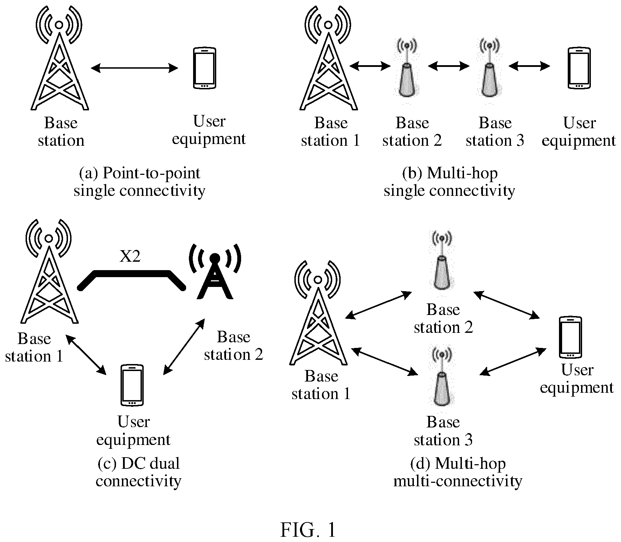

The technical solutions in embodiments of this application may be used in various communication systems, for example, a global system for mobile communications (global system of mobile communication, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, or a future communication system. This is not limited herein. Embodiments of this application may be further used in a plurality of mobile communication scenarios that are based on the foregoing various communication systems, for example, point-to-point transmission between a base station and UE, point-to-point transmission between UE and UE, multi-hop/relay transmission between a base station and UE, and DC (Dual Connectivity, dual connectivity) or multi-connectivity between a plurality of base stations and UE, or another scenario. FIG. 1 is a schematic diagram of an application scenario of a communication system according to an embodiment of this application. As shown in FIG. 1, an application scenario of this application may be point-to-point single connectivity between a base station 1 and UE shown in (a) in FIG. 1, an application scenario of this application may be multi-hop single connectivity between a base station 1 and UE shown in (b) in FIG. 1, an application scenario of this application may be dual connectivity between a plurality of base stations (a base station 1 and a base station 2 shown in (c) in FIG. 1) and UE shown in (c) in FIG. 1, or an application scenario of this application may be multi-hop multi-connectivity between a base station 1 and UE shown in (d) in FIG. 1. FIG. 1 is merely an example, but does not limit a network architecture applicable to this application. In addition, transmission such as an uplink, a downlink, an access link, a backhaul (backhaul) link, and a sidelink (Sidelink) is not limited in this application.

A terminal device in embodiments of this application may also be referred to as a terminal, and may be a device having a wireless transceiver function. The terminal device may be deployed on land, including an indoor device, an outdoor device, a handheld device, or a vehicle-mounted device; may be deployed on the surface of water (such as in a steamship); or may be deployed in the air (such as on an airplane, a balloon, and a satellite). The terminal device may be user equipment (user equipment, UE). The UE includes a handheld device, a vehicle-mounted device, a wearable device, or a computing device having a wireless communication function. For example, the UE may be a mobile phone (mobile phone), a tablet computer, or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like. In embodiments of this application, an apparatus configured to implement a function of the terminal may be a terminal, or may be an apparatus, for example, a chip system, that can support the terminal in implementing the function. The apparatus may be installed in the terminal. In embodiments of this application, the chip system may include a chip, or may include a chip and another discrete component. In the technical solutions provided in embodiments of this application, the technical solutions provided in embodiments of this application are described by using an example in which the apparatus configured to implement the function of the terminal is a terminal and the terminal is UE.

A network device in embodiments of this application includes an access network device, for example, a base station (base station, BS). The BS may be a device that is deployed in a radio access network and that can perform wireless communication with a terminal. The base station may be in a plurality of forms, for example, a macro base station, a micro base station, a relay station, and an access point. For example, the base station in embodiments of this application may be a base station in 5G or an evolved NodeB (Evolved NodeB, eNB) in LTE. The base station in 5G may also be referred to as a transmission reception point (transmission reception point, TRP) or a 5G NodeB (Next-Generation NodeB, gNB). In embodiments of this application, an apparatus configured to implement a function of the network device may be a network device, or may be an apparatus, for example, a chip system, that can support the network device in implementing the functions. The apparatus may be installed in the network device. In the technical solutions provided in embodiments of this application, the technical solutions provided in embodiments of this application are described by using an example in which the apparatus configured to implement the function of the network device is a network device and the network device is a base station.

The technical solutions provided in embodiments of this application may be used for wireless communication between communication devices. The communication devices may perform wireless communication with each other by using an air interface resource. The communication device may include a network device and a terminal device, and the network device may also be referred to as a base station device. The air interface resource may include at least one of a time domain resource, a frequency domain resource, a code resource, a space resource, and the like. This is not limited herein. Specifically, wireless communication between communication devices may include wireless communication between a network device and a terminal, wireless communication between network devices, and wireless communication between terminals. In embodiments of this application, the term "wireless communication" may also be referred to as "communication" for short, and the term "communication" may also be described as "data transmission", "information transmission", "transmission", or the like. This is not limited herein.

To make embodiments of this application clearer, some concepts or content in embodiments of this application are briefly described herein.

### 1. Control resource set (control resource set, CORESET)

The CORESET may indicate a frequency domain resource location of a control channel and a length of a symbol occupied in time domain. The symbol may be an orthogonal frequency division multiplexing (orthogonal frequency division multiplexing, OFDM) symbol.

### 2. Search space set (search space, SS set)

The search space set may also be referred to as a search space. The search space may indicate time domain location information of the control channel. The control channel in embodiments of this application is a physical downlink control channel (Physical Downlink Control Channel, PDCCH).

In embodiments of this application, there are two types of search space sets: a common search space set (common search space set, CSS) and a user-specific search space set (UE-specific search space set, USS). In embodiments of this application, the common search space set is also written as the CSS, and the user-specific search space set is written as the USS. Cells in embodiments of this application may include a primary cell and a secondary cell. The primary cell is usually configured with a common search space set, or may be configured with a common search space set and a user-specific search space set. The secondary cell may be configured with a common search space set, or may be configured with a common search space set and a user-specific search space set. In some cases, the secondary cell may be configured with only a user-specific search space set. This is not limited herein.

When the network device configures a search space set for the terminal device, the network device configures a search space set identifier for each search space set. The search space set identifier may also be referred to as an index number of the search space set. When the search space set is a common search space set, the search space set means a common search space set identifier. When the search space set is a user-specific search space set, the search space set means a user-specific search space set identifier.

A cell in embodiments of this application may be, for example, a cell covered by a base station. The cell is an area that provides a wireless communication service for a user, and is a fundamental unit of a wireless network. For example, in NR, an NR cell resource is added by using MML commands: ADD NRCELL and ADD NRDUCELL. A network side device may configure a plurality of cells for a terminal side device. There is one cell used to initiate initial access, the cell is referred to as a primary cell, and another cell is referred to as a secondary cell. All cells are covered by the entire wireless network.

### 3. Aggregation level (Aggregation Level, AL)

The aggregation level is a quantity of control channel elements (control channel elements, CCEs) included in a PDCCH. Currently, aggregation levels of the PDCCH include an AL 1, an AL 2, an AL 4, an AL 8, and an AL 16. When blindly detecting (or referred to as blind detection) a PDCCH based on a PDCCH candidate location configured by a network device, UE needs to perform blind detection based on each possible aggregation level of the PDCCH.

### 4. Blind detection (blind detection, BD)

Based on different purposes and content, downlink control information (downlink control information, DCI) is classified into many formats, such as a random access radio network temporary identifier (random access radio network temporary identifier, RA-RNTI) and a paging radio network temporary identifier (paging access radio network temporary identifier, P-RNTI). PDCCH information of different users is distinguished by using cell radio network temporary identifier (cell radio network temporary identifier, C-RNTI) information corresponding to the users, that is, cyclic redundancy check (cyclic redundancy check, CRC) of DCI is scrambled by using a C-RNTI. A base station configures, for user equipment (user equipment, UE) by using higher layer signaling (for example, radio resource control (radio resource control, RRC) signaling), a candidate PDCCH (PDCCH candidate) set on which DCI needs to be monitored. Because the UE does not know in advance a specific PDCCH candidate or specific PDCCH candidates on which the base station sends the DCI, but a user knows, based on configuration information of the base station, specific downlink control information that the user currently expects to receive, the UE needs to attempt to decode each candidate PDCCH in the set based on the configuration information, that is, the UE performs CRC check on information on a PDCCH candidate by using a corresponding radio network temporary identifier (radio network temporary identifier, RNTI). If the CRC check succeeds, the user knows that the DCI information is successfully obtained through decoding, that is, a behavior that the UE attempts to decode each candidate PDCCH to determine whether the corresponding DCI is received is referred to as blind detection. The set including the candidate PDCCH is a search space set, that is, the search space set includes the candidate PDCCH, and the candidate PDCCH is in a corresponding CORESET. Therefore, a search space set identifier is associated with an index number (where the index number of the CORESET may also be referred to as a CORESET identifier or a CORESET index) of the CORESET in which the candidate PDCCH included in the search space set is, and the CORESET associated with the search space set decides a control channel element (control channel element, CCE) index of the candidate PDCCH of the search space set in the CORESET.

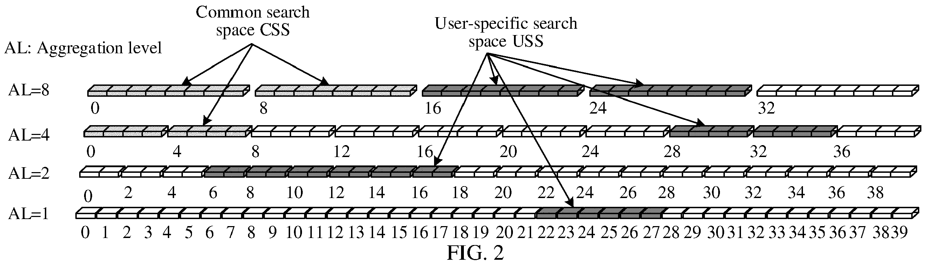

For example, FIG. 2 is a schematic diagram of a search space set according to an embodiment of this application. A search space set (or referred to as a search space) shown in FIG. 2 includes a common search space and a user-specific search space, where the common search space includes two candidate PDCCHs at an AL 8 and two candidate PDCCHs at an AL 4. The user-specific search space includes two candidate PDCCHs at the AL 8, two candidate PDCCHs at the AL 4, six candidate PDCCHs at an AL 2, and six candidate PDCCHs at an AL 1.

### 5. Monitoring occasion

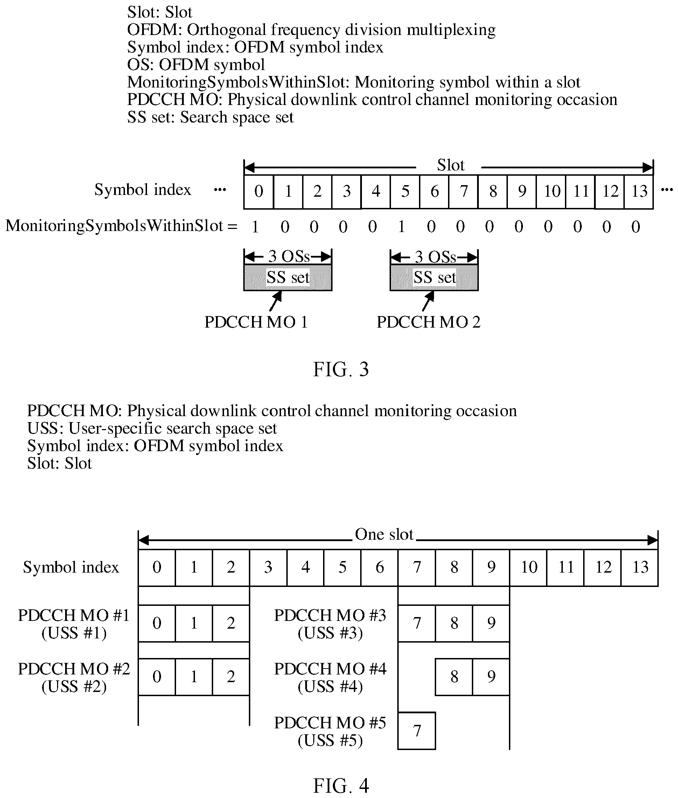

The monitoring occasion is also referred to as a PDCCH monitoring occasion (PDCCH monitoring occasion, PDCCH MO). A PDCCH monitoring occasion of one search space set (search space set, SS set) within one slot (slot) is jointly determined based on the SS set and configuration information of a CORESET associated with the SS set. Specifically, one PDCCH MO includes a monitoring start symbol and monitoring duration. The monitoring start symbol (where the monitoring start symbol is also referred to as a start symbol in some parts in embodiments of this application) is configuration information of a search space set (where the configuration information of the search space set is also referred to as SS set configuration information in some parts in embodiments of this application), and the monitoring duration (where the monitoring duration is also referred to as duration in some parts in embodiments of this application) is configuration information of a control resource set. The SS set configuration information includes a 14-bit bitmap parameter (where a monitoring symbol within a slot monitoringSymbolsWithinSlot indicates, to UE, a monitoring start OFDM symbol location of one SS set including the parameter within one slot), and each bit is in a one-to-one correspondence with one orthogonal frequency division multiplexing (Orthogonal Frequency Division Multiplexing, OFDM) symbol (OFDM symbol, OS) within one slot, to indicate a monitoring start symbol of the SS set within one slot. For example, FIG. 3 is a schematic diagram of a PDCCH MO of an SS set within one slot according to an embodiment of this application. As shown in FIG. 3, assuming monitoringSymbolsWithinSlot=10000100000000, it indicates that monitoring the SS set needs to start from a first OFDM symbol and a sixth OFDM within one slot (that is, monitoring start symbols are the first OFDM symbol and the sixth OFDM within the slot). Assuming that the SS set is associated with a control resource set (control resource set, CORESET) whose duration is three OFDM lengths, PDCCH monitoring occasions of the SS set are a PDCCH MO 1 and a PDCCH MO 2 shown in FIG. 3. The PDCCH MO 1 occupies symbols 0, 1, and 2, and the PDCCH MO 2 occupies symbols 5, 6, and 7. The CORESET is a concept that has a frequency domain width (in a unit of RB) and a time domain duration length (in a unit of OFDM symbol). After one SS set is associated with one CORESET, a concept of a PDCCH MO corresponding to the SS set may be determined. Therefore, FIG. 3 may further be described as follows: One search space set has two PDCCH MO start symbols within one slot, which are respectively a time domain symbol 0 and a time domain symbol 5. The search space set is associated with one CORESET that lasts for three symbols in time domain, that is, duration of the two PDCCH MOs is three symbols.

In this embodiment of this application, in one cell, one search space set may be associated with one or more PDCCH MOs, and one PDCCH MO is associated with one search space set. One CORESET may be associated with one or more PDCCH MOs, and one PDCCH MO is associated with one search space set. That is, two PDCCH MOs in one cell may be associated with a same CORESET, and two PDCCH MOs in one cell may be associated with a same search space set.

A plurality of PDCCH MOs overlap in time domain in this embodiment of this application, which may be understood as several time domain location relationships shown in FIG. 4. ① The plurality of PDCCH MOs overlap in time domain, which may be understood as a time domain location relationship between a PDCCH MO #1 and a PDCCH MO #2 shown in the following figure. As shown in FIG. 4, the PDCCH MO #1 is associated with a USS #1, the PDCCH MO #2 is associated with a USS #2. A quantity of continuous OFDM symbols of the PDCCH MO #1 in time domain is 3, a start symbol is a symbol 0, and an end symbol is a symbol 2. The PDCCH MO #2 has a same quantity of continuous OFDM symbols, a same start symbol, and a same end symbol as the PDCCH MO #1 in time domain. Therefore, a scenario in which all symbols of the PDCCH MO #1 and all symbols of the PDCCH MO #2 overlap may be understood as that the plurality of PDCCH MOs overlap in time domain.
(2) The plurality of PDCCH MOs overlap in time domain, which may be understood as a time domain location relationship between a PDCCH MO #3 and a PDCCH MO #4. As shown in FIG. 4, the PDCCH MO #3 is associated with a USS #3, and the PDCCH MO #4 is associated with a USS #4. A quantity of continuous OFDM symbols of the PDCCH MO #3 in time domain is 3, a start symbol is a symbol 7, and an end symbol is a symbol 9. A quantity of continuous OFDM symbols of the PDCCH MO #4 in time domain is 2, a start symbol is a symbol 8, and an end symbol is a symbol 9. The PDCCH MO #4 and the PDCCH MO #3 overlap in the symbol 8 and the symbol 9. Although the PDCCH MO #3 and the PDCCH MO #4 overlap in some symbols, a scenario in which the PDCCH MO #3 and the PDCCH MO #4 overlap in some symbols may still be understood as that the plurality of PDCCH MOs overlap in time domain.
(3) The plurality of PDCCH MOs overlap in time domain, which may be understood as a time domain location relationship among a PDCCH MO #3, a PDCCH MO #4, and a PDCCH MO #5. As shown in FIG. 4, the PDCCH MO #3 is associated with a USS #3, the PDCCH MO #4 is associated with a USS #4, and the PDCCH MO #5 is associated with a USS #5. A quantity of continuous OFDM symbols of the PDCCH MO #3 in time domain is 3, a start symbol is a symbol 7, and an end symbol is a symbol 9. A quantity of continuous OFDM symbols of the PDCCH MO #4 in time domain is 2, a start symbol is a symbol 8, and an end symbol is a symbol 9. The PDCCH MO #4 and the PDCCH MO #3 overlap in the symbol 8 and the symbol 9. A quantity of continuous OFDM symbols of the PDCCH MO #5 in time domain is 1, a start symbol is the symbol 7, and an end symbol is the symbol 7. The PDCCH MO #5 and the PDCCH MO #3 overlap in the symbol 7. It can be learned that the PDCCH MO #5 and the PDCCH MO #4 separately overlap with the PDCCH MO #3 in time domain, but do not overlap with each other in time domain. However, it may also be understood as that the PDCCH MO #3, the PDCCH MO #4, and the PDCCH MO #5 are three PDCCH MOs that overlap in time domain. Therefore, that the plurality of PDCCH MOs overlap in time domain may be one of the foregoing three scenarios, or may not be limited to the three scenarios shown in FIG. 4.

### 6. Beam (beam)

The beam is a communication resource. The beam may be a wide beam, a narrow beam, or a beam of another type. A technology for forming the beam may be a beamforming technology or another technical means. The beamforming technology may be specifically a digital beamforming technology, an analog beamforming technology, or a hybrid digital/analog beamforming technology. Different beams may be considered as different resources. Same information or different information may be sent based on the different beams. Optionally, a plurality of beams having a same communication feature or similar communication features may be considered as one beam. The beam may include one or more antenna ports, configured to transmit a data channel, a control channel, a sounding signal, and the like. For example, a transmission beam may refer to signal strength distribution formed in different directions in space after a signal is transmitted through an antenna, and a reception beam may refer to distribution of signal strength that is of a radio signal received through an antenna and that is in different directions in space. It may be understood that the one or more antenna ports forming the beam may alternatively be considered as one antenna port set. In a protocol, the beam may also be embodied as a spatial filter (spatial filter).

Information about the beam may be identified by using index information. Optionally, the index information may correspond to a resource identifier configured for UE. For example, the index information may correspond to an ID or a resource configured for a channel state information-reference signal (Channel status information-Reference Signal, CSI-RS for short), or may correspond to an ID or a resource configured for an uplink sounding reference signal (Sounding Reference Signal, SRS for short). Alternatively, optionally, the index information may be a signal carried in a beam or index information explicitly or implicitly carried on a channel. For example, the index information may be a synchronization signal sent through a beam or index information of the beam as indicated by a broadcast channel.

Alternatively, optionally, the beam information may be identified by using an absolute index of the beam, a relative index of the beam, a logical index of the beam, an index of an antenna port corresponding to the beam, an index of an antenna port group corresponding to the beam, a time index of a downlink synchronization signal block, beam pair link (beam pair link, BPL) information, a transmit parameter (Tx parameter) corresponding to the beam, a receive parameter (Rx parameter) corresponding to the beam, a transmit weight (weight) corresponding to the beam, a weight matrix (weight vector), a weight vector (weight matrix), a receive weight corresponding to the beam, indexes the weight vector and the weight matrix, a sending codebook (codebook) corresponding to the beam, a receiving codebook corresponding to the beam, or indexes of the sending codebook and the receiving codebook.

The beam may be embodied in a new radio access technology (new radio access technology, NR) protocol as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-colocation (quasi-colocation, QCL) information, a QCL assumption, a QCL indication, or the like. The beam may be indicated by a transmission configuration indication state (transmission configuration indication state, TCI-state) parameter or by a spatial relation (spatial relation) parameter. Therefore, in this application, the beam may be replaced with the spatial domain filter, the spatial filter, the spatial domain parameter, the spatial parameter, the spatial domain setting, the spatial setting, the QCL information, the QCL assumption, the QCL indication, the TCI-state (a DL TCI-state and a UL TCI-state), the spatial relation, or the like. The foregoing terms are also equivalent to each other. Alternatively, the beam may be replaced with another term representing the beam. This is not limited in this application.

A beam used to send a signal may be referred to as a transmission beam (transmission beam, Tx beam), and may also be referred to as a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting). A downlink transmission beam may be indicated by the TCI-state.

Abeam used to receive a signal may be referred to as a reception beam (reception beam, Rx beam), and may also be referred to as a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting). An uplink transmission beam may be indicated by a spatial relation spatial relation, an uplink TCI-state, or an SRS resource (indicating a transmission beam using an SRS). Therefore, an uplink beam may alternatively be replaced with the SRS resource.

A transmission beam may refer to distribution of signal strength formed in different directions in space after a signal is transmitted through an antenna, and a reception beam may refer to distribution of signal strength that is of a radio signal received through an antenna and that is in different directions in space. In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital/analog beamforming technology, or the like

The beam usually corresponds to a resource. For example, during beam measurement, a network device measures different beams by using different resources, a terminal device feeds back measured resource quality, and the network device knows quality of the corresponding beams. During data transmission, beam information is also indicated by a resource corresponding to the beam information. For example, the network device indicates information about a physical downlink shared channel (Physical Downlink Shared Channel, PDSCH) beam of the terminal device by using a transmission configuration indication (transmission configuration indication, TCI) field in DCI. This part of content is further described in "beam information").

Optionally, a plurality of beams that have same or similar communication features are considered as one beam. One beam may include one or more antenna ports, and is for transmitting a data channel, a control channel, a sounding signal, and the like. The one or more antenna ports forming the beam may also be considered as one antenna port set.

In embodiments of this application, unless otherwise specified, the beam is a transmission beam of the network device. During beam measurement, each beam of the network device corresponds to one resource. Therefore, an index of the resource may uniquely identify a beam corresponding to the resource.

### 7. Transmission configuration indication state (TCI-state)

A TCI indicates a quasi-colocation (quasi-colocation, QCL) relationship between two reference signals (a target reference signal and a referenced reference signal). The target reference signal is usually a demodulation reference signal (demodulation reference signal, DMRS), and the referenced reference signal may be usually a channel state information-reference signal (channel state information-reference signal, CSI-RS) and an SSB (SS/PBCH block) formed by all of a primary synchronization signal (primary synchronization signal, PSS), a secondary synchronization signal (secondary synchronization signal, SSS), and a physical broadcast channel (Physical Broadcast Channel, PBCH).

A TCI-state (TCI-state) may include one or two referenced reference signals and an associated QCL type (QCL type). The QCL type may be classified into four categories: Type-A QCL, Type-B QCL, Type-C QCL and Type-D QCL. The four categories are different combinations or selection of a Doppler frequency shift (Doppler shift), Doppler spread (Doppler spread), an average delay (average delay), delay spread (delay spread), and a spatial reception beam parameter (Spatial Rx parameter). Type-D QCL represents the spatial reception beam parameter (Spatial Rx parameter). From a perspective of beam management, a most directly related QCL type is Type-D QCL, that is, the spatial Rx parameter. In other words, a pairing relationship between a transmission beam of a base station and a reception beam of a terminal device is indicated by configuring Type-D QCL in the QCL type in the TCI-state.

### 8. Quasi-colocation (Quasi-colocation, QCL)

Quasi-colocation is also referred to as quasi co-site or quasi co-location.

A quasi-colocation relationship indicates that a plurality of resources have one or more same or similar communication features. For the plurality of resources that have the quasi-colocation relationship, a same or similar communication configuration may be used. For example, if two antenna ports have a quasi-colocation relationship, a large-scale channel characteristic of transmitting one symbol by one port may be inferred from a large-scale channel characteristic of transmitting one symbol by the other port. The large-scale characteristic may include delay spread, an average delay, Doppler spread, a Doppler shift, an average gain, a receive parameter, a reception beam number of a terminal device, transmit/receive channel correlation, a receiving angle of arrival, spatial correlation of a receiver antenna, a dominant angle of arrival (Angle of Arrival, AoA), an average angle of arrival, AoA spread, and the like. Specifically, that a quasi-colocation indication indicates whether at least two groups of antenna ports have a quasi-colocation relationship is that the quasi-colocation indication indicates whether channel state information-reference signals sent by the at least two groups of antenna ports are from a same transmission point, or the quasi-colocation indication indicates whether channel state information-reference signals sent by the at least two groups of antenna ports are from a same beam group.

A quasi-colocation assumption (QCL assumption) means assuming whether there is a QCL relationship between two ports. A configuration and an indication of the quasi-colocation assumption may be used to help a receiving end receive and demodulate a signal. For example, the receiving end can determine that there is a QCL relationship between a port A and a port B. In other words, a large-scale parameter of a signal measured on the port A may be used for signal measurement and demodulation on the port B. Optionally, the quasi-colocation assumption may also be understood as a quasi-colocation property. For example, the port A and the port B have a same QCL property, or the port A and the port B have a same type of QCL property, for example, a QCL-TypeD property (QCL-TypeD properties).

A definition of QCL in an NR protocol is as follows: If a large-scale characteristic of a channel of a symbol transmitted on one antenna port may be inferred from a channel of a symbol transmitted on the other antenna port, the two antenna ports are considered as quasi-colocation. The two antenna ports may have a quasi-colocation property, or the two antenna ports may have a quasi-colocation relationship. In other words, if a channel characteristic of a symbol on an antenna port may be inferred from the other antenna port, the two antenna ports are considered as QCL. The channel characteristics include delay spread, Doppler spread, a Doppler shift, an average gain, an average delay, and a spatial Rx parameter. For details, refer to the section 4.1.1 in the protocol TS 38211.

That the two antenna ports are considered as QCL means that a channel estimation result obtained from one antenna port may be used for the other antenna port, facilitating processing of a receiver.

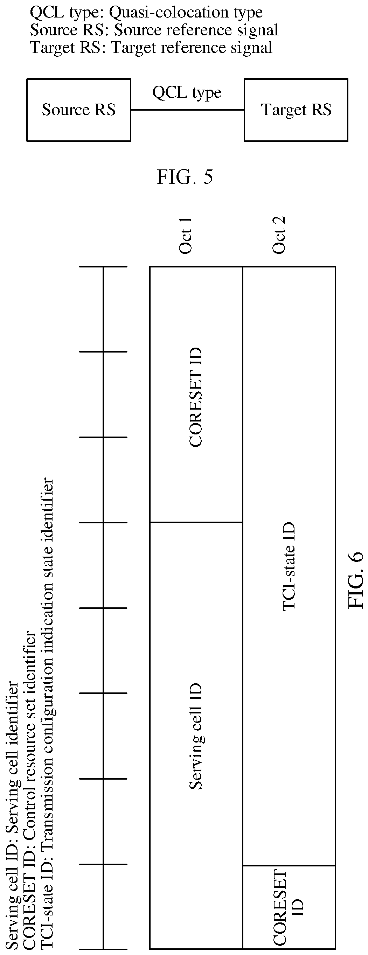

A QCL parameter indicates a downlink signal, and an uplink reference signal does not have a concept of QCL. An indication of the quasi-colocation QCL parameter is generally configured by using an RRC higher layer, and the configuration is activated by using a MAC control element (MAC control element, MAC CE), and is indicated by DCI. This is consistent with the downlink beam information indication described above (where the beam indication is transmission of QCL-TypeD information). A QCL configuration means that a QCL relationship of a channel state information-reference signal (channel state information-reference signal, CSI-RS) or a synchronization signal block (synchronization signal block, SSB) may be configured by using higher layer signaling. For example, FIG. 5 is a schematic diagram of a QCL relationship between a source reference signal and a target reference signal according to an embodiment of this application. As shown in FIG. 5, the QCL relationship type between the source reference signal and the target reference signal may be indicated by a QCL type.

In the section 5.1.5 of the communication protocol TS 38.214, a type of QCL (that is, a QCL type) is defined as follows:
'QCL-TypeA': {Doppler shift, Doppler spread, average delay, delay spread}
'QCL-TypeB': f Doppler shift, Doppler spread}
'QCL-TypeC': f Doppler shift, average delay}
'QCL-TypeD': {Spatial Rx parameter}

QCL-TypeA indicates to obtain channel estimation information. A target channel is described comprehensively, including the Doppler shift (Doppler shift), the Doppler spread (Doppler spread), the average delay (average delay), and the delay spread (delay spread), so that UE obtains comprehensive descriptions of characteristics of a demodulation reference signal (demodulation reference signal, DMRS) to demodulate the channel.

QCL-TypeB indicates to obtain channel estimation information. For a low-frequency digital beam, compared with a reference signal (wide beam), a Doppler shift and Doppler spread may be transmitted after beamforming, but a delay characteristic may be different. Therefore, TypeB is not commonly used in a low-frequency scenario.

QCL-TypeC indicates to obtain measurement information such as a reference signal received power (reference signal received power, RSRP). Doppler shift and Doppler delay characteristics are inherited from the reference signal for further accurate time-frequency domain synchronization (where the UE performs time-frequency domain synchronization based on an SSB during initial access, and may perform synchronization subsequently based on a reference signal with higher accuracy, such as a tracking reference signal (tracking reference signal, TRS)).

QCL-TypeD indicates to assist the UE in beamforming (forming a spatial filter, a beam indication, and the like) and inherit beam information from a reference signal. TypeD is used for beam management. Spatial parameter information obtained from CSI-RSs or SSBs that meet the QCL relationship may be used to assist the UE in beamforming and receive and demodulate a PDCCH and a PDSCH. In other words, the QCL-TypeD indicates the spatial domain receive parameter, that is, the reception beam.

A QCL type between reference signal ports is configured, to obtain channel estimation information, assist the UE in beamforming, and meet other requirements (where a QCL identifier may be allocated to beams that have the QCL relationship in beams associated with a frequency resource group). The beam may also be referred to as a spatial domain transmission filter, the transmission beam may also be referred to as a spatial domain transmission filter, the reception beam may also be referred to as a spatial domain reception filter, and the UE may know the reception beam by using a QCL indication.

In embodiments of this application, when a plurality of PDCCH MOs in a cell are associated with a same CORESET, the plurality of PDCCH MOs correspond to a same beam. In other words, the plurality of PDCCH MOs have a same quasi-colocation property, or it is described as that CORESETs associated with the plurality of PDCCH MOs have a same quasi-colocation property. In embodiments of this application, when two CORESETs associated with two PDCCH MOs have different quasi-colocation properties, some locations in embodiments of this application may also be described as that the two PDCCH MOs have different quasi-colocation properties.

In embodiments of this application, that a plurality of PDCCH MOs have a same quasi-colocation property may be described as that the plurality of PDCCH MOs have a same QCL-TypeD property, described as that the plurality of PDCCH MOs have a same QCL-TypeD relationship, described as that the plurality of PDCCH MOs have a same QCL-TypeD characteristic, or the like. In this case, it may be understood as that beam directions corresponding to the plurality of PDCCH MOs are consistent. When a plurality of PDCCH MOs have an overlapping time unit in time domain, and beam directions of two PDCCH MOs are consistent, although the plurality of PDCCH MOs have the overlapping time unit in time domain, the terminal device may still receive the plurality of PDCCH MOs in one beam direction. In embodiments of this application, that the plurality of PDCCH MOs have the overlapping time unit in time domain is also described in some cases as that the plurality of PDCCH MOs overlap.

In embodiments of this application, when the plurality of PDCCH MOs overlap in time domain, but a plurality of associated CORESETs correspond to one or more beams (that is, QCL-TypeD properties of the CORESETs corresponding to the plurality of PDCCH MOs are the same or different), it is usually considered that the plurality of PDCCH MOs have a resource conflict (or the plurality of CORESETs have a resource conflict). In embodiments of this application, that the plurality of CORESETs associated with the plurality of PDCCH MOs correspond to different beams may also be described as that the plurality of CORESETs associated with the plurality of PDCCH MOs have different quasi-colocation properties, described as that the plurality of PDCCH MOs have different QCL-TypeD properties, described as that the plurality of PDCCH MOs have different QCL-TypeD relationships, described as that the plurality of PDCCH MOs have different QCL-TypeD characteristics, or the like. This is not limited herein.

In a conventional technology, a terminal device cannot receive control information through a plurality of different beams at the same time. Therefore, in this case, the terminal device can select only one beam to receive the control information. However, for UE that can support simultaneous reception of two different beams, when a plurality of PDCCH MOs have a resource conflict, no solution is provided for how to select two beams in a plurality of CORESETs associated with the plurality of PDCCH MOs for monitoring.

### 9. Spatial quasi-colocation (spatial QCL)

Spatial QCL may be considered as a type of QCL, for example, QCL-TypeD (QCL-TypeD). The term "spatial" may be understood from two perspectives: from a transmitting end or from a receiving end. From the perspective of the transmitting end, if two antenna ports are spatially quasi-colocated, it indicates that beam directions corresponding to the two antenna ports are consistent in space. From the perspective of the receiving end, if two antenna ports are spatially quasi-colocated, it indicates that the receiving end can receive, in a same beam direction, signals sent through the two antenna ports.

### 10. Beam information

As mentioned in the background descriptions of the "beam", the beam usually corresponds to a resource. For example, during beam measurement, a network device measures different beams by using different resources, a terminal device feeds back measured resource quality, and the network device knows quality of the corresponding beams. During data transmission, beam information is also indicated by a resource corresponding to the beam information.

Reference signals that may be used for beam measurement are classified into two types: an SSB and a CSI-RS. The CSI-RS is used as an example to explain a relationship between the beam and the resource. A base station configures, for UE by using a higher layer parameter (for example, an RRC parameter), one or more groups of CSI-RS resource sets dedicated to beam measurement, and the resource corresponds to a higher layer parameter nzp-CSI-RS-ResourceSetList. These CSI-RS resource sets are associated with or correspond to CSI resource indexes (CSI Resource Indexes, CRIs), and the CSI corresponds to a higher layer parameter CSI-Resource Config Id. The base station sends CSI-RS resources at different moments according to a predefined rule (for example, a quantity of beams that need to be scanned) through corresponding beams. The UE measures the CSI-RSs, obtains an L1-RSRP result, and reports measurement results of different CRIs. The base station selects, based on the results reported by the UE, a beam corresponding to a CSI-RS with a strongest L1-RSRP to perform downlink channel sending. In this way, the beam information corresponds to one CSI-RS resource in a specific CSI-RS resource set. If the SSB is used as a reference signal for beam measurement, similarly, the beam information corresponds to one SSB resource.

### 11. Beam indication

The beam indication indicates that the base station indicates the UE to select a specified beam for information transmission. Because this application relates to only a PDCCH beam conflict, only a PDCCH beam indication method is described. The section 10.1 in the communication protocol TS 38.213 describes a method for using a beam indication when the UE receives a PDCCH channel, which may also be understood as indicating a beam of a CORESET.

TCI-related information of the PDCCH channel is included in tci-StatePDCCH-ToAddList of CORESET configuration information:

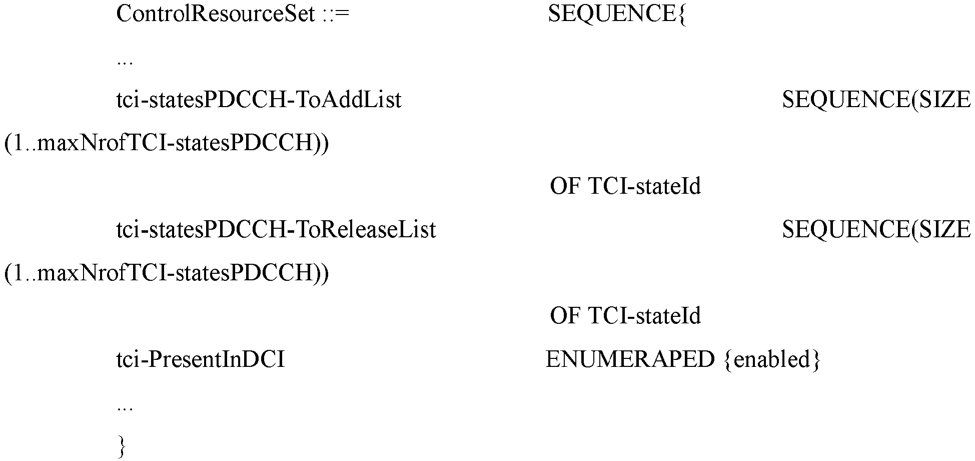

If only one piece of TCI-state information is configured in tci-StatePDCCH-ToAddList in the CORESET configuration information, the UE knows, according to the protocol, that the TCI-state is used for the CORESET. If more than one piece of TCI-state information is configured in tci-StatePDCCH-ToAddList in the CORESET configuration information, according to the protocol, the UE receives MAC CE activation information (MAC CE activation command) sent by the base station, where the MAC CE activation information indicates, to the UE, specific TCI-state information used for the CORESET. "The UE knows that the TCI-state is used for the CORESET", which is described in the protocol as follows: "The UE assumes that a demodulation reference signal (Demodulation Reference Signal, DMRS) antenna port associated with PDCCH receiving in the CORESET is quasi-colocated with one or more downlink reference signals configured in the TCI-state". It is assumed that configuration information of a CORESET #1 includes only one TCI-state. Based on the descriptions in 7, only one of two QCL types included in TCI-state configuration information is the type QCL-TypeD, that is, a spatial receive parameter or beam information. The TCI-state further includes one or two downlink reference signals, for example, a channel state information-reference signal (Channel State Information-Reference Signal, CSI-RS) or a synchronization signal and physical broadcast channel block (Synchronization Signal and PBCH block, SS/PBCH block, or SSB for short). It indicates that the CORESET and the CSI-RS or the SSB have same beam information. After the beam information of the CORESET is determined, the UE receives downlink control information on the beam.

For example, FIG. 6 is a schematic diagram of a structure of a MAC CE indicating a TCI-state of a CORESET. As shown in FIG. 6, MAC CE signaling may include a serving cell identifier (serving cell ID) field, a control resource set identifier (CORESET ID) field, and a TCI-state field. The serving cell identifier field and the control resource set identifier field are used to uniquely determine a control resource set to which the MAC CE signaling is applicable, and the TCI-state field indicates a beam used by a terminal device to receive DCI signaling on the control resource set.

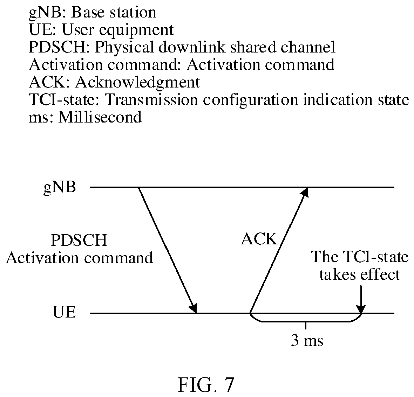

The MAC layer protocol TS 38.321 also includes a related process of indicating the TCI-state of the CORESET. FIG. 7 is a schematic diagram of a timeline for activating a PDCCH TCI by using a MAC CE according to an embodiment of this application. As shown in FIG. 7, if UE receives one TCI-state in a plurality of TCI-states in MAC CE indication activation configuration information tci-StatePDCCH-ToAddList sent by a base station, after 3 ms later than a slot within which a HARQ-ACK corresponding to a PDSCH carrying an activation command is, the UE uses the TCI-state activated by using a MAC CE, that is, the TCI-state takes effect after 3 ms later than receiving of an activation feedback ACK. After the TCI-state takes effect, the UE uses a configuration of the TCI-state to receive a PDCCH.

Before beam information corresponding to a CORESET is updated, a PDCCH of a same CORESET has a same beam receiving direction.

In embodiments of this application, that a same beam is used for two CORESETs may be understood as follows:
(1) In a same serving cell, a TCI-state index of a first CORESET is the same as a TCI-state index of a second CORESET, or a TCI-state with a same index is used/activated for the first CORESET and the second CORESET.
(2) In a same serving cell or different serving cells, when an index of a first TCI-state of a first CORESET is different from an index of a second TCI-state of a second CORESET, an index of a first downlink reference signal associated with a type qcl-TypeD in the first TCI-state is the same as an index of a second downlink reference signal associated with a type qcl-TypeD in the second TCI-state. The first downlink reference signal and the second downlink reference signal may be CSI-RSs or SSBs.

Similarly, that different beams are used for two CORESETs may be understood as that in a same serving cell or different serving cells, when an index of a first TCI-state of a first CORESET is different from an index of a second TCI-state of a second CORESET, an index of a first downlink reference signal associated with a type qcl-TypeD in the first TCI-state is different from an index of a second downlink reference signal associated with a type qcl-TypeD in the second TCI-state. The first downlink reference signal and the second downlink reference signal may be CSI-RSs or SSBs.

### 12. TCI-state

After UE enters an RRC connected state, beam information is indicated by the TCI-state. In the protocol TS 38.331, the TCI-state is defined as follows:

The IE TCI-State associates one or two DL reference signals with a corresponding quasi-colocation (QCL) type.

In other words, the TCI-state describes a QCL relationship between one or two downlink reference signals.

The TCI-state may be configured for a reference signal of a PDSCH/PDCCH/CSI-RS. Currently, a maximum of 128 TCI-states (maxNrof ICI-States INTEGER ::= 128) can be configured. Content of the TCI-state is as follows:

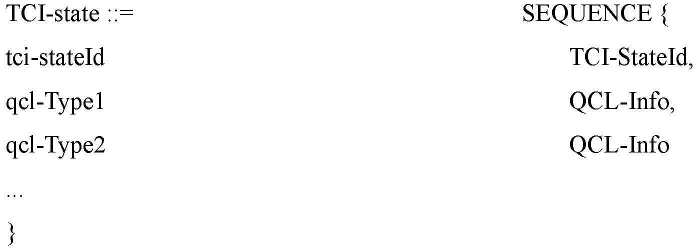

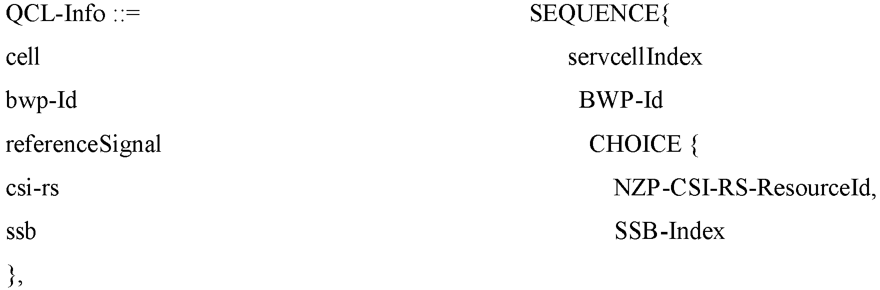

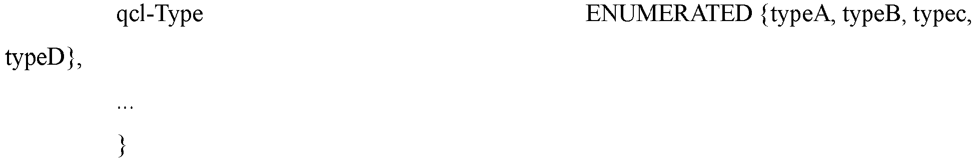

When qcl-Type=typeD, it indicates beam information. For details, refer to the foregoing descriptions of "quasi-colocation".

Generally, when configuring the beam information, a base station configures a QCL type of only one piece of QCL-Info as QCL-TypeD in one TCI-state, and an associated CSI-RS is used for beam management (beam management). A QCL type of another piece of QCL-Info may be QCL-TypeA (indicating timing, a frequency offset, delay spread, and Doppler spread), and an associated CSI-RS may be a time-frequency offset tracking reference signal (Tracking reference signal, TRS) used for accurate time-frequency synchronization.

### 13. Simultaneous-reception beam

The simultaneous-reception beam may also be described as a beam for simultaneous-reception. For UE that supports a capability of simultaneous reception of two different beams, the simultaneous-reception beam may be one or more pairs of beam information (beam pair/beam group) indicated by a base station to the UE, or one piece of group information (group) indicated to the UE. The group information includes two TCI-states, and the two TCI-states respectively indicate two different pieces of beam information to the UE. The UE may simultaneously receive data on two different beams indicated or activated by the base station. For example, group1{TCI-state 1, TCI-state 2} and group2 { TCI-state 1, TCI-state 3}. In a possible implementation, the group information includes two QCL-TypeD CSI-RS resource indexes or SSB resource indexes. The simultaneous-reception beam may alternatively be implemented in another manner. This is not limited to the foregoing example manner.

### 14. Same beam

The same beam may also be described as an identical beam. A QCL property of one CORESET may be determined by using an indicated transmission configuration indication state TCI-state. The indicated TCI-state may be a TCI-state configured by a network device for a terminal device by using a higher layer parameter (for example, an RRC parameter). For example, the network device configures that one CORESET includes only one TCI-state, or the network device may indicate the TCI-state of the terminal device by using a MAC CE activation command. For example, the network device configures that one CORESET includes at least two TCI-states, and indicates one of the at least two TCI-states to the terminal device by using a MAC CE activation command. The "indicated TCI-state" may be understood as an activated TCI-state indicated by the network device to the terminal device by using signaling (for example, the signaling may be the higher layer parameter or the MAC CE activation command).

The QCL property of one CORESET may also be understood as that a DMRS antenna port corresponding to PDCCH receiving in one CORESET is quasi-colocated with one or more downlink reference signals configured in the indicated TCI-state, and indicated TCI-state information includes a quasi-colocation type, for example, TypeD (QCL-TypeD).

A CORESET A and a CORESET B correspond to a same beam in embodiments of this application. From a perspective of a receiving end (for example, the terminal device), it may be understood as that a DMRS antenna port corresponding to PDCCH receiving in the CORESET A is spatially quasi-colocated with a DMRS antenna port corresponding to PDCCH receiving in the CORESET B, or it may be understood as that the CORESET A and the CORESET B have a same QCL-TypeD property, where an index of a TCI-state correspondingly indicated by the CORESET A may be the same as an index of a TCI-state correspondingly indicated by the CORESET B, or an index of a TCI-state correspondingly indicated by the CORESET A may be different from an index of a TCI-state correspondingly indicated by the CORESET B, but CSI-RS IDs or SSB IDs correspondingly configured in respective TCI-states are the same.

### 15. Different beams

The different beams may also be described as diverse beams.

A CORESET A and a CORESET B correspond to different beams in embodiments of this application. From a perspective of a receiving end, it may be understood as that a DMRS antenna port corresponding to PDCCH receiving in the CORESET A is not spatially quasi-colocated with a DMRS antenna port corresponding to PDCCH receiving in the CORESET B, or it may be understood as that the CORESET A and the CORESET B have different QCL-TypeD properties, or it may be understood as that the CORESET A is spatially quasi-colocated with the CORESET B, where an index of a TCI-state correspondingly indicated by the CORESET A may be different from an index of a TCI-state correspondingly indicated by the CORESET B, and CSI-RS IDs or SSB IDs correspondingly configured in the respective TCI-states are different.

### 16. PDCCH repetition transmission

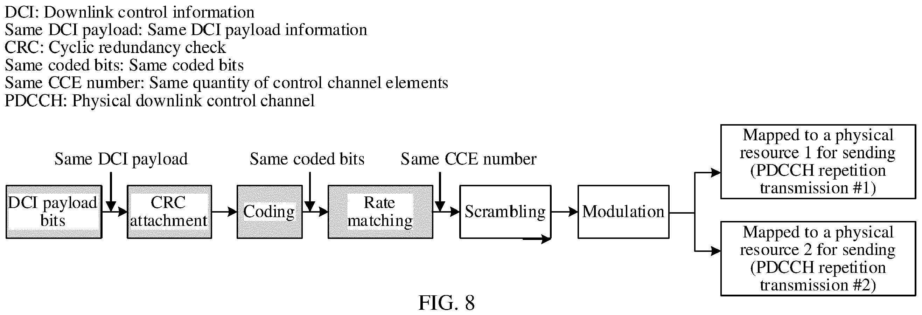

In the discussion of NR Rel-17, PDCCH repetition transmission is defined as follows: A coding/rate matching operation is applied to repetition transmission that is based on one PDCCH, and same coded bits are repeatedly transmitted on other PDCCHs. Each repetition transmission uses a same aggregation level (aggregation level, AL) or a same quantity of CCEs, and the same coded bits and same DCI payload information (where DCI bit content is the same) are repeatedly transmitted. For example, FIG. 8 is a schematic diagram of an overall procedure defined for PDCCH repetition transmission according to an embodiment of this application. As shown in FIG. 8, after CRC attachment processing, coding processing, rate matching processing, scrambling processing, and modulation processing are sequentially performed on DCI payload bits, the DCI payload bits may be separately mapped to a physical resource 1 for sending (that is, PDCCH repetition transmission #1) and mapped to a physical resource 2 for sending (that is, PDCCH repetition transmission #2). The procedure may further include another functional module, and only the related modules are listed herein. A block diagram in a dark color indicates that a same part needs to be ensured for PDCCH repetition transmission.

It may be understood that a multi-station (that is, a plurality of transmission reception points (transmission reception points, TRPs)) joint sending mechanism may be used to improve DCI transmission reliability. Specifically, for a same DCI information bit (source), after a coded bit is formed in the foregoing coding scheme, the plurality of TRPs separately send the coded bit on different time-frequency resources. UE may separately receive a plurality of copies of the coded bit on the foregoing time-frequency resources, and then perform a joint parsing operation to obtain the DCI information bit (source). For example, channel estimation is separately performed on the foregoing time-frequency resources, and a received signal is demodulated to obtain a likelihood value (soft information) for combination. The foregoing operations may be equivalently understood as improving a signal-to-noise ratio (SNR) of transmission, thereby improving reliability. In addition, considering that a transmission link from the UE to a TRP may be interrupted due to a channel change, this transmission solution can avoid occurrence of this case.

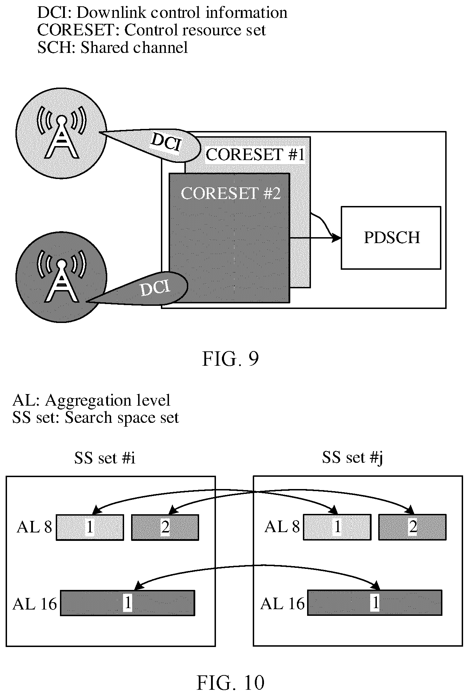

FIG. 9 is a schematic diagram of PDCCH repetition transmission based on multipoint transmission according to an embodiment of this application. As shown in FIG. 9, two pieces of DCI for scheduling a PDSCH are respectively in two CORESETs, and may be respectively sent by two TRPs, or may be sent by one TRP. For ease of understanding, as shown in FIG. 9, an example in which a TRP 1 and a TRP 2 are used as coordinated base stations to serve one UE at the same time is used for description. DCI delivered by the TRP 1 corresponds to a CORESET 1 (where a first QCL assumption is configured to correspond to a characteristic of a channel from the UE to the TRP 1), and DCI delivered by the TRP 2 corresponds to a CORESET 2 (where a second QCL assumption is configured to correspond to a characteristic of a channel from the UE to the TRP 2). The two CORESETs may be configured to be completely/partially overlapped to improve DCI sending flexibility and ensure a frequency selection scheduling gain. There is an association relationship between the DCI delivered on the two CORESETs, that is, the foregoing soft combination operation may be performed.

Further, an association relationship between PDCCH candidates respectively associated with the two CORESETs needs to be defined. This can prevent the UE from performing many soft combination operations and reduce complexity of the UE. For PDCCH repetition transmission, a current protocol supports: All PDCCH candidates in one SS set are used for PDCCH repetition transmission, and a PDCCH candidate for sending an independent PDCCH is not included. FIG. 10 is a schematic diagram of PDCCH candidate repetition transmission between two SS sets according to an embodiment of this application. As shown in FIG. 10, a base station configures an association relationship on two SS sets for PDCCH repetition transmission by using an RRC parameter, that is, an SS set #i and an SS set #j may be referred to as linked SS sets. PDCCH candidates for PDCCH repetition transmission belong to two PDCCH candidates of two SS sets. It is assumed that one SS set #i includes aggregation levels AL 4 and AL 8, and quantities of PDCCH candidates corresponding to the aggregation levels AL 4 and AL 8 are 4 and 2 respectively. Based on the definition of PDCCH repetition transmission, PDCCH repetition transmission at the AL 4 can be implemented only by two PDCCH candidates at the AL 4, and cannot be implemented by one PDCCH candidate at the AL 4 and one PDCCH candidate at the AL 8. Therefore, it is assumed that a predefined mapping relationship for PDCCH repetition transmission exists, and the association relationship shown in FIG. 10 may be obtained. For the AL 8, a PDCCH candidate sequence number 1 of the SS set #i and a PDCCH candidate sequence number 1 of the SS set #j are used together for PDCCH repetition transmission, and a PDCCH candidate sequence number 2 of the SS set #i and a PDCCH candidate sequence number 2 of the SS set #j are used together for PDCCH repetition transmission, which are separately referred to as linked PDCCH candidates. For an AL 16, a PDCCH candidate sequence number 1 of the SS set #i and a PDCCH candidate sequence number 1 of the SS set #j are used together for PDCCH repetition transmission. It can be learned from the foregoing two sub-scenarios that all PDCCH candidates in one SS set are used for PDCCH repetition transmission, and a PDCCH candidate for sending an independent PDCCH is not included. If the base station needs to send an independent PDCCH, the sending can be implemented only by configuring another SS set, for example, configuring an SS set #k.

### 17. PDCCH QCL-TypeD conflict resolution mechanism

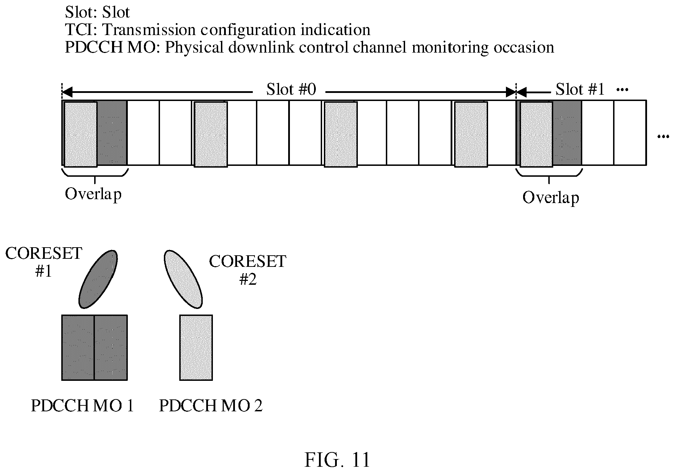

It is specified in the current protocol that a PDCCH can be monitored in only one beam direction at the same time. When PDCCH monitoring occasions overlap in time domain, if QCL-TypeD relationships bound to a plurality of CORESETs associated with the overlapping PDCCH monitoring occasions are the same or different, UE selects one CORESET by using a conflict resolution mechanism, to monitor a PDCCH, and selects, in the overlapping PDCCH monitoring occasions, one or more CORESETs that have a same QCL-TypeD property as the CORESET to monitor the PDCCH. For example, FIG. 11 is a schematic diagram of a scenario of a PDCCH MO resource conflict according to an embodiment of this application. As shown in FIG. 11, a PDCCH MO 1 and a PDCCH MO 2 overlap in time domain. The PDCCH MO 1 is associated with a CORESET #1, the PDCCH MO 2 is associated with a CORESET #2, and QCL-TypeD properties of the CORESET #1 and the CORESET #2 are different, that is, the CORESET #1 and the CORESET #2 correspond to different beams. Therefore, UE may select one CORESET by using a conflict resolution mechanism, to monitor a PDCCH.

The conflict resolution mechanism is as follows:
(1) A cell with a smallest index in serving cells that include a CSS is first selected.
(2) A CORESET associated with a CSS with a smallest index is further selected. If no CSS is associated with a conflicting resource, a CORESET associated with a USS with a smallest index is selected.

One CORESET is determined, and the UE monitors a PDCCH whose beam direction is the same as that of the CORESET. The "beam direction is the same as that of the CORESET" in the current communication protocol 38.213 is described as follows: For a part of CORESETs in a plurality of CORESETs, qcl-Type parameters of the part of CORESETs are configured to have a same "TypeD" property as a qcl-Type parameter of the CORESET.

In other words, when the terminal device monitors a plurality of search space sets in a single serving cell or a plurality of serving cells, the plurality of search space sets are associated with a plurality of CORESETs. If a plurality of physical downlink control channel monitoring occasions PDCCH MOs corresponding to the plurality of search space sets overlap in time domain, and quasi-colocation TypeD (QCL-TypeD) properties corresponding to the plurality of CORESETs are the same or different, if the PDCCH MO includes a common search space CSS set, the UE first determines a serving cell with a smallest index in cells including the CSS, and then determines a CSS with a smallest index in the determined serving cell. The terminal device may determine a QCL-TypeD property of a CORESET based on configuration information of the CORESET associated with the determined CSS. Finally, the terminal device determines, in the PDCCH MO, one or more CORESETs with the same QCL-TypeD property, and monitors a PDCCH on the CORESET.

If the PDCCH MO does not include the CSS, the PDCCH MO is associated with a USS. The terminal device determines a serving cell with a smallest index in serving cells associated with the USS, and then determines a USS with a smallest index in the determined serving cell. The terminal device may determine a QCL-TypeD property of a CORESET based on configuration information of the CORESET associated with the determined USS. Finally, the terminal device determines, in the PDCCH MO, one or more CORESETs with the same QCL-TypeD property, and monitors a PDCCH on the CORESET.

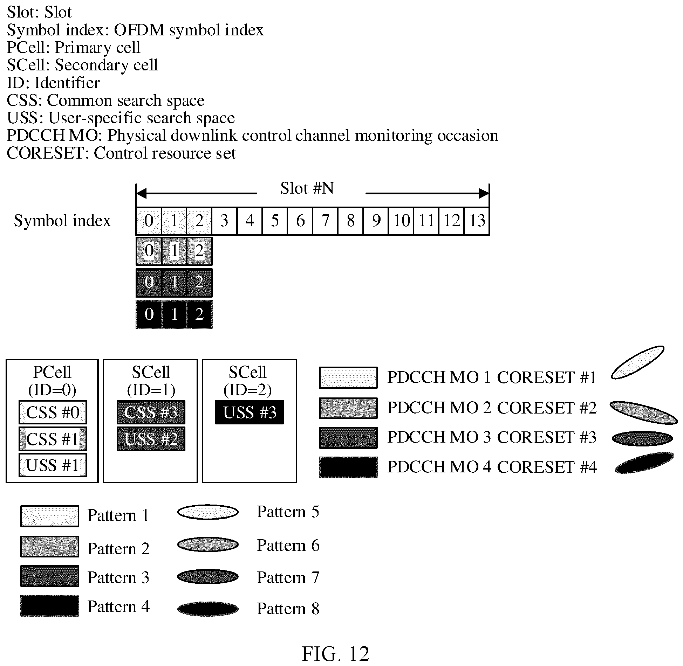

For example, FIG. 12 is a schematic diagram of another scenario of a PDCCH MO resource conflict according to an embodiment of this application. As shown in FIG. 12, a pattern 1 to a pattern 4 respectively indicate a PDCCH MO 1, a PDCCH MO 2, a PDCCH MO 3, and a PDCCH MO 4, and a pattern 5 to a pattern 8 respectively indicate a CORESET #1, a CORESET #2, a CORESET #3, and a CORESET #4. The PDCCH MO 1, the PDCCH MO 2, the PDCCH MO 3, and the PDCCH MO 4 all occupy symbols 0, 1, and 2, that is, the PDCCH MO 1, the PDCCH MO 2, the PDCCH MO 3, and the PDCCH MO 4 overlap on all the symbols. Common search spaces CSS #0 and CSS #1, and a user-specific search space USS #1 are configured for a primary cell (that is, a PCell #0) with a cell identifier ID=0, a CSS #3 and a user-specific search space USS #2 are configured for a secondary cell (that is, an SCell #1) with a cell identifier ID=1, and a user-specific search space USS #3 is configured for a secondary cell (that is, an SCell #2) with a cell identifier ID=2. The CSS #0 and the USS #1 are associated with the CORESET #1, the CSS #1 is associated with the CORESET #2, the CSS #3 and the USS #2 are associated with the CORESET #3, and the USS #3 is associated with the CORESET #4. When the four PDCCH MOs overlap and corresponding CORESETs have different QCL-TypeD properties, it can be learned from the configuration that, because no CSS is configured for the SCell #2, and CSSs are configured for both the PCell and the SCell #1, a serving cell with a smallest index in serving cells including the CSS is first selected, that is, a serving cell with an index=0, that is, the PCell #0, is selected. However, two CORESETs (that is, the CORESET #1 and the CORESET #2) in the PCell are still respectively associated with the CSSs (that is, the CORESET #1 is associated with the CSS #0, and the CORESET #2 is associated with the CSS #1), and QCL-TypeD properties of the two CORESETs are different. Therefore, a CORESET associated with an associated CSS with a smallest SS index (that is, the CSS #0) is selected to monitor a PDCCH, that is, a terminal monitors the PDCCH on the CORESET #1. If there is another CORESET whose QCL-TypeD property is the same as that of the CORESET #1, the terminal device also needs to monitor the PDCCH on the another CORESET.

If there is no CSS in the overlapping PDCCH MOs, one or more CORESETs are selected in USSs associated with these PDCCH MOs according to the foregoing rule to monitor the PDCCH. The CSS needs to be configured for the PCell, but the CSS may not be configured for the SCell. Therefore, in this scenario, when no CSS is configured for two or more SCells and QCL-TypeD properties of a plurality of CORESETs corresponding to the overlapping PDCCH MOs are different, determining and selection of a CORESET or a QCL-TypeD property can be performed only by determining a USS index.

It should be noted herein that IDs of CORESETs configured for different BWPs in one serving cell are different from each other. For example, a base station configures four BWPs for one serving cell, and three CORESETs are configured for each BWP. If a CORESET with a CORESET ID=3 exists in one BWP, the CORESET #3 is not configured for the other three BWPs. An SS set also has a same constraint, that is, IDs of SS sets configured for different BWPs in one serving cell are different from each other. However, IDs of CORESETs/SS sets configured for different serving cells may be the same.

In an NR system, downlink control information is carried on a PDCCH, and the base station allocates a specific time-frequency resource to transmit the PDCCH. In NR, the PDCCH may be configured to be associated with one or more CORESETs and one or more SS sets. The CORESET is used to define a frequency domain resource location of the PDCCH and a quantity of time domain OFDM symbols occupied by the PDCCH. The SS set is used to define time domain location information of the PDCCH. A maximum of three CORESETs and 10 SS sets may be configured for each terminal device in a same bandwidth part (bandwidth part, BWP). Based on each pair of configured CORESET and SS set, the terminal device may determine a time-frequency resource of the PDCCH, the base station may deliver the PDCCH on the time-frequency resource, and the terminal needs to detect the PDCCH on the time-frequency resource. The terminal device determines, based on configuration information of a monitoring start OFDM symbol and a quantity of OFDM symbols occupied by a CORESET associated with an SS set in configuration information of the SS set, one or more PDCCH MOs corresponding to the SS set. The PDCCH MO may be understood as a time domain concept.

Before sending the PDCCH to the terminal device, the base station first notifies the terminal device of the configuration information, so that the terminal device learns of one or more time domain resources (that is, one or more PDCCH MOs) and a TCI-state that are required for receiving the PDCCH. When a plurality of PDCCH MOs delivered by the base station to the terminal device overlap in time domain, and a plurality of CORESETs associated with the plurality of overlapping PDCCH MOs correspond to different beams, it is usually considered that the plurality of PDCCH MOs have a resource conflict (or the plurality of CORESETs have a resource conflict). Generally, in a related technology, the UE may select, by using a conflict resolution mechanism, a beam corresponding to one CORESET to monitor the PDCCH. However, for UE that can support simultaneous reception of two different beams, when a plurality of PDCCH MOs have a resource conflict, how to select two beams in a plurality of CORESETs associated with the plurality of PDCCH MOs for monitoring becomes one of urgent problems that need to be resolved.

Based on this, this application provides a communication method, to resolve a beam conflict problem during control channel monitoring, and improve PDCCH transmission reliability.

The following describes in detail the technical solutions provided in this application with reference to more accompanying drawings.

### Embodiment 1

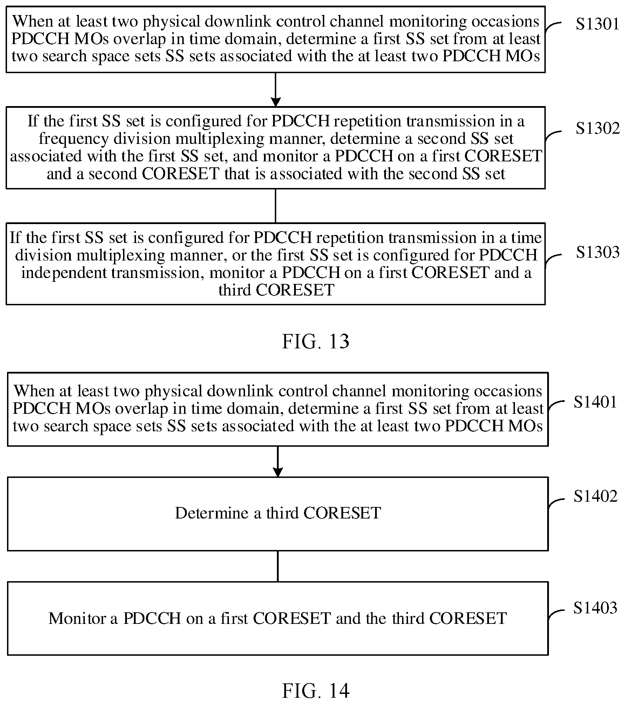

FIG. 13 is a schematic flowchart of a communication method according to an embodiment of this application. The method is applicable to a terminal device UE. As shown in FIG. 13, the method includes the following steps S1301 to S1303.

S1301: When at least two physical downlink control channel monitoring occasions PDCCH MOs overlap in time domain, determine a first SS set from at least two search space sets SS sets associated with the at least two PDCCH MOs.

In some feasible implementations, when the at least two PDCCH MOs overlap in a time domain, the UE may determine the first SS set from the at least two SS sets associated with the at least two PDCCH MOs. The first SS set may be specifically a common search space CSS set or a user-specific search space USS set. The first SS set is associated with a first CORESET, and the first SS set is an SS set corresponding to a smallest search space set index in at least one SS set configured for a first cell. The at least one SS set configured for the first cell is included in the at least two SS sets associated with the at least two PDCCH MOs. In other words, the at least two SS sets include the at least one SS set configured for the first cell. The first cell is a cell corresponding to a smallest cell index in cells for which one or more of the at least two SS sets are configured. In other words, the first SS set is an SS set determined according to the protocol 38.213 from a plurality of SS sets associated with a plurality of PDCCH MOs that overlap in time domain. Details are not described herein again.

S1302: If the first SS set is configured for PDCCH repetition transmission in a frequency division multiplexing manner, determine a second SS set associated with the first SS set, and monitor a PDCCH on the first CORESET and a second CORESET that is associated with the second SS set.

In some feasible implementations, if the first SS set is configured for PDCCH repetition transmission in the frequency division multiplexing manner, the second SS set associated with the first SS set is determined, and the PDCCH is monitored on the first CORESET and the second CORESET that is associated with the second SS set. The second SS set associated with the first SS set may be understood as another SS set that is configured for PDCCH repetition transmission together with the first SS set, and the first SS set and the second SS set are frequency division multiplexed SS sets. In other words, the first SS set and the second SS set are a pair of SS sets that are configured for PDCCH repetition transmission in the frequency division multiplexing manner. In this embodiment of this application, two SS sets (that is, a pair of SS sets) that are configured for PDCCH repetition transmission in the frequency division multiplexing manner may be described as two FDMed linked SS sets (that is, a pair of FDMed linked SS sets). PDCCH MOs corresponding to the two FDMed linked SS sets overlap in time domain, and beams corresponding to the two FDMed linked SS sets are simultaneous-reception beams.

Optionally, in some feasible implementations, in addition to monitoring the PDCCH on the first CORESET and the second CORESET, a PDCCH may also be monitored on a fifth CORESET and a sixth CORESET. At least two CORESETs corresponding to the at least two PDCCH MOs include the fifth CORESET and the sixth CORESET, the fifth CORESET and the first CORESET correspond to a same beam, and the sixth CORESET and the second CORESET correspond to a same beam. To be specific, after the first CORESET and the second CORESET are determined, the PDCCH may be monitored on the first CORESET and the second CORESET, the PDCCH may be monitored on one or more CORESETs (that is, the fifth CORESET) that have the same beam as the first CORESET, and the PDCCH may be monitored on one or more CORESETs (that is, the sixth CORESET) that have the same beam as the second CORESET.

Optionally, in some feasible implementations, if the first CORESET and the second CORESET correspond to a same beam, a PDCCH is monitored on the first CORESET, the second CORESET, and a fourth CORESET. A beam corresponding to the fourth CORESET and the beam corresponding to the first CORESET or the second CORESET are simultaneous-reception beams. The fourth CORESET is associated with a fourth SS set, and the at least two PDCCH MOs include a PDCCH MO corresponding to the fourth SS set. In other words, if the beam corresponding to the first CORESET associated with the first SS set and the beam corresponding to the second CORESET associated with the second SS set are the same beam, the CORESET (that is, the fourth CORESET) associated with the beam for simultaneous-reception with the beam corresponding to the first CORESET (or the second CORESET) needs to be further determined from the at least two CORESETs associated with the at least two PDCCH MOs that overlap in time domain, and then the PDCCH is monitored on the first CORESET, the second CORESET, and the fourth CORESET.

Generally, if beams corresponding to a plurality of CORESETs included in at least two CORESETs corresponding to the at least two PDCCH MOs that overlap in time domain and the beam corresponding to the first CORESET (or the second CORESET) are simultaneous-reception beams, the fourth CORESET is one of the plurality of CORESETs. That the fourth CORESET is one of the plurality of CORESETs may be understood as that the fourth CORESET is a CORESET in the plurality of CORESETs that meets a first predefined rule. For example, the CORESET that meets the first predefined rule may be a CORESET including a smallest resource index or a largest resource index in the plurality of CORESETs. The resource index includes at least one of the following indexes: a CORESET index, a transmission configuration indication state TCI-state index, a channel state information-reference signal CSI-RS index, a synchronization signal block SSB index, and the like. This is not limited herein. For another example, the CORESET that meets the first predefined rule may alternatively be a CORESET specified in a protocol by default. This is not limited herein. For ease of description, in this embodiment of this application, the CORESET that meets the first predefined rule may be understood as the CORESET including the smallest resource index. In other words, if there are a plurality of beams for simultaneous-reception with the beam corresponding to the first CORESET (or the second CORESET), the UE determines one beam from the plurality of beams, and then determines a CORESET including the beam as the fourth CORESET.

Optionally, if a beam corresponding to only one CORESET included in at least two CORESETs corresponding to the at least two PDCCH MOs that overlap in time domain and the beam corresponding to the first CORESET (or the second CORESET) are simultaneous-reception beams, the fourth CORESET is the CORESET. In other words, if there is only one beam for simultaneous-reception with the beam corresponding to the first CORESET, the UE may determine the CORESET including the beam as the fourth CORESET.

Optionally, if at least two CORESETs corresponding to the at least two PDCCH MOs that overlap in time domain do not include a beam for simultaneous-reception with the beam corresponding to the first CORESET (or the second CORESET), it indicates that the fourth CORESET does not exist. In other words, if there is no beam for simultaneous-reception with the beam corresponding to the first CORESET (or the second CORESET), the PDCCH is monitored on the determined first CORESET.

Optionally, in some feasible implementations, in addition to monitoring the PDCCH on the first CORESET, the second CORESET, and the fourth CORESET, a PDCCH may be further monitored on an eighth CORESET and a ninth CORESET. At least two CORESETs corresponding to the at least two PDCCH MOs include the eighth CORESET and the ninth CORESET, the eighth CORESET and the first CORESET or the second CORESET correspond to a same beam, and the ninth CORESET and the fourth CORESET correspond to a same beam. To be specific, after the first CORESET, the second CORESET, and the fourth CORESET are determined, the PDCCH may be monitored on the first CORESET, the second CORESET, and the fourth CORESET, the PDCCH may be monitored on one or more CORESETs (that is, the eighth CORESET) that have the same beam as the first CORESET (or the second CORESET), and the PDCCH may be monitored on one or more CORESETs (that is, the ninth CORESET) that have the same beam as the fourth CORESET.

S1303: If the first SS set is configured for PDCCH repetition transmission in a time division multiplexing manner, or the first SS set is configured for PDCCH independent transmission, monitor a PDCCH on the first CORESET and a third CORESET.

In some feasible implementations, if the first SS set is configured for PDCCH repetition transmission in the time division multiplexing manner, or the first SS set is configured for PDCCH independent transmission, the PDCCH is monitored on the first CORESET and the third CORESET. A beam corresponding to the third CORESET and the beam corresponding to the first CORESET are simultaneous-reception beams. The third CORESET is associated with a third SS set, and the at least two PDCCH MOs include a PDCCH MO corresponding to the third SS set. To be specific, when the first SS set is an SS set in a pair of SS sets configured for PDCCH repetition transmission in the time division multiplexing manner, the UE may determine another CORESET (that is, the third CORESET) based on the first CORESET associated with the first SS set, where the beam corresponding to the third CORESET and the beam corresponding to the first CORESET are the simultaneous-reception beams. Further, the UE may monitor the PDCCH on the first CORESET and the third CORESET. In this embodiment of this application, two SS sets (that is, a pair of SS sets) that are configured for PDCCH repetition transmission in the time division multiplexing manner may be described as two TDMed linked SS sets (that is, a pair of TDMed linked SS sets). PDCCH MOs corresponding to the two TDMed linked SS sets do not overlap in time domain. Optionally, when the first SS set is an SS set configured for PDCCH independent transmission, the UE may alternatively determine another CORESET (that is, the third CORESET) based on the first CORESET associated with the first SS set, where the beam corresponding to the third CORESET and the beam corresponding to the first CORESET are the simultaneous-reception beams. Further, the UE may monitor the PDCCH on the first CORESET and the third CORESET. In this embodiment of this application, the SS set configured for PDCCH independent transmission may be further described as an individual SS set.

Generally, if beams corresponding to a plurality of CORESETs included in at least two CORESETs corresponding to the at least two PDCCH MOs that overlap in time domain and the beam corresponding to the first CORESET are simultaneous-reception beams, the third CORESET is one of the plurality of CORESETs. That the third CORESET is one of the plurality of CORESETs may be understood as that the third CORESET is a CORESET that meets the first predefined rule in the plurality of CORESETs. For example, the CORESET that meets the first predefined rule may be the CORESET including the smallest resource index or the largest resource index in the plurality of CORESETs. The resource index includes at least one of the following indexes: the CORESET index, the transmission configuration indication state TCI-state index, the channel state information-reference signal CSI-RS index, the synchronization signal block SSB index, and the like. This is not limited herein. For another example, the CORESET that meets the first predefined rule may alternatively be the CORESET specified in the protocol by default. This is not limited herein. For ease of description, in this embodiment of this application, the CORESET that meets the first predefined rule may be understood as the CORESET including the smallest resource index. In other words, if there are a plurality of beams for simultaneous-reception with the beam corresponding to the first CORESET, the UE determines one beam from the plurality of beams, and then determines a CORESET including the beam as the third CORESET.

Optionally, if a beam corresponding to only one CORESET included in at least two CORESETs corresponding to the at least two PDCCH MOs that overlap in time domain and the beam corresponding to the first CORESET are simultaneous-reception beams, the third CORESET is the CORESET. In other words, if there is only one beam for simultaneous-reception with the beam corresponding to the first CORESET, the UE may determine the CORESET including the beam as the third CORESET.

Optionally, if at least two CORESETs corresponding to the at least two PDCCH MOs that overlap in time domain do not include a beam for simultaneous-reception with the beam corresponding to the first CORESET, it indicates that the third CORESET does not exist. In other words, if there is no beam for simultaneous-reception with the beam corresponding to the first CORESET, the PDCCH is monitored on the determined first CORESET.

Optionally, in some feasible implementations, in addition to monitoring the PDCCH on the first CORESET and the third CORESET, a PDCCH may also be monitored on the fifth CORESET and a seventh CORESET. At least two CORESETs corresponding to the at least two PDCCH MOs include the fifth CORESET and the seventh CORESET, the fifth CORESET and the first CORESET correspond to a same beam, and the seventh CORESET and the third CORESET correspond to a same beam. To be specific, after the first CORESET and the third CORESET are determined, the PDCCH may be monitored on the first CORESET and the third CORESET, the PDCCH may be monitored on one or more CORESETs (that is, the fifth CORESET) that have the same beam as the first CORESET, and the PDCCH may be monitored on one or more CORESETs (that is, the seventh CORESET) that have the same beam as the third CORESET.

In this embodiment of this application, when a plurality of PDCCH MOs overlap in time domain, and there are a plurality of beams, for UE that supports simultaneous reception of two different beams, the UE may determine two different beams according to the communication method in this embodiment of this application, and then monitor a PDCCH on the two beams, to resolve a beam conflict problem during control channel monitoring. In addition, PDCCH repetition transmission can be implemented in a PDCCH MO resource conflict scenario, to ensure robustness of PDCCH transmission. In addition, because the first CORESET in Embodiment 1 is determined based on a conventional technology, based on the first CORESET, the second CORESET that forms a pair of FDMed linked SS sets together with the first SS set is determined to obtain two beams, or the third CORESET that has a simultaneous-reception beam relationship with the first CORESET is determined to obtain two beams, or the fourth CORESET that has a simultaneous-reception beam relationship with the first CORESET (or the second CORESET) is determined to obtain two beams. In this way, the PDCCH is monitored on the first CORESET and the second CORESET, or the PDCCH is monitored on the first CORESET and the third CORESET, or the PDCCH is monitored on the first CORESET, the second CORESET (herein, the first CORESET and the second CORESET correspond to the same beam), and the fourth CORESET, so that the communication method provided in Embodiment 1 is compatible with the conventional technology. Compared with the conventional technology, in Embodiment 1, impact of the linked SS set on a definition of a priority rule is mainly considered, and in addition, impact of the simultaneous-reception beam on the definition of the priority rule is further considered for the UE that supports simultaneous reception of two different beams in a scenario of PDCCH repetition transmission.

Correspondingly, for a base station, when the at least two physical downlink control channel monitoring occasions PDCCH MOs overlap in time domain, the base station may determine the first SS set from the at least two search space sets SS sets associated with the at least two PDCCH MOs. Then, that the base station determines the first CORESET associated with the first SS set specifically includes the following cases:
① If the first SS set is configured for PDCCH repetition transmission in the frequency division multiplexing manner, the base station may determine the second SS set associated with the first SS set, and then determine the first CORESET associated with the first SS set and the second CORESET associated with the second SS set. The first CORESET and the second CORESET correspond to different beams, and the at least two PDCCH MOs include a PDCCH MO corresponding to the second SS set.
② If the first SS set is configured for PDCCH repetition transmission in the time division multiplexing manner, or the first SS set is configured for PDCCH independent transmission, the first CORESET and the third CORESET are determined. The beam corresponding to the third CORESET and the beam corresponding to the first CORESET are simultaneous-reception beams. The third CORESET is associated with the third SS set, and the at least two PDCCH MOs include the PDCCH MO corresponding to the third SS set.
(3) If the first CORESET and the second CORESET correspond to the same beam, the first CORESET, the second CORESET, and the fourth CORESET are determined. The beam corresponding to the fourth CORESET and the beam corresponding to the first CORESET or the second CORESET are simultaneous-reception beams. The fourth CORESET is associated with the fourth SS set, and the at least two PDCCH MOs include the PDCCH MO corresponding to the fourth SS set.

The SS set in this embodiment of this application may be a common search space CSS or a user-specific search space USS.

If the beams corresponding to the plurality of CORESETs included in the at least two CORESETs corresponding to the at least two PDCCH MOs and the beam corresponding to the first CORESET are simultaneous-reception beams, the third CORESET or the fourth CORESET is the CORESET that meets the first predefined rule in the plurality of CORESETs. For example, the first predefined rule may be a smallest resource index corresponding to QCL-TypeD information in the simultaneous-reception beams. For another example, the first predefined rule may be a largest resource index in the simultaneous-reception beams. This is not limited herein. The resource index may be the CORESET index, the TCI-state index, the CSI-RS index, the SSB index, or the like. This is not limited herein.

After the base station determines two CORESETs (that is, the first CORESET and the second CORESET in ①, or the first CORESET and the third CORESET in (2), or the first CORESET and the fourth CORESET in (3)) corresponding to the different beams, the base station may further determine one or more CORESETs that have a same beam as the two CORESETs.

For example, for the case ①, the base station may further determine the fifth CORESET and the sixth CORESET. The at least two CORESETs corresponding to the at least two PDCCH MOs include the fifth CORESET and the sixth CORESET, the fifth CORESET and the first CORESET correspond to the same beam, and the sixth CORESET and the second CORESET correspond to the same beam.

For another example, for the case (2), the base station may further determine the fifth CORESET and the seventh CORESET. The at least two CORESETs corresponding to the at least two PDCCH MOs include the fifth CORESET and the seventh CORESET, the fifth CORESET and the first CORESET correspond to the same beam, and the seventh CORESET and the third CORESET correspond to the same beam.

For another example, for the case (3), the base station may further determine the eighth CORESET and the ninth CORESET. The at least two CORESETs corresponding to the at least two PDCCH MOs include the eighth CORESET and the ninth CORESET, the eighth CORESET and the first CORESET or the second CORESET correspond to the same beam, and the ninth CORESET and the fourth CORESET correspond to the same beam.

Further, after determining the two different beams, the base station transmits control information on transmission beams corresponding to the two different beams (which may be understood as two different reception beams). For example, a base station 1 determines the first CORESET and the second CORESET. The first CORESET and the second CORESET correspond to different beams. Further, the base station 1 may transmit control information on transmission beams corresponding to the first CORESET and the second CORESET. Optionally, the base station 1 may alternatively transmit the control information on the transmission beam corresponding to the first CORESET, and send information such as the determined second CORESET to a base station 2, so that the base station 2 transmits control information on the transmission beam corresponding to the second CORESET. For another example, both a base station 1 and a base station 2 may determine the first CORESET and the second CORESET, where the first CORESET and the second CORESET correspond to different beams. Then, the base station 1 and the base station 2 respectively transmit, based on configuration information of the base station 1 and configuration information of the base station 2, control information through corresponding transmission beams on time domain resources that are allowed for sending by the base station 1 and the base station 2. For example, assuming that configuration information of a cell in which the base station 1 is located includes first CORESET configuration information, and configuration information of a cell in which the base station 2 is located includes second CORESET configuration information, the base station 1 may transmit the control information on the transmission beam corresponding to the first CORESET, and the base station 2 may transmit the control information on the transmission beam corresponding to the second CORESET.

### Embodiment 2

FIG. 14 is a schematic flowchart of a communication method according to an embodiment of this application. The method is applicable to UE. As shown in FIG. 14, the method includes the following steps S1301 to S1303.

S1401: When at least two physical downlink control channel monitoring occasions PDCCH MOs overlap in time domain, determine a first SS set from at least two search space sets SS sets associated with the at least two PDCCH MOs.

In some feasible implementations, when the at least two PDCCH MOs overlap in a time domain, the UE may determine the first SS set from the at least two SS sets associated with the at least two PDCCH MOs. The first SS set may be specifically a common search space CSS set or a user-specific search space USS set. The first SS set is associated with a first CORESET, and the first SS set is an SS set corresponding to a smallest search space set index in at least one SS set configured for a first cell. The at least one SS set configured for the first cell is included in the at least two SS sets associated with the at least two PDCCH MOs. In other words, the at least two SS sets include the at least one SS set. The first cell is a cell corresponding to a smallest cell index in cells for which one or more of the at least two SS sets are configured. In other words, the first SS set is an SS set determined according to the protocol 38.213 from a plurality of SS sets associated with a plurality of PDCCH MOs that overlap in time domain. Details are not described herein again.

S1402: Determine a third CORESET.

In some feasible implementations, after the first CORESET is determined, the third CORESET may be further determined. A beam corresponding to the third CORESET and a beam corresponding to the first CORESET are simultaneous-reception beams, the third CORESET is associated with a third SS set, and the at least two PDCCH MOs include a PDCCH MO corresponding to the third SS set. The first CORESET includes an active TCI-state, the third CORESET includes an active TCI-state, and the active TCI-state included in the first CORESET is different from the active TCI-state included in the third CORESET.

Generally, if beams corresponding to a plurality of CORESETs included in at least two CORESETs corresponding to the at least two PDCCH MOs that overlap in time domain and the beam corresponding to the first CORESET are simultaneous-reception beams, the third CORESET is one of the plurality of CORESETs. That the third CORESET is one of the plurality of CORESETs may be understood as that the third CORESET is a CORESET in the plurality of CORESETs that meets a first predefined rule. For example, the CORESET that meets the first predefined rule may be a CORESET including a smallest resource index or a largest resource index in the plurality of CORESETs. The resource index includes at least one of the following indexes: a CORESET index, a transmission configuration indication state TCI-state index, a channel state information-reference signal CSI-RS index, a synchronization signal block SSB index, and the like. This is not limited herein. For another example, the CORESET that meets the first predefined rule may alternatively be a CORESET specified in a protocol by default. This is not limited herein. For ease of description, in this embodiment of this application, the CORESET that meets the first predefined rule may be understood as the CORESET including the smallest resource index. In other words, if there are a plurality of beams for simultaneous-reception with the beam corresponding to the first CORESET, the UE determines one beam from the plurality of beams, and then determines a CORESET including the beam as the third CORESET.

Optionally, if a beam corresponding to only one CORESET included in at least two CORESETs corresponding to the at least two PDCCH MOs that overlap in time domain and the beam corresponding to the first CORESET are simultaneous-reception beams, the third CORESET is the CORESET. In other words, if there is only one beam for simultaneous-reception with the beam corresponding to the first CORESET, the UE may determine the CORESET including the beam as the third CORESET.

Optionally, if at least two CORESETs corresponding to the at least two PDCCH MOs that overlap in time domain do not include a beam for simultaneous-reception with the beam corresponding to the first CORESET, it indicates that the third CORESET does not exist. In other words, if there is no beam for simultaneous-reception with the beam corresponding to the first CORESET, the PDCCH is monitored on the determined first CORESET.

Optionally, in some feasible implementations, when the first CORESET includes two active TCI-states, and the two active TCI-states are different, the first CORESET and the third CORESET may be a same CORESET.

S 1403 : Monitor a PDCCH on the first CORESET and the third CORESET.

In some feasible implementations, after the first CORESET and the third CORESET are determined, the PDCCH may be monitored on the first CORESET and the third CORESET.

Optionally, in some feasible implementations, in addition to monitoring the PDCCH on the first CORESET and the third CORESET, a PDCCH may also be monitored on a fifth CORESET and a seventh CORESET. At least two CORESETs corresponding to the at least two PDCCH MOs include the fifth CORESET and the seventh CORESET, the fifth CORESET and the first CORESET correspond to a same beam, and the seventh CORESET and the third CORESET correspond to a same beam. To be specific, after the first CORESET and the third CORESET are determined, the PDCCH may be monitored on the first CORESET and the third CORESET, the PDCCH may be monitored on one or more CORESETs (that is, the fifth CORESET) that have the same beam as the first CORESET, and the PDCCH may be monitored on one or more CORESETs (that is, the seventh CORESET) that have the same beam as the third CORESET.

In this embodiment of this application, when a plurality of PDCCH MOs overlap in time domain, and there are a plurality of beams, for UE that supports simultaneous reception of two different beams, the UE may determine two different beams according to the communication method in this embodiment of this application, and then monitor a PDCCH on the two beams, to resolve a beam conflict problem during control channel monitoring. In addition, the first CORESET in Embodiment 2 is determined based on a conventional technology, and then the third CORESET that has a simultaneous-reception beam relationship with the first CORESET is determined based on the first CORESET, to monitor the PDCCH on the first CORESET and the third CORESET. Therefore, the communication method provided in Embodiment 2 is compatible with the conventional technology. A difference between Embodiment 2 and Embodiment 1 lies in that after the UE determines the first SS set (where the first SS set is associated with the first CORESET), the UE determines the third CORESET that has the simultaneous-reception beam relationship with the first CORESET, instead of determining whether the first SS set is an FDMed linked SS set, a TDMed linked SS set, or an individual SS set. Compared with the conventional technology, in Embodiment 2, impact of the simultaneous-reception beam on a definition of a priority rule is mainly considered for the UE that supports simultaneous reception of two different beams in a scenario of PDCCH repetition transmission.

Correspondingly, for a base station, when the at least two physical downlink control channel monitoring occasions PDCCH MOs overlap in time domain, the base station may determine the first SS set from the at least two search space sets SS sets associated with the at least two PDCCH MOs. Then, the base station may further determine the third control resource set CORESET and the first CORESET that is associated with the first SS set. The beam corresponding to the third CORESET and the beam corresponding to the first CORESET are the simultaneous-reception beams, the third CORESET is associated with the third SS set, and the at least two PDCCH MOs include the PDCCH MO corresponding to the third SS set.

The SS set in this embodiment of this application may be a common search space CSS or a user-specific search space USS.

If the beams corresponding to the plurality of CORESETs included in the at least two CORESETs corresponding to the at least two PDCCH MOs and the beam corresponding to the first CORESET are simultaneous-reception beams, the third CORESET is the CORESET that meets the first predefined rule in the plurality of CORESETs. For example, the first predefined rule may be a smallest resource index in the simultaneous-reception beams, or the first predefined rule may be a largest resource index in the simultaneous-reception beams. This is not limited herein. The resource index may be the CORESET index, the TCI-state index, the CSI-RS index, the SSB index, or the like. This is not limited herein.

After the base station determines the first CORESET and the third CORESET corresponding to different beams, the base station may further determine one or more CORESETs (that is, the fifth CORESET) that have the same beam as the first CORESET, and determine one or more CORESETs (that is, the seventh CORESET) that have the same beam as the third CORESET.

Therefore, after determining the two different beams, the base station transmits control information on transmission beams corresponding to the two different beams (which may be understood as reception beams). For example, a base station 1 determines the first CORESET and the second CORESET. The first CORESET and the second CORESET correspond to different beams. Further, the base station 1 may transmit control information on transmission beams corresponding to the first CORESET and the second CORESET. Optionally, the base station 1 may alternatively transmit the control information on the transmission beam corresponding to the first CORESET, and send information such as the determined second CORESET to a base station 2, so that the base station 2 transmits control information on the transmission beam corresponding to the second CORESET. For another example, both a base station 1 and a base station 2 may determine the first CORESET and the second CORESET, where the first CORESET and the second CORESET correspond to different beams. Then, the base station 1 and the base station 2 respectively transmit, based on configuration information of the base station 1 and configuration information of the base station 2, control information through corresponding transmission beams on time domain resources that are allowed for sending by the base station 1 and the base station 2. For example, assuming that configuration information of a cell in which the base station 1 is located includes first CORESET configuration information, and configuration information of a cell in which the base station 2 is located includes second CORESET configuration information, the base station 1 may transmit the control information on the transmission beam corresponding to the first CORESET, and the base station 2 may transmit the control information on the transmission beam corresponding to the second CORESET.

### Embodiment 3

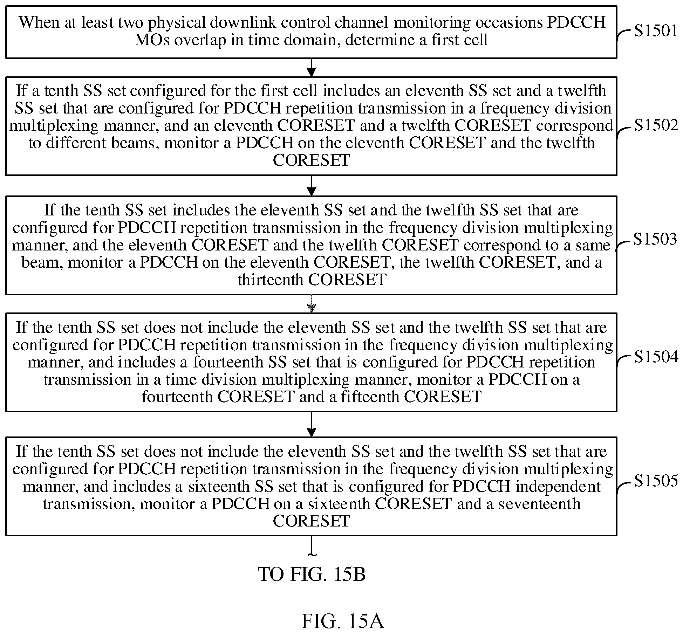

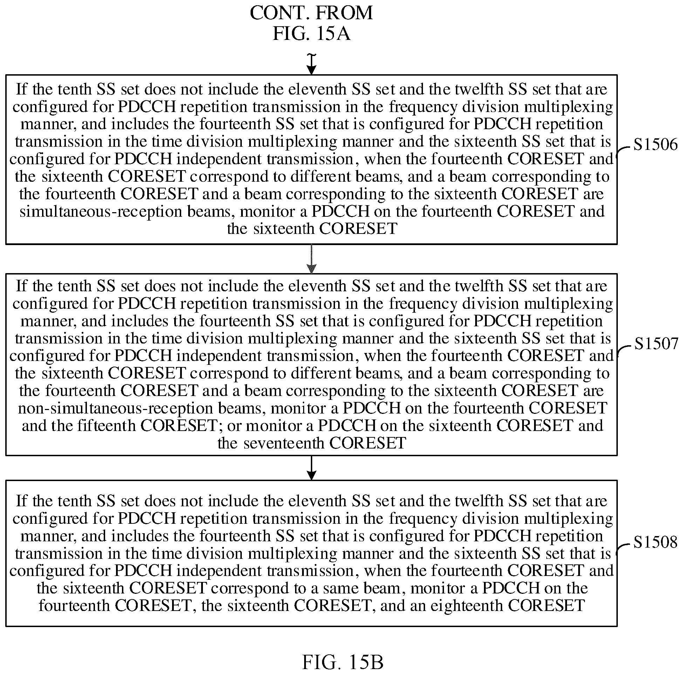

FIG. 15A and FIG. 15B are a schematic flowchart of a communication method according to an embodiment of this application. The method is applicable to a terminal device UE. As shown in FIG. 15A and FIG. 15B, the method includes the following steps S1501 and S 1502.

S1501: When at least two physical downlink control channel monitoring occasions PDCCH MOs overlap in time domain, determine a first cell.

In some feasible implementations, when the at least two physical downlink control channel monitoring occasions PDCCH MOs overlap in time domain, the first cell is determined. The at least two PDCCH MOs are associated with at least two search space sets SS sets. In this embodiment of this application, the first cell is a cell with a smallest cell index in cells for which one or more of the at least two SS sets are configured. The SS set may be specifically a common search space CSS set or a user-specific search space USS set. Generally, when the at least two SS sets include a CSS and a USS, the first cell is usually a cell with a smallest cell index in cells for which one or more CSSs in the at least two SS sets are configured. When the at least two SS sets include a USS and do not include a CSS, the first cell is usually a cell with a smallest cell index in cells for which one or more USSs in the at least two SS sets are configured. In other words, the first cell may be a cell determined from a plurality of cells according to the protocol 38.213. Details are not described herein again.

The first cell may be configured with an SS set associated with a PDCCH MO that overlaps in time domain. In addition, the first cell may further be configured with an SS set associated with a PDCCH MO that does not overlap in time domain. For ease of description, in this embodiment of this application, the SS set that is associated with the PDCCH MO that overlaps in time domain and that is configured for the first cell may be described as a tenth SS set. To be specific, the tenth SS set includes the at least two SS sets associated with the at least two overlapping PDCCH MOs, or the at least two SS sets associated with the at least two overlapping PDCCH MOs include the tenth SS set.

51502: If the tenth SS set configured for the first cell includes an eleventh SS set and a twelfth SS set that are configured for PDCCH repetition transmission in a frequency division multiplexing manner, and an eleventh CORESET and a twelfth CORESET correspond to different beams, monitor a PDCCH on the eleventh CORESET and the twelfth CORESET.

In some feasible implementations, if the tenth SS set configured for the first cell includes the eleventh SS set and the twelfth SS set that are configured for PDCCH repetition transmission in the frequency division multiplexing manner, and the eleventh CORESET and the twelfth CORESET correspond to the different beams, the PDCCH is monitored on the eleventh CORESET and the twelfth CORESET. The eleventh CORESET is associated with the eleventh SS set, the twelfth CORESET is associated with the twelfth SS set, and the tenth SS set configured for the first cell is included in the at least two SS sets associated with the at least two PDCCH MOs that overlap in time domain, that is, the at least two SS sets include the tenth SS set.

The eleventh SS set and the twelfth SS set are a pair of SS sets that meet a second predefined rule in at least two pairs of SS sets configured for PDCCH repetition transmission in the frequency division multiplexing manner in the tenth SS set. In this embodiment of this application, two SS sets (that is, a pair of SS sets) that are configured for PDCCH repetition transmission in the frequency division multiplexing manner may be described as two FDMed linked SS sets (that is, a pair of FDMed linked SS sets). PDCCH MOs corresponding to the two FDMed linked SS sets definitely overlap in time domain, and beams corresponding to the two FDMed linked SS sets are simultaneous-reception beams. In other words, if the tenth SS set includes a plurality of pairs of FDMed linked SS sets, the eleventh SS set and the twelfth SS set are two FDMed linked SS sets included in a pair of FDMed linked SS sets selected from the plurality of pairs of FDMed linked SS sets according to the second predefined rule. The second predefined rule may be understood as that two SS sets included in a pair of SS sets that have a smallest search space set index or a largest search space set index are determined as the eleventh SS set and the twelfth SS set. In other words, the eleventh SS set and the twelfth SS set are a pair of SS sets that have a smallest search space set index or a largest search space set index in at least two pairs of SS sets that are configured for PDCCH repetition transmission in the frequency division multiplexing manner in the tenth SS set.

Optionally, in some feasible implementations, in addition to monitoring the PDCCH on the eleventh CORESET and the twelfth CORESET, a PDCCH may be further monitored on a nineteenth CORESET and a twentieth CORESET. At least two CORESETs corresponding to the at least two PDCCH MOs include the nineteenth CORESET and the twentieth CORESET, the nineteenth CORESET and the eleventh CORESET correspond to a same beam, and the twentieth CORESET and the twelfth CORESET correspond to a same beam. To be specific, after the eleventh CORESET and the twelfth CORESET are determined, the PDCCH may be monitored on the eleventh CORESET and the twelfth CORESET, the PDCCH may be monitored on one or more CORESETs (that is, the nineteenth CORESET) that have the same beam as the eleventh CORESET, and the PDCCH may be monitored on one or more CORESETs (that is, the twentieth CORESET) that have the same beam as the twelfth CORESET.

S1503: If the tenth SS set includes the eleventh SS set and the twelfth SS set that are configured for PDCCH repetition transmission in the frequency division multiplexing manner, and the eleventh CORESET and the twelfth CORESET correspond to a same beam, monitor a PDCCH on the eleventh CORESET, the twelfth CORESET, and a thirteenth CORESET.

In some feasible implementations, if the tenth SS set includes the eleventh SS set and the twelfth SS set that are configured for PDCCH repetition transmission in the frequency division multiplexing manner, and the eleventh CORESET and the twelfth CORESET correspond to the same beam, the PDCCH is monitored on the eleventh CORESET, the twelfth CORESET, and the thirteenth CORESET. A beam corresponding to the thirteenth CORESET and the beam corresponding to the eleventh CORESET or the twelfth CORESET are simultaneous-reception beams, the thirteenth CORESET is associated with a thirteenth SS set, and the at least two PDCCH MOs include a PDCCH MO corresponding to the thirteenth SS set.

Generally, if beams corresponding to a plurality of CORESETs included in at least two CORESETs corresponding to the at least two PDCCH MOs that overlap in time domain and the beam corresponding to the eleventh CORESET (or the twelfth CORESET) are simultaneous-reception beams, the thirteenth CORESET is one of the plurality of CORESETs. That the thirteenth CORESET is one of the plurality of CORESETs may be understood as that the thirteenth CORESET is a CORESET that meets the first predefined rule in the plurality of CORESETs. For example, the CORESET that meets the first predefined rule may be a CORESET including a smallest resource index or a largest resource index in the plurality of CORESETs. The resource index includes at least one of the following indexes: a CORESET index, a transmission configuration indication state TCI-state index, a channel state information-reference signal CSI-RS index, a synchronization signal block SSB index, and the like. This is not limited herein. For another example, the CORESET that meets the first predefined rule may alternatively be a CORESET specified in a protocol by default. This is not limited herein. For ease of description, in this embodiment of this application, the CORESET that meets the first predefined rule may be understood as the CORESET including the smallest resource index. In other words, if there are a plurality of beams for simultaneous-reception with the beam corresponding to the eleventh CORESET (or the twelfth CORESET), the UE determines one beam from the plurality of beams, and then determines a CORESET including the beam as the thirteenth CORESET.

Optionally, if a beam corresponding to only one CORESET included in at least two CORESETs corresponding to the at least two PDCCH MOs that overlap in time domain and the beam corresponding to the eleventh CORESET (or the twelfth CORESET) are simultaneous-reception beams, the thirteenth CORESET is the CORESET. In other words, if there is only one beam for simultaneous-reception with the beam corresponding to the eleventh CORESET, the UE may determine the CORESET including the beam as the thirteenth CORESET.

Optionally, if at least two CORESETs corresponding to the at least two PDCCH MOs that overlap in time domain do not include a beam for simultaneous-reception with the beam corresponding to the eleventh CORESET (or the twelfth CORESET), it indicates that the thirteenth CORESET does not exist. In other words, if there is no beam for simultaneous-reception with the beam corresponding to the eleventh CORESET (or the twelfth CORESET), the PDCCH is monitored on the determined eleventh CORESET.

Optionally, in some feasible implementations, in addition to monitoring the PDCCH on the eleventh CORESET, the twelfth CORESET, and the thirteenth CORESET, a PDCCH may be further monitored on a twenty-first CORESET and a twenty-second CORESET. At least two CORESETs corresponding to the at least two PDCCH MOs include the twenty-first CORESET and the twenty-second CORESET, the twenty-first CORESET and the eleventh CORESET or the twelfth CORESET correspond to a same beam, and the twenty-second CORESET and the thirteenth CORESET correspond to a same beam. To be specific, after the eleventh CORESET, the twelfth CORESET, and the thirteenth CORESET are determined, the PDCCH may be monitored on the eleventh CORESET, the twelfth CORESET, and the thirteenth CORESET, the PDCCH may be monitored on one or more CORESETs (that is, the twenty-first CORESET) that have the same beam as the eleventh CORESET (or the twelfth CORESET), and the PDCCH may be monitored on one or more CORESETs (that is, the twenty-second CORESET) that have the same beam as the thirteenth CORESET.

S1504: If the tenth SS set does not include the eleventh SS set and the twelfth SS set that are configured for PDCCH repetition transmission in the frequency division multiplexing manner, and includes a fourteenth SS set that is configured for PDCCH repetition transmission in a time division multiplexing manner, monitor a PDCCH on a fourteenth CORESET and a fifteenth CORESET.

In some feasible implementations, if the tenth SS set does not include the eleventh SS set and the twelfth SS set that are configured for PDCCH repetition transmission in the frequency division multiplexing manner, and includes the fourteenth SS set that is configured for PDCCH repetition transmission in the time division multiplexing manner, the PDCCH is monitored on the fourteenth CORESET and the fifteenth CORESET. The fourteenth CORESET is associated with the fourteenth SS set, the fifteenth CORESET is associated with a fifteenth SS set, a beam corresponding to the fifteenth CORESET and a beam corresponding to the fourteenth CORESET are simultaneous-reception beams, and the at least two PDCCH MOs include a PDCCH MO corresponding to the fifteenth SS set.

To be specific, when the tenth SS set does not include the eleventh SS set and the twelfth SS set that are configured for PDCCH repetition transmission in the frequency division multiplexing manner, and includes only the fourteenth SS set that is configured for PDCCH repetition transmission in the time division multiplexing manner, the UE may further determine, based on the fourteenth CORESET associated with the fourteenth SS set, the fifteenth CORESET that has a simultaneous-reception beam relationship with the fourteenth CORESET, and then monitor the PDCCH on the fourteenth CORESET and the fifteenth CORESET.

The fourteenth SS set is an SS set included in a pair of SS sets that are determined from at least two pairs of SS sets according to a third predefined rule, and the at least two pairs of SS sets are SS sets that are configured for PDCCH repetition transmission in the time division multiplexing manner in the tenth SS set. In other words, the fourteenth SS set is an SS set included in a pair of SS sets that meet the third predefined rule in at least two pairs of SS sets configured for PDCCH repetition transmission in the time division multiplexing manner in the tenth SS set. That a pair of SS sets that meet the third predefined rule in at least two pairs of SS sets may be understood as that the at least two pairs of SS sets include/have a pair of SS sets that have a smallest search space set index or a largest search space set index. In this embodiment of this application, two SS sets (that is, a pair of SS sets) that are configured for PDCCH repetition transmission in the time division multiplexing manner may be described as two TDMed linked SS sets (that is, a pair of TDMed linked SS sets). If the tenth SS set includes a plurality of pairs of TDMed linked SS sets, the fourteenth SS set is one TDMed linked SS set included in a pair of TDMed linked SS sets selected from the plurality of pairs of TDMed linked SS sets according to the third predefined rule. Generally, two PDCCH MOs corresponding to each pair of TDMed linked SS sets in the plurality of pairs of TDMed linked SS sets do not overlap in time domain. In this embodiment of this application, the fourteenth SS set is one TDMed linked SS set in the pair of TDMed linked SS sets (that is, two TDMed linked SS sets) determined according to the third predefined rule. The TDMed linked SS set should be included in the at least two SS sets that overlap in time domain in step S1501. For ease of understanding, in this embodiment of this application, an example in which the fourteenth SS set is one TDMed linked SS set in a pair of TDMed linked SS sets (that is, two TDMed linked SS sets) including the smallest search space set index is used below for description. The fourteenth SS set should further be included in/belong to the at least two SS sets that overlap in time domain in step S1501.

For example, it is assumed that the tenth SS set includes three pairs of TDMed linked SS sets, which are respectively {SS set #1, SS set #4}, {SS set #2, SS set #5}, {SS set #3, SS set #6}. The third predefined rule is that a pair of TDMed linked SS sets including the smallest search space set index are selected from a plurality of pairs of TDMed linked SS sets. Therefore, in the foregoing three pairs of TDMed linked SS sets, a pair of TDMed linked SS sets that meet the third predefined rule is {SS set #1, SS set #3}. Because the six TDMed linked SS sets included in the three pairs of TDMed linked SS sets are sorted in ascending order of search space set indexes as follows: the SS set #1 (that is, a search space set index 1)<the SS set #2 (that is, a search space set index 2)<the SS set #3 (that is, a search space set index 3)<the SS set #4 (that is, a search space set index 4)<the SS set #5 (that is, a search space set index 5)<the SS set #6 (that is, a search space set index 6). {SS set #1, SS set #4} includes the smallest search space set index 1 (that is, the SS set #1), the tenth SS set includes the three pairs of TDMed linked SS sets, and the pair of TDMed linked SS sets that meet the third predefined rule are {SS set #1, SS set #3}. Assuming that in the determined pair of TDMed linked SS sets (that is, {SS set #1, SS set #3}), a PDCCH MO corresponding to the SS set #3 overlaps with any one of the at least two PDCCH MOs in step S1501 in time domain, the fourteenth SS set is the SS set #3.

In some feasible implementations, after the fourteenth SS set is determined, the fourteenth CORESET associated with the fourteenth SS set may be determined. Further, the UE determines another CORESET (that is, the fifteenth CORESET) that has the simultaneous-reception beam relationship with the beam corresponding to the fourteenth CORESET. Further, the UE may monitor the PDCCH on the fourteenth CORESET and the fifteenth CORESET. In other words, the beam corresponding to the fourteenth CORESET and the beam corresponding to the fifteenth CORESET are simultaneous-reception beams.

Generally, if beams corresponding to a plurality of CORESETs included in at least two CORESETs corresponding to the at least two PDCCH MOs that overlap in time domain and the beam corresponding to the fourteenth CORESET are simultaneous-reception beams, the fifteenth CORESET is one of the plurality of CORESETs. That the fifteenth CORESET is one of the plurality of CORESETs may be understood as that the fifteenth CORESET is a CORESET that meets the first predefined rule in the plurality of CORESETs. For example, the CORESET that meets the first predefined rule may be the CORESET including the smallest resource index or the largest resource index in the plurality of CORESETs. The resource index includes at least one of the following indexes: the CORESET index, the transmission configuration indication state TCI-state index, the channel state information-reference signal CSI-RS index, the synchronization signal block SSB index, and the like. This is not limited herein. For another example, the CORESET that meets the first predefined rule may alternatively be the CORESET specified in the protocol by default. This is not limited herein. For ease of description, in this embodiment of this application, the CORESET that meets the first predefined rule may be understood as the CORESET including the smallest resource index. In other words, if there are a plurality of beams for simultaneous-reception with the beam corresponding to the first CORESET, the UE determines one beam from the plurality of beams, and then determines a CORESET including the beam as the third CORESET.

Optionally, if a beam corresponding to only one CORESET included in at least two CORESETs corresponding to the at least two PDCCH MOs that overlap in time domain and the beam corresponding to the fourteenth CORESET are simultaneous-reception beams, the fifteenth CORESET is the CORESET. In other words, if there is only one beam for simultaneous-reception with the beam corresponding to the fourteenth CORESET, the UE may determine the CORESET including the beam as the fifteenth CORESET.

Optionally, if at least two CORESETs corresponding to the at least two PDCCH MOs that overlap in time domain do not include a beam for simultaneous-reception with the beam corresponding to the fourteenth CORESET, it indicates that the fifteenth CORESET does not exist. In other words, if there is no beam for simultaneous-reception with the beam corresponding to the fourteenth CORESET, the PDCCH is monitored on the determined fourteenth CORESET.

Optionally, in some feasible implementations, in addition to monitoring the PDCCH on the fourteenth CORESET and the fifteenth CORESET, a PDCCH may be further monitored on a twenty-third CORESET and a twenty-fourth CORESET. At least two CORESETs corresponding to the at least two PDCCH MOs include the twenty-third CORESET and the twenty-fourth CORESET, the twenty-third CORESET and the fourteenth CORESET correspond to a same beam, and the twenty-fourth CORESET and the fifteenth CORESET correspond to a same beam. To be specific, after the fourteenth CORESET and the fifteenth CORESET are determined, the PDCCH may be monitored on the fourteenth CORESET and the fifteenth CORESET, the PDCCH may be monitored on one or more CORESETs (that is, the twenty-third CORESET) that have the same beam as the fourteenth CORESET, and the PDCCH may be monitored on one or more CORESETs (that is, the twenty-fourth CORESET) that have the same beam as the fifteenth CORESET.

S1505: If the tenth SS set does not include the eleventh SS set and the twelfth SS set that are configured for PDCCH repetition transmission in the frequency division multiplexing manner, and includes a sixteenth SS set that is configured for PDCCH independent transmission, monitor a PDCCH on a sixteenth CORESET and a seventeenth CORESET.

In some feasible implementations, if the tenth SS set does not include the eleventh SS set and the twelfth SS set that are configured for PDCCH repetition transmission in the frequency division multiplexing manner, and includes the sixteenth SS set that is configured for PDCCH independent transmission, the PDCCH is monitored on the sixteenth CORESET and the seventeenth CORESET. The sixteenth CORESET is associated with the sixteenth SS set, the seventeenth CORESET is associated with a seventeenth SS set, a beam corresponding to the seventeenth CORESET and a beam corresponding to the sixteenth CORESET are simultaneous-reception beams, and the at least two PDCCH MOs include a PDCCH MO corresponding to the seventeenth SS set.

To be specific, when the tenth SS set does not include the eleventh SS set and the twelfth SS set that are configured for PDCCH repetition transmission in the frequency division multiplexing manner, and includes only the sixteenth SS set that is configured for PDCCH independent transmission, the UE may further determine, based on the sixteenth CORESET associated with the sixteenth SS set, the seventeenth CORESET that has a simultaneous-reception beam relationship with the sixteenth CORESET, and then monitor the PDCCH on the sixteenth CORESET and the seventeenth CORESET.

The sixteenth SS set is an SS set that meets a fourth predefined rule in at least two SS sets configured for PDCCH independent transmission in the tenth SS set. In this embodiment of this application, the SS set configured for PDCCH independent transmission may be described as an individual SS set. In other words, the sixteenth SS set is an SS set that meets the fourth predefined rule in a plurality of individual SS sets included in the tenth SS set. The SS set that meets the fourth predefined rule may be understood as an SS set corresponding to a smallest search space set index or a largest search space set index. For ease of understanding, in this embodiment of this application, an example in which the SS set corresponding to the smallest search space set index is determined as the sixteenth SS set according to the fourth predefined rule is used below for description.

For example, it is assumed that the tenth SS set includes four individual SS sets, which are respectively an SS set #1, an SS set #2, an SS set #3, and an SS set #4. Therefore, according to the fourth predefined rule, it may be determined that the sixteenth SS set is the SS set #1. Because the four individual SS sets are sorted in ascending order of search space set indexes as follows: the SS set #1 (that is, a search space set index 1)<the SS set #2 (that is, a search space set index 2)<the SS set #3 (that is, a search space set index 3)<the SS set #4 (that is, a search space set index 4), one SS set (that is, the SS set #1) corresponding to the smallest search space set index may be determined as the sixteenth SS set.

In some feasible implementations, after the sixteenth SS set is determined, the sixteenth CORESET associated with the sixteenth SS set may be determined. Further, the UE determines another CORESET (that is, the seventeenth CORESET) that has the simultaneous-reception beam relationship with the beam corresponding to the sixteenth CORESET. Further, the UE may monitor the PDCCH on the sixteenth CORESET and the seventeenth CORESET. In other words, the beam corresponding to the sixteenth CORESET and the beam corresponding to the seventeenth CORESET are simultaneous-reception beams.

Generally, if beams corresponding to a plurality of CORESETs included in at least two CORESETs corresponding to the at least two PDCCH MOs that overlap in time domain and the beam corresponding to the sixteenth CORESET are simultaneous-reception beams, the seventeenth CORESET is one of the plurality of CORESETs. That the seventeenth CORESET is one of the plurality of CORESETs may be understood as that the seventeenth CORESET is a CORESET that meets the first predefined rule in the plurality of CORESETs. For example, the CORESET that meets the first predefined rule may be the CORESET including the smallest resource index or the largest resource index in the plurality of CORESETs. The resource index includes at least one of the following indexes: the CORESET index, the transmission configuration indication state TCI-state index, the channel state information-reference signal CSI-RS index, the synchronization signal block SSB index, and the like. This is not limited herein. For another example, the CORESET that meets the first predefined rule may alternatively be the CORESET specified in the protocol by default. This is not limited herein. For ease of description, in this embodiment of this application, the CORESET that meets the first predefined rule may be understood as the CORESET including the smallest resource index. In other words, if there are a plurality of beams for simultaneous-reception with the beam corresponding to the first CORESET, the UE determines one beam from the plurality of beams, and then determines a CORESET including the beam as the third CORESET.

Optionally, if a beam corresponding to only one CORESET included in at least two CORESETs corresponding to the at least two PDCCH MOs that overlap in time domain and the beam corresponding to the sixteenth CORESET are simultaneous-reception beams, the seventeenth CORESET is the CORESET. In other words, if there is only one beam for simultaneous-reception with the beam corresponding to the sixteenth CORESET, the UE may determine the CORESET including the beam as the seventeenth CORESET.

Optionally, if at least two CORESETs corresponding to the at least two PDCCH MOs that overlap in time domain do not include a beam for simultaneous-reception with the beam corresponding to the sixteenth CORESET, it indicates that the seventeenth CORESET does not exist. In other words, if there is no beam for simultaneous-reception with the beam corresponding to the sixteenth CORESET, the PDCCH is monitored on the determined sixteenth CORESET.

Optionally, in some feasible implementations, in addition to monitoring the PDCCH on the sixteenth CORESET and the seventeenth CORESET, a PDCCH may be further monitored on a twenty-fifth CORESET and a twenty-sixth CORESET. At least two CORESETs corresponding to the at least two PDCCH MOs include the twenty-fifth CORESET and the twenty-sixth CORESET, the twenty-fifth CORESET and the sixteenth CORESET correspond to a same beam, and the twenty-sixth CORESET and the seventeenth CORESET correspond to a same beam. To be specific, after the sixteenth CORESET and the seventeenth CORESET are determined, the PDCCH may be monitored on the sixteenth CORESET and the seventeenth CORESET, the PDCCH may be monitored on one or more CORESETs (that is, the twenty-fifth CORESET) that have the same beam as the sixteenth CORESET, and the PDCCH may be monitored on one or more CORESETs (that is, the twenty-sixth CORESET) that have the same beam as the seventeenth CORESET.

S1506: If the tenth SS set does not include the eleventh SS set and the twelfth SS set that are configured for PDCCH repetition transmission in the frequency division multiplexing manner, and includes the fourteenth SS set that is configured for PDCCH repetition transmission in the time division multiplexing manner and the sixteenth SS set that is configured for PDCCH independent transmission, when the fourteenth CORESET and the sixteenth CORESET correspond to different beams, and a beam corresponding to the fourteenth CORESET and a beam corresponding to the sixteenth CORESET are simultaneous-reception beams, monitor a PDCCH on the fourteenth CORESET and the sixteenth CORESET.

In some feasible implementations, if the tenth SS set does not include the eleventh SS set and the twelfth SS set that are configured for PDCCH repetition transmission in the frequency division multiplexing manner, and includes the fourteenth SS set that is configured for PDCCH repetition transmission in the time division multiplexing manner and the sixteenth SS set that is configured for PDCCH independent transmission, when the fourteenth CORESET and the sixteenth CORESET correspond to the different beams, and the beam corresponding to the fourteenth CORESET and the beam corresponding to the sixteenth CORESET are the simultaneous-reception beams, the PDCCH is monitored on the fourteenth CORESET and the sixteenth CORESET. The fourteenth CORESET is associated with the fourteenth SS set, and the sixteenth CORESET is associated with the sixteenth SS set.

To be specific, when the tenth SS set does not include the eleventh SS set and the twelfth SS set that are configured for PDCCH repetition transmission in the frequency division multiplexing manner, and includes both the fourteenth SS set and the sixteenth SS set, if the fourteenth CORESET associated with the fourteenth SS set and the sixteenth CORESET associated with the sixteenth SS set correspond to the different beams, and the beam corresponding to the fourteenth CORESET and the beam corresponding to the sixteenth CORESET are the simultaneous-reception beams, the PDCCH may be monitored on the fourteenth CORESET and the sixteenth CORESET.

The fourteenth SS set is an SS set included in a pair of SS sets that are determined from at least two pairs of SS sets according to a third predefined rule, and the at least two pairs of SS sets are SS sets that are configured for PDCCH repetition transmission in the time division multiplexing manner in the tenth SS set. In other words, the fourteenth SS set is an SS set included in a pair of SS sets that meet the third predefined rule in at least two pairs of SS sets configured for PDCCH repetition transmission in the time division multiplexing manner in the tenth SS set. That a pair of SS sets that meet the third predefined rule in at least two pairs of SS sets may be understood as that the at least two pairs of SS sets include/have a pair of SS sets that have a smallest search space set index or a largest search space set index. In this embodiment of this application, two SS sets (that is, a pair of SS sets) that are configured for PDCCH repetition transmission in the time division multiplexing manner may be described as two TDMed linked SS sets (that is, a pair of TDMed linked SS sets). If the tenth SS set includes a plurality of pairs of TDMed linked SS sets, the fourteenth SS set is one TDMed linked SS set included in a pair of TDMed linked SS sets selected from the plurality of pairs of TDMed linked SS sets according to the third predefined rule. Generally, two PDCCH MOs corresponding to the pair of TDMed linked SS sets selected according to the third predefined rule usually do not overlap in time domain. However, a PDCCH MO corresponding to one TDMed linked SS set in the pair of TDMed linked SS sets may overlap with one or more PDCCH MOs in step S1501 in time domain. Therefore, the fourteenth SS set is one TDMed linked SS set that overlaps with the PDCCH MO in step S 1501 in time domain in the pair of TDMed linked SS sets (that is, the two TDMed linked SS sets) determined according to the third predefined rule.

The sixteenth SS set is an SS set that meets the fourth predefined rule in the at least two SS sets configured for PDCCH independent transmission in the tenth SS set. In this embodiment of this application, the SS set configured for PDCCH independent transmission may be described as the individual SS set. In other words, the sixteenth SS set is the SS set that meets the fourth predefined rule in the plurality of individual SS sets included in the tenth SS set. The SS set that meets the fourth predefined rule may be understood as the SS set corresponding to the smallest search space set index or the largest search space set index. For ease of understanding, in this embodiment of this application, an example in which the SS set corresponding to the smallest search space set index is determined as the sixteenth SS set according to the fourth predefined rule is used below for description.

Optionally, in some feasible implementations, in addition to monitoring the PDCCH on the fourteenth CORESET and the sixteenth CORESET, the PDCCH may be further monitored on the twenty-third CORESET and the twenty-fifth CORESET. At least two CORESETs corresponding to the at least two PDCCH MOs include the twenty-third CORESET and the twenty-fifth CORESET, the twenty-third CORESET and the fourteenth CORESET correspond to a same beam, and the twenty-fifth CORESET and the sixteenth CORESET correspond to a same beam. To be specific, after the fourteenth CORESET and the sixteenth CORESET are determined, the PDCCH may be monitored on the fourteenth CORESET and the sixteenth CORESET, the PDCCH may be monitored on one or more CORESETs (that is, the twenty-third CORESET) that have the same beam as the fourteenth CORESET, and the PDCCH may be monitored on one or more CORESETs (that is, the twenty-fifth CORESET) that have the same beam as the sixteenth CORESET.

S1507: If the tenth SS set does not include the eleventh SS set and the twelfth SS set that are configured for PDCCH repetition transmission in the frequency division multiplexing manner, and includes the fourteenth SS set that is configured for PDCCH repetition transmission in the time division multiplexing manner and the sixteenth SS set that is configured for PDCCH independent transmission, when the fourteenth CORESET and the sixteenth CORESET correspond to different beams, and a beam corresponding to the fourteenth CORESET and a beam corresponding to the sixteenth CORESET are non-simultaneous-reception beams, monitor a PDCCH on the fourteenth CORESET and the fifteenth CORESET; or monitor a PDCCH on the sixteenth CORESET and the seventeenth CORESET.

In some feasible implementations, if the tenth SS set does not include the eleventh SS set and the twelfth SS set that are configured for PDCCH repetition transmission in the frequency division multiplexing manner, and includes the fourteenth SS set that is configured for PDCCH repetition transmission in the time division multiplexing manner and the sixteenth SS set that is configured for PDCCH independent transmission, when the fourteenth CORESET and the sixteenth CORESET correspond to different beams, and the beam corresponding to the fourteenth CORESET and the beam corresponding to the sixteenth CORESET are the non-simultaneous-reception beams, the PDCCH is monitored on the fourteenth CORESET and the fifteenth CORESET; or the PDCCH is monitored on the sixteenth CORESET and the seventeenth CORESET. The fourteenth CORESET is associated with the fourteenth SS set, the fifteenth CORESET is associated with the fifteenth SS set, the sixteenth CORESET is associated with the sixteenth SS set, the seventeenth CORESET is associated with the seventeenth SS set, the beam corresponding to the fifteenth CORESET and the beam corresponding to the fourteenth CORESET are simultaneous-reception beams, the beam corresponding to the seventeenth CORESET and the beam corresponding to the sixteenth CORESET are simultaneous-reception beams, the at least two PDCCH MOs include the PDCCH MO corresponding to the fifteenth SS set, and the at least two PDCCH MOs include the PDCCH MO corresponding to the seventeenth SS set.

To be specific, when the tenth SS set does not include the eleventh SS set and the twelfth SS set that are configured for PDCCH repetition transmission in the frequency division multiplexing manner, and includes both the fourteenth SS set and the sixteenth SS set, if the fourteenth CORESET associated with the fourteenth SS set and the sixteenth CORESET associated with the sixteenth SS set correspond to the different beams, and the beam corresponding to the fourteenth CORESET and the beam corresponding to the sixteenth CORESET are the non-simultaneous-reception beams, the UE may determine one CORESET from the fourteenth CORESET and the sixteenth CORESET according to a fifth predefined rule, and further determine another CORESET that has a simultaneous-reception beam relationship with the CORESET, to monitor the PDCCH on the two CORESETs. For example, assuming that the CORESET determined according to the fifth predefined rule is the fourteenth CORESET, the UE may further determine another CORESET (that is, the fifteenth CORESET) that has a simultaneous-reception beam relationship with the fourteenth CORESET, and then monitor the PDCCH on the fourteenth CORESET and the fifteenth CORESET. For another example, assuming that the CORESET determined according to the fifth predefined rule is the sixteenth CORESET, the UE may further determine another CORESET (that is, the seventeenth CORESET) that has a simultaneous-reception beam relationship with the sixteenth CORESET, and then monitor the PDCCH on the sixteenth CORESET and the seventeenth CORESET. The fifth predefined rule may be a smallest resource index in the fourteenth CORESET and the sixteenth CORESET, or the fifth predefined rule may be a largest resource index in the fourteenth CORESET and the sixteenth CORESET, or the like. This is not limited herein. The resource index includes at least one of the following indexes: the CORESET index, the transmission configuration indication state TCI-state index, the channel state information-reference signal CSI-RS index, the synchronization signal block SSB index, and the like. This is not limited herein.

The fourteenth SS set is an SS set included in a pair of SS sets that are determined from at least two pairs of SS sets according to the third predefined rule, and the at least two pairs of SS sets are SS sets that are configured for PDCCH repetition transmission in the time division multiplexing manner in the tenth SS set. In other words, the fourteenth SS set is an SS set included in a pair of SS sets that meet the third predefined rule in at least two pairs of SS sets configured for PDCCH repetition transmission in the time division multiplexing manner in the tenth SS set. That a pair of SS sets that meet the third predefined rule in at least two pairs of SS sets may be understood as that the at least two pairs of SS sets include/have a pair of SS sets that have a smallest search space set index or a largest search space set index. In this embodiment of this application, two SS sets (that is, a pair of SS sets) that are configured for PDCCH repetition transmission in the time division multiplexing manner may be described as two TDMed linked SS sets (that is, a pair of TDMed linked SS sets). If the tenth SS set includes a plurality of pairs of TDMed linked SS sets, the fourteenth SS set is one TDMed linked SS set included in a pair of TDMed linked SS sets selected from the plurality of pairs of TDMed linked SS sets according to the third predefined rule. Generally, two PDCCH MOs corresponding to each pair of TDMed linked SS sets in the plurality of pairs of TDMed linked SS sets do not overlap in time domain. In this embodiment of this application, the fourteenth SS set is one TDMed linked SS set in the pair of TDMed linked SS sets (that is, two TDMed linked SS sets) determined according to the third predefined rule. The TDMed linked SS set should be included in the at least two SS sets that overlap in time domain in step S1501. For ease of understanding, in this embodiment of this application, an example in which the fourteenth SS set is one TDMed linked SS set in a pair of TDMed linked SS sets (that is, two TDMed linked SS sets) including the smallest search space set index is used below for description. The fourteenth SS set should further be included in/belong to the at least two SS sets that overlap in time domain in step S1501.

The sixteenth SS set is an SS set that meets a fourth predefined rule in at least two SS sets configured for PDCCH independent transmission in the tenth SS set. In this embodiment of this application, the SS set configured for PDCCH independent transmission may be described as the individual SS set. In other words, the sixteenth SS set is the SS set that meets the fourth predefined rule in the plurality of individual SS sets included in the tenth SS set. The SS set that meets the fourth predefined rule may be understood as the SS set corresponding to the smallest search space set index or the largest search space set index. For ease of understanding, in this embodiment of this application, an example in which the SS set corresponding to the smallest search space set index is determined as the sixteenth SS set according to the fourth predefined rule is used below for description.

Optionally, in some feasible implementations, assuming that the CORESET determined according to the fifth predefined rule is the fourteenth CORESET, in addition to monitoring the PDCCH on the fourteenth CORESET and the fifteenth CORESET that has the simultaneous-reception beam relationship with the fourteenth CORESET, the PDCCH may be further monitored on the twenty-third CORESET and the twenty-fourth CORESET. The at least two CORESETs corresponding to the at least two PDCCH MOs include the twenty-third CORESET and the twenty-fourth CORESET, the twenty-third CORESET and the fourteenth CORESET correspond to the same beam, and the twenty-fourth CORESET and the fifteenth CORESET correspond to the same beam. To be specific, after the fourteenth CORESET and the fifteenth CORESET are determined, the PDCCH may be monitored on the fourteenth CORESET and the fifteenth CORESET, the PDCCH may be monitored on one or more CORESETs (that is, the twenty-third CORESET) that have the same beam as the fourteenth CORESET, and the PDCCH may be monitored on one or more CORESETs (that is, the twenty-fourth CORESET) that have the same beam as the fifteenth CORESET.

Optionally, in some feasible implementations, assuming that the CORESET determined according to the fifth predefined rule is the sixteenth CORESET, in addition to monitoring the PDCCH on the sixteenth CORESET and the seventeenth CORESET that has the simultaneous-reception beam relationship with the sixteenth CORESET, the PDCCH may be further monitored on the twenty-fifth CORESET and the twenty-sixth CORESET. The at least two CORESETs corresponding to the at least two PDCCH MOs include the twenty-fifth CORESET and the twenty-sixth CORESET, the twenty-fifth CORESET and the sixteenth CORESET correspond to the same beam, and the twenty-sixth CORESET and the seventeenth CORESET correspond to the same beam. To be specific, after the sixteenth CORESET and the seventeenth CORESET are determined, the PDCCH may be monitored on the sixteenth CORESET and the seventeenth CORESET, the PDCCH may be monitored on one or more CORESETs (that is, the twenty-fifth CORESET) that have the same beam as the sixteenth CORESET, and the PDCCH may be monitored on one or more CORESETs (that is, the twenty-sixth CORESET) that have the same beam as the seventeenth CORESET.

S1508: If the tenth SS set does not include the eleventh SS set and the twelfth SS set that are configured for PDCCH repetition transmission in the frequency division multiplexing manner, and includes the fourteenth SS set that is configured for PDCCH repetition transmission in the time division multiplexing manner and the sixteenth SS set that is configured for PDCCH independent transmission, when the fourteenth CORESET and the sixteenth CORESET correspond to a same beam, monitor a PDCCH on the fourteenth CORESET, the sixteenth CORESET, and an eighteenth CORESET.

In some feasible implementations, if the tenth SS set does not include the eleventh SS set and the twelfth SS set that are configured for PDCCH repetition transmission in the frequency division multiplexing manner, and includes the fourteenth SS set that is configured for PDCCH repetition transmission in the time division multiplexing manner and the sixteenth SS set that is configured for PDCCH independent transmission, when the fourteenth CORESET and the sixteenth CORESET correspond to the same beam, the PDCCH is monitored on the fourteenth CORESET, the sixteenth CORESET, and the eighteenth CORESET. The fourteenth CORESET is associated with the fourteenth SS set, the sixteenth CORESET is associated with the sixteenth SS set, the eighteenth CORESET is associated with an eighteenth SS set, a beam corresponding to the eighteenth CORESET and the beam corresponding to the twelfth CORESET or the sixteenth CORESET are simultaneous-reception beams, and the at least two PDCCH MOs include a PDCCH MO corresponding to the eighteenth SS set.

To be specific, when the tenth SS set does not include the eleventh SS set and the twelfth SS set that are configured for PDCCH repetition transmission in the frequency division multiplexing manner, and includes both the fourteenth SS set and the sixteenth SS set, if the fourteenth CORESET associated with the fourteenth SS set and the sixteenth CORESET associated with the sixteenth SS set correspond to the same beam, the UE may further determine the eighteenth CORESET that has the simultaneous-reception beam relationship with the fourteenth CORESET or the sixteenth CORESET, and then monitor the PDCCH on the fourteenth CORESET, the sixteenth CORESET, and the eighteenth CORESET.

The fourteenth SS set is an SS set included in a pair of SS sets that are determined from at least two pairs of SS sets according to the third predefined rule, and the at least two pairs of SS sets are SS sets that are configured for PDCCH repetition transmission in the time division multiplexing manner in the tenth SS set. In other words, the fourteenth SS set is an SS set included in a pair of SS sets that meet the third predefined rule in at least two pairs of SS sets configured for PDCCH repetition transmission in the time division multiplexing manner in the tenth SS set. That a pair of SS sets that meet the third predefined rule in at least two pairs of SS sets may be understood as that the at least two pairs of SS sets include/have a pair of SS sets that have a smallest search space set index or a largest search space set index. In this embodiment of this application, two SS sets (that is, a pair of SS sets) that are configured for PDCCH repetition transmission in the time division multiplexing manner may be described as two TDMed linked SS sets (that is, a pair of TDMed linked SS sets). If the tenth SS set includes a plurality of pairs of TDMed linked SS sets, the fourteenth SS set is one TDMed linked SS set included in a pair of TDMed linked SS sets selected from the plurality of pairs of TDMed linked SS sets according to the third predefined rule. Generally, two PDCCH MOs corresponding to each pair of TDMed linked SS sets in the plurality of pairs of TDMed linked SS sets do not overlap in time domain. In this embodiment of this application, the fourteenth SS set is one TDMed linked SS set in the pair of TDMed linked SS sets (that is, two TDMed linked SS sets) determined according to the third predefined rule. The TDMed linked SS set should be included in the at least two SS sets that overlap in time domain in step S1501. For ease of understanding, in this embodiment of this application, an example in which the fourteenth SS set is one TDMed linked SS set in a pair of TDMed linked SS sets (that is, two TDMed linked SS sets) including the smallest search space set index is used below for description. The fourteenth SS set should further be included in/belong to the at least two SS sets that overlap in time domain in step S1501.

The sixteenth SS set is an SS set that meets the fourth predefined rule in at least two SS sets configured for PDCCH independent transmission in the tenth SS set. In this embodiment of this application, the SS set configured for PDCCH independent transmission may be described as the individual SS set. In other words, the sixteenth SS set is the SS set that meets the fourth predefined rule in the plurality of individual SS sets included in the tenth SS set. The SS set that meets the fourth predefined rule may be understood as the SS set corresponding to the smallest search space set index or the largest search space set index. For ease of understanding, in this embodiment of this application, an example in which the SS set corresponding to the smallest search space set index is determined as the sixteenth SS set according to the fourth predefined rule is used below for description.

Optionally, in some feasible implementations, in addition to monitoring the PDCCH on the fourteenth CORESET, the sixteenth CORESET, and the eighteenth CORESET, a PDCCH may be further monitored on a twenty-seventh CORESET and a twenty-eighth CORESET. At least two CORESETs corresponding to the at least two PDCCH MOs include the twenty-seventh CORESET and the twenty-eighth CORESET, the twenty-seventh CORESET and the fourteenth CORESET or the sixteenth CORESET correspond to a same beam, and the twenty-eighth CORESET and the eighteenth CORESET correspond to a same beam. To be specific, after the fourteenth CORESET, the sixteenth CORESET, and the eighteenth CORESET are determined, the PDCCH may be monitored on the fourteenth CORESET, the sixteenth CORESET, and the eighteenth CORESET, the PDCCH may be monitored on one or more CORESETs (that is, the twenty-seventh CORESET) that have the same beam as the fourteenth CORESET (or the sixteenth CORESET), and the PDCCH may be monitored on one or more CORESETs (that is, the twenty-eighth CORESET) that have the same beam as the eighteenth CORESET.

In this embodiment of this application, a new priority rule is defined, and the UE performs control resource conflict resolution according to the new priority rule. Specifically, when a plurality of PDCCH MOs overlap in time domain and there are a plurality of beams, for UE that supports simultaneous reception of two different beams, the UE first determines the first cell with the smallest cell index in serving cells including a CSS, or the UE first determines the first cell with the smallest cell index in serving cells including only a USS. This step is the same as the first step in the conventional technology. After the first cell is determined, an SS set or a pair of linked SS sets are determined according to the following predefined priority rule from SS sets configured for the first cell. The predefined priority rule is as follows: linked CSS set>individual CSS set>linked USS set>individual USS set. The linked CSS set represents a common search space set configured for PDCCH repetition transmission. Because the linked CSS set is configured for PDCCH repetition transmission, search space sets of this type appear in pair, and a pair of search space sets have an association relationship (linkage). The individual CSS set represents a common search space set configured for PDCCH independent transmission. Because the individual CSS set is configured for PDCCH independent transmission, a search space set of this type appears independently, and has no association relationship with another search space set. The linked USS set and the individual USS set are similar. Two factors are considered in the predefined priority rule. First, in the conventional technology, a priority of a CSS is higher than that of a USS because the CSS may include common information such as a system message, a paging message, and a random access message, and once the common information is not received, the UE may be affected and cannot normally access a cell. Second, an objective of introducing PDCCH repetition transmission is to enhance robustness of control channel transmission. Therefore, a priority of a pair of SS sets having an association relationship is higher than that of an SS set for independent transmission.

The priorities may be further subdivided into: FDMed linked CSS set>TDMed linked CSS set/individual CSS set>FDMed linked USS set>TDMed linked USS set/individual USS set. The FDMed linked CSS set represents a frequency division multiplexed linked CSS set, and a priority of the FDMed linked CSS set is higher than that of a time division multiplexed linked CSS set (that is, the TDMed linked CSS set) or higher than that of a CSS set for independent transmission (that is, the individual CSS set). This is because if the FDMed linked CSS set is sent through different beams, a proper case is that the base station uses simultaneous-reception beams to enable the UE to receive, at the same time, a pair of linked SS sets sent in the frequency division multiplexing manner. In this way, robustness of PDCCH transmission can be improved. The TDMed linked CSS set and the individual CSS set have a same priority. In addition, a priority of the CSS set is higher than that of the USS set.
(1) If the UE may determine, based on the foregoing priorities (that is, FDMed linked CSS set>TDMed linked CSS set/individual CSS set>FDMed linked USS set>TDMed linked USS set/individual USS set), a pair of FDMed linked CSS sets from a tenth SS set configured for an eleventh cell, the UE may further determine two beams based on the pair of FDMed linked CSS sets. If a plurality of pairs of FDMed linked CSS sets may be determined from the tenth SS set configured for the eleventh cell, a pair of FDMed linked CSS sets including a smallest CSS index may be selected from the plurality of pairs of FDMed linked CSS sets. For ease of description, it is considered that the pair of FDMed linked CSS sets include the eleventh SS set and the twelfth SS set. The eleventh SS set is associated with the eleventh CORESET, and the twelfth SS set is associated with the twelfth CORESET.
   a. If the determined pair of FDMed linked CSS sets use different beams, that is, the eleventh CORESET and the twelfth CORESET correspond to different beams, the UE may determine two beams. Further, one or more CORESETs having the same beam as the two beams are determined, and the UE monitors a PDCCH on these CORESETs.
   b. If the determined pair of FDMed linked CSS sets use a same beam, that is, the eleventh CORESET and the twelfth CORESET correspond to a same beam, the UE further determines a beam for simultaneous-reception with the beam.

   i. If there is one beam for simultaneous-reception with the beam, the UE may determine two beams, where one beam is a beam used by the eleventh CORESET and the twelfth CORESET, and the other beam is a beam determined based on the simultaneous-reception beam. Further, one or more CORESETs having the same beam as the two beams are determined, and the UE monitors a PDCCH on these CORESETs.
   ii. If there are a plurality of beams for simultaneous-reception with the beam, the UE determines one beam from the plurality of beams according to an eleventh predefined rule. In this way, the UE may determine two beams, where one beam is a beam used by the eleventh CORESET and the twelfth CORESET, and the other beam is determined according to the eleventh predefined rule. Further, the UE determines one or more CORESETs having the same beam as the two beams, and the UE monitors a PDCCH on these CORESETs. The eleventh predefined rule may be a smallest resource index in the simultaneous-reception beams.
   iii. If there is no beam for simultaneous-reception with the beam, the UE determines one or more CORESETs having the same beam as the eleventh CORESET and the twelfth CORESET, and the UE monitors a PDCCH on these CORESETs.
(2) If the UE may determine one or more pairs of TDMed linked CSS sets and/or one or more individual CSS sets based on the foregoing priorities, refer to the following descriptions.
   a. If the UE may determine a pair of TDMed linked CSS sets or an individual CSS set based on the foregoing priorities, the UE determines a beam based on a CORESET (that is, the fourteenth CORESET) associated with an SS set of the TDMed linked CSS set in a "conflicting resource", or determines a beam based on a CORESET (that is, the sixteenth CORESET) associated with the individual CSS set. Then, the UE determines a beam for simultaneous-reception with the beam (that is, the fourteenth CORESET or the sixteenth CORESET). Steps are the same as those in (bi), (bii) and (biii).
   b. If the UE determines a plurality of pairs of TDMed linked CSS sets or a plurality of individual CSS sets, the UE needs to first determine a TDMed linked CSS set or an individual CSS set including a smallest CSS index in a "conflicting resource". Further, the UE determines a beam based on a CORESET (that is, the fourteenth CORESET) associated with an SS set of the TDMed linked CSS set in the "conflicting resource", or determines a beam based on a CORESET (that is, the sixteenth CORESET) associated with the individual CSS set. Then, the UE determines a beam for simultaneous-reception with the beam (that is, the fourteenth CORESET or the sixteenth CORESET). Steps are the same as those in (bi), (bii) and (biii).
   c. If the UE may determine a pair of TDMed linked CSS sets and an individual CSS set based on the foregoing priorities, the UE may determine a beam based on a CORESET (that is, the fourteenth CORESET) associated with an SS set of the TDMed linked CSS set in a "conflicting resource", and determine another beam based on a CORESET (that is, the sixteenth CORESET) associated with the individual CSS set, to obtain two beams (that is, the fourteenth CORESET and the sixteenth CORESET).
      i. If the determined two beams (that is, the fourteenth CORESET and the sixteenth CORESET) are different beams, and the two beams are simultaneous-reception beam, the UE may determine the two beams, where one beam is a beam used by the CORESET associated with the SS set of the TDMed linked CSS set in the "conflicting resource", and the other beam is a beam used by the CORESET associated with the individual CSS set. Further, one or more CORESETs having the same beam as the two beams are determined, and the UE monitors a PDCCH on these CORESETs.
      ii. If the determined two beams (that is, the fourteenth CORESET and the sixteenth CORESET) are different beams, and the two beams are non-simultaneous-reception beams, the UE needs to determine one beam from the two beams according to the fifth predefined rule, and then the UE determines a beam for simultaneous-reception with the beam (that is, the fourteenth CORESET or the sixteenth CORESET). Steps are the same as those in (bi), (bii) and (biii).
      iii. If the determined two beams (that is, the fourteenth CORESET and the sixteenth CORESET) are a same beam, the UE further determines a beam for simultaneous-reception with the beam (that is, the fourteenth CORESET and the sixteenth CORESET). Steps are the same as those in (bi), (bii) and (biii).
   d. If the UE determines a plurality of pairs of TDMed linked CSS sets or a plurality of individual CSS sets, the UE needs to first determine a TDMed linked CSS set or an individual CSS set including a smallest CSS index in a "conflicting resource". Further, the UE determines a beam based on a CORESET (that is, the fourteenth CORESET) associated with an SS set of the TDMed linked CSS set in the "conflicting resource", or determines a beam based on a CORESET (that is, the sixteenth CORESET) associated with the individual CSS set. Then, the UE determines a beam for simultaneous-reception with the beam (that is, the fourteenth CORESET or the sixteenth CORESET). Steps are the same as those in (bi), (bii) and (biii).
   e. If the UE determines a plurality of pairs of TDMed linked CSS sets and a plurality of individual CSS sets, the UE needs to first determine a TDMed linked CSS set and an individual CSS set including a smallest CSS index in a "conflicting resource". Further, the UE determines a beam based on a CORESET associated with an SS set of the TDMed linked CSS set in the "conflicting resource", determines another beam based on a CORESET associated with the individual CSS set, to determine the two beams, and performs the foregoing steps (ci), (cii), and (ciii) again.
(3) If only a USS exists in a conflicting resource, the CSS in the foregoing steps (1) and (2) is replaced with the USS.

Optionally, in some feasible implementations, the priorities may be further subdivided into: FDMed linked CSS set>TDMed linked CSS set>individual CSS set>FDMed linked USS set>TDMed linked USS set>individual USS set; or FDMed linked CSS set>individual CSS set>TDMed linked CSS set>FDMed linked USS set>individual USS set>TDMed linked USS set. The FDMed linked CSS set represents the frequency division multiplexed linked CSS set, and the priority of the FDMed linked CSS set is higher than that of the time division multiplexed linked CSS set (that is, the TDMed linked CSS set), and the priority of the TDMed linked CSS set is higher than that of the CSS set for independent transmission (that is, the individual CSS set).. The priority of the CSS set is higher than that of the USS set. To be specific, for the CSS, when the determined "conflicting resource" includes the TDMed linked CSS set and the individual CSS set, the priority rule may be further defined as that the priority of the TDMed linked CSS set is higher than that of the individual CSS set, or may be defined as that the priority of the individual CSS set is higher than that of the TDMed linked CSS set. Correspondingly, for the USS, when the determined "conflicting resource" includes the TDMed linked USS set and the individual USS set, the priority rule may be further defined as that the priority of the TDMed linked USS set is higher than that of the individual USS set, or may be defined as that the priority of the individual USS set is higher than that of the TDMed linked USS set.

Specifically, the CSS is used as an example. When a time domain resource of a CSS with later start time in a pair of TDMed linked CSS sets configured for PDCCH repetition transmission in the time division multiplexing manner overlaps with a time domain resource of an individual CSS set, if the terminal device does not monitor a CSS set with earlier start time in the TDMed linked CSS sets because a time domain resource of the CSS set with the earlier start time overlaps with another SS set or because of another reason, a priority of the individual CSS set is higher than a priority of the CSS set with the later start time in the TDMed linked CSS sets. On the contrary, when a time domain resource of a CSS set with later start time in a pair of TDMed linked CSS sets configured for PDCCH repetition transmission in the time division multiplexing manner overlaps with a time domain resource of an individual CSS set, if the terminal device monitors a CSS set with earlier start time in the TDMed linked CSS sets, a priority of the CSS set with the later start time in the TDMed linked CSS sets is higher than a priority of the individual CSS set.

Correspondingly, for the base station, when the at least two physical downlink control channel monitoring occasions PDCCH MOs overlap in time domain, the base station determines the first cell, where the at least two PDCCH MOs are associated with the at least two search space sets SS sets. Then, the base station determines, from the tenth CORESET configured for the first cell, two CORESETs corresponding to different beams. Specifically, the following several cases are included:
① If the tenth SS set configured for the first cell includes the eleventh SS set and the twelfth SS set that are configured for PDCCH repetition transmission in the frequency division multiplexing manner, and the eleventh CORESET associated with the eleventh control resource set SS set and the twelfth CORESET associated with the twelfth SS set correspond to the different beams, the base station determines the eleventh CORESET and the twelfth CORESET. The at least two SS sets include the tenth SS set.
   Optionally, the base station may further determine the nineteenth CORESET and the twentieth CORESET, the nineteenth CORESET and the eleventh CORESET correspond to the same beam, and the twentieth CORESET and the twelfth CORESET correspond to the same beam.
② If the tenth SS set includes the eleventh SS set and the twelfth SS set that are configured for PDCCH repetition transmission in the frequency division multiplexing manner, and the eleventh CORESET and the twelfth CORESET correspond to the same beam, the eleventh CORESET, the twelfth CORESET, and the thirteenth CORESET are determined. The beam corresponding to the thirteenth CORESET and the beam corresponding to the eleventh CORESET or the twelfth CORESET are the simultaneous-reception beams, the thirteenth CORESET is associated with the thirteenth SS set, and the at least two PDCCH MOs include the PDCCH MO corresponding to the thirteenth SS set.
   Optionally, the base station may further determine the twenty-first CORESET and the twenty-second CORESET, the twenty-first CORESET and the eleventh CORESET or the twelfth CORESET correspond to the same beam, and the twenty-second CORESET and the thirteenth CORESET correspond to the same beam.
**③** If the tenth SS set does not include the eleventh SS set and the twelfth SS set that are configured for PDCCH repetition transmission in the frequency division multiplexing manner, and includes the fourteenth SS set that is configured for PDCCH repetition transmission in the time division multiplexing manner, the fourteenth CORESET and the fifteenth CORESET are determined. The fourteenth CORESET is associated with the fourteenth SS set, the fifteenth CORESET is associated with the fifteenth SS set, the beam corresponding to the fifteenth CORESET and the beam corresponding to the fourteenth CORESET are the simultaneous-reception beams, and the at least two PDCCH MOs include the PDCCH MO corresponding to the fifteenth SS set.
   Optionally, the base station may further determine the twenty-third CORESET and the twenty-fourth CORESET, the twenty-third CORESET and the fourteenth CORESET correspond to the same beam, and the twenty-fourth CORESET and the fifteenth CORESET correspond to the same beam.
④ If the tenth SS set does not include the eleventh SS set and the twelfth SS set that are configured for PDCCH repetition transmission in the frequency division multiplexing manner, and includes the sixteenth SS set that is configured for PDCCH independent transmission, the sixteenth CORESET and the seventeenth CORESET are determined. The sixteenth CORESET is associated with the sixteenth SS set, the seventeenth CORESET is associated with the seventeenth SS set, the beam corresponding to the seventeenth CORESET and the beam corresponding to the sixteenth CORESET are the simultaneous-reception beams, and the at least two PDCCH MOs include the PDCCH MO corresponding to the seventeenth SS set.
   Optionally, the base station may further determine the twenty-fifth CORESET and the twenty-sixth CORESET. The twenty-fifth CORESET and the sixteenth CORESET correspond to the same beam, and the twenty-sixth CORESET and the seventeenth CORESET correspond to the same beam.
**⑤** If the tenth SS set does not include the eleventh SS set and the twelfth SS set that are configured for PDCCH repetition transmission in the frequency division multiplexing manner, and includes the fourteenth SS set that is configured for PDCCH repetition transmission in the time division multiplexing manner and the sixteenth SS set that is configured for PDCCH independent transmission, when the fourteenth CORESET and the sixteenth CORESET correspond to the different beams, and the beam corresponding to the fourteenth CORESET and the beam corresponding to the sixteenth CORESET are the simultaneous-reception beams, the fourteenth CORESET and the sixteenth CORESET are determined. The fourteenth CORESET is associated with the fourteenth SS set, and the sixteenth CORESET is associated with the sixteenth SS set.
   Optionally, the base station may further determine the twenty-third CORESET and the twenty-fifth CORESET, the twenty-third CORESET and the fourteenth CORESET correspond to the same beam, and the twenty-fifth CORESET and the sixteenth CORESET correspond to the same beam.
⑥ If the tenth SS set does not include the eleventh SS set and the twelfth SS set that are configured for PDCCH repetition transmission in the frequency division multiplexing manner, and includes the fourteenth SS set that is configured for PDCCH repetition transmission in the time division multiplexing manner and the sixteenth SS set that is configured for PDCCH independent transmission, when the fourteenth CORESET and the sixteenth CORESET correspond to the different beams, and the beam corresponding to the fourteenth CORESET and the beam corresponding to the sixteenth CORESET are the non-simultaneous-reception beams, the fourteenth CORESET and the fifteenth CORESET are determined; or the sixteenth CORESET and the seventeenth CORESET are determined.

The fourteenth CORESET is associated with the fourteenth SS set, the fifteenth CORESET is associated with the fifteenth SS set, the sixteenth CORESET is associated with the sixteenth SS set, the seventeenth CORESET is associated with the seventeenth SS set, the beam corresponding to the fifteenth CORESET and the beam corresponding to the fourteenth CORESET are the simultaneous-reception beams, the beam corresponding to the seventeenth CORESET and the beam corresponding to the sixteenth CORESET are the simultaneous-reception beams, the at least two PDCCH MOs include the PDCCH MO corresponding to the fifteenth SS set, and the at least two PDCCH MOs include the PDCCH MO corresponding to the seventeenth SS set.

Optionally, the base station may further determine the twenty-fifth CORESET and the twenty-sixth CORESET, the twenty-fifth CORESET and the sixteenth CORESET correspond to the same beam, and the twenty-sixth CORESET and the seventeenth CORESET correspond to the same beam.
⑦ If the tenth SS set does not include the eleventh SS set and the twelfth SS set that are configured for PDCCH repetition transmission in the frequency division multiplexing manner, and includes the fourteenth SS set that is configured for PDCCH repetition transmission in the time division multiplexing manner and the sixteenth SS set that is configured for PDCCH independent transmission, when the fourteenth CORESET and the sixteenth CORESET correspond to the same beam, the fourteenth CORESET, the sixteenth CORESET, and the eighteenth CORESET are determined. The fourteenth CORESET is associated with the fourteenth SS set, the sixteenth CORESET is associated with the sixteenth SS set, the eighteenth CORESET is associated with the eighteenth SS set, the beam corresponding to the eighteenth CORESET and the beam corresponding to the twelfth CORESET or the sixteenth CORESET are the simultaneous-reception beams, and the at least two PDCCH MOs include the PDCCH MO corresponding to the eighteenth SS set.

Optionally, the base station may further determine the twenty-seventh CORESET and the twenty-eighth CORESET, the twenty-seventh CORESET and the fourteenth CORESET or the sixteenth CORESET correspond to the same beam, and the twenty-eighth CORESET and the eighteenth CORESET correspond to the same beam.

Therefore, after determining the two different beams, the base station transmits control information on transmission beams corresponding to the two different beams. For example, a base station 1 determines the first CORESET and the second CORESET. The first CORESET and the second CORESET correspond to different beams. Further, the base station 1 may transmit control information on transmission beams corresponding to the first CORESET and the second CORESET. Optionally, the base station 1 may alternatively transmit the control information on the transmission beam corresponding to the first CORESET, and send information such as the determined second CORESET to a base station 2, so that the base station 2 transmits control information on the transmission beam corresponding to the second CORESET. For another example, both a base station 1 and a base station 2 may determine the first CORESET and the second CORESET, where the first CORESET and the second CORESET correspond to different beams. Then, the base station 1 and the base station 2 respectively transmit, based on configuration information of the base station 1 and configuration information of the base station 2, control information through corresponding transmission beams on time domain resources that are allowed for sending by the base station 1 and the base station 2. For example, assuming that configuration information of a cell in which the base station 1 is located includes first CORESET configuration information, and configuration information of a cell in which the base station 2 is located includes second CORESET configuration information, the base station 1 may transmit the control information on the transmission beam corresponding to the first CORESET, and the base station 2 may transmit the control information on the transmission beam corresponding to the second CORESET.

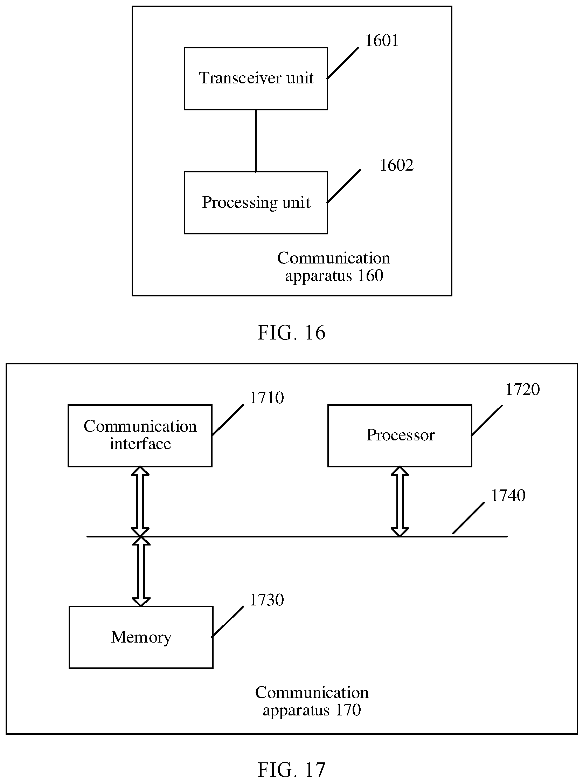

The following describes in detail a communication apparatus provided in this application with reference to FIG. 16 and FIG. 17.

FIG. 16 is a schematic diagram of a structure of a communication apparatus according to an embodiment of this application. The communication apparatus shown in FIG. 16 may be configured to perform some or all functions of the terminal device in the method embodiments described in FIG. 13 to FIG. 15B. The apparatus may be a terminal device, an apparatus in the terminal device, or an apparatus that can be used with the terminal device. The communication apparatus may alternatively be a chip system. The communication apparatus shown in FIG. 16 may include a transceiver unit 1601 and a processing unit 1602. The processing unit 1602 is configured to process data. The transceiver unit 1601 is integrated with a receiving unit and a sending unit. The transceiver unit 1601 may also be referred to as a communication unit. Alternatively, the transceiver unit 1601 may be split into a receiving unit and a sending unit. The processing unit 1602 and the transceiver unit 1601 below are similar, and details are not described below again.

In an implementation, the processing unit 1602 is configured to: when at least two physical downlink control channel monitoring occasions PDCCH MOs overlap in time domain, determine a first SS set from at least two search space sets SS sets associated with the at least two PDCCH MOs, where the first SS set is associated with a first control resource set CORESET.

The transceiver unit 1601 is configured to monitor a PDCCH on the first CORESET under one or more of the following conditions:
if the first SS set is configured for PDCCH repetition transmission in a frequency division multiplexing manner, determining, based on the processing unit 1602, a second SS set associated with the first SS set, and monitoring a PDCCH on the first CORESET and a second CORESET that is associated with the second SS set, where the first CORESET and the second CORESET correspond to different beams, the at least two PDCCH MOs include a PDCCH MO corresponding to the second SS set, the first SS set and the second SS set are configured for PDCCH repetition transmission in the frequency division multiplexing manner, and an association relationship between the first SS set and the second SS set is configured by using a radio resource control RRC parameter; or
if the first SS set is configured for PDCCH repetition transmission in a time division multiplexing manner, or the first SS set is configured for PDCCH independent transmission, monitoring a PDCCH on the first CORESET and a third CORESET, where a beam corresponding to the third CORESET and a beam corresponding to the first CORESET are simultaneous-reception beams, the third CORESET is associated with a third SS set, and the at least two PDCCH MOs include a PDCCH MO corresponding to the third SS set.

In an implementation, the processing unit 1602 is configured to: when at least two physical downlink control channel monitoring occasions PDCCH MOs overlap in time domain, determine a first SS set from at least two search space sets SS sets associated with the at least two PDCCH MOs, where the first SS set is associated with a first control resource set CORESET.

The processing unit 1602 is further configured to determine a third CORESET, where a beam corresponding to the third CORESET and a beam corresponding to the first CORESET are simultaneous-reception beams, the third CORESET is associated with a third SS set, and the at least two PDCCH MOs include a PDCCH MO corresponding to the third SS set.

The transceiver unit 1601 is configured to monitor a PDCCH on the first CORESET and the third CORESET.

In an implementation, the processing unit 1602 is configured to: when at least two physical downlink control channel monitoring occasions PDCCH MOs overlap in time domain, determine a first cell, where the at least two PDCCH MOs are associated with at least two search space sets SS sets.

The transceiver unit 1601 is configured to: if a tenth SS set configured for the first cell includes an eleventh SS set and a twelfth SS set that are configured for PDCCH repetition transmission in a frequency division multiplexing manner, and an eleventh control resource set CORESET and a twelfth CORESET correspond to different beams, monitor a PDCCH on the eleventh CORESET and the twelfth CORESET, where
the eleventh CORESET is associated with the eleventh SS set, the twelfth CORESET is associated with the twelfth SS set, and the at least two SS sets include the tenth SS set.

For another possible implementation of the communication apparatus, refer to the related descriptions of the functions of the terminal device in the method embodiments corresponding to FIG. 13 to FIG. 15B. Details are not described herein again.

FIG. 16 is a schematic diagram of a structure of a communication apparatus according to an embodiment of this application. The communication apparatus shown in FIG. 16 may be configured to perform some or all functions of the access network device in the method embodiments described in FIG. 13 to FIG. 15B. The apparatus may be an access network device, an apparatus in the access network device, or an apparatus that can be used with the access network device. The communication apparatus may alternatively be a chip system. The communication apparatus shown in FIG. 16 may include a transceiver unit 1601 and a processing unit 1602.

In an implementation, the processing unit 1602 is configured to: when at least two physical downlink control channel monitoring occasions PDCCH MOs overlap in time domain, determine a first SS set from at least two search space sets SS sets associated with the at least two PDCCH MOs.

The processing unit 1602 is further configured to determine a first control resource set CORESET associated with the first SS set under one or more of the following conditions:
if the first SS set is configured for PDCCH repetition transmission in a frequency division multiplexing manner, determining a second SS set associated with the first SS set, and determining the first CORESET and a second CORESET that is associated with the second SS set, where the first CORESET and the second CORESET correspond to different beams, the at least two PDCCH MOs include a PDCCH MO corresponding to the second SS set, the first SS set and the second SS set are configured for PDCCH repetition transmission in the frequency division multiplexing manner, and an association relationship between the first SS set and the second SS set is configured by using a radio resource control RRC parameter; or
if the first SS set is configured for PDCCH repetition transmission in a time division multiplexing manner, or the first SS set is configured for PDCCH independent transmission, determining the first CORESET and a third CORESET, where a beam corresponding to the third CORESET and a beam corresponding to the first CORESET are simultaneous-reception beams, the third CORESET is associated with a third SS set, and the at least two PDCCH MOs include a PDCCH MO corresponding to the third SS set.

In an implementation, the processing unit 1602 is configured to: when at least two physical downlink control channel monitoring occasions PDCCH MOs overlap in time domain, determine a first SS set from at least two search space sets SS sets associated with the at least two PDCCH MOs.

The processing unit 1602 is further configured to determine a third control resource set CORESET and a first CORESET that is associated with the first SS set, where
a beam corresponding to the third CORESET and a beam corresponding to the first CORESET are simultaneous-reception beams, the third CORESET is associated with a third SS set, and the at least two PDCCH MOs include a PDCCH MO corresponding to the third SS set.

In an implementation, the processing unit 1602 is configured to: when at least two physical downlink control channel monitoring occasions PDCCH MOs overlap in time domain, determine a first cell, where the at least two PDCCH MOs are associated with at least two search space sets SS sets.

The processing unit 1602 is further configured to: if a tenth SS set configured for the first cell includes an eleventh SS set and a twelfth SS set that are configured for PDCCH repetition transmission in a frequency division multiplexing manner, and an eleventh CORESET associated with the eleventh control resource set SS set and a twelfth CORESET associated with the twelfth SS set correspond to different beams, determine the eleventh CORESET and the twelfth CORESET, where
the at least two SS sets include the tenth SS set.

For another possible implementation of the communication apparatus, refer to the related descriptions of the functions of the access network device in the method embodiments corresponding to FIG. 13 to FIG. 15B. Details are not described herein again.

FIG. 17 is a schematic diagram of a structure of another communication apparatus according to an embodiment of this application. FIG. 17 shows a communication apparatus 170 according to an embodiment of this application, configured to implement functions of the terminal device in FIG. 13 to FIG. 15B. The apparatus may be a terminal device or an apparatus used in the terminal device. The apparatus used in the terminal device may be a chip system or a chip in the terminal device. The chip system may include a chip, or may include a chip and another discrete component.

Alternatively, the communication apparatus 170 is configured to implement functions of the access network device in FIG. 13 to FIG. 15B. The apparatus may be an access network device or an apparatus used in the access network device. The apparatus used in the access network device may be a chip system or a chip in the access network device. The chip system may include a chip, or may include a chip and another discrete component.

The communication apparatus 170 includes at least one processor 1720, configured to implement a data processing function of the terminal device or the access network device in the methods provided in embodiments of this application. The apparatus 170 may further include a communication interface 1710, configured to implement receiving and sending operations of the terminal device or the access network device in the methods provided in embodiments of this application. In this embodiment of this application, the communication interface may be a transceiver, a circuit, a bus, a module, or a communication interface of another type, and is configured to communicate with another device by using a transmission medium. For example, the communication interface 1710 is used by an apparatus in the apparatus 170 to communicate with another device. The processor 1720 receives and sends data through the communication interface 1710, and is configured to implement the methods in FIG. 13 to FIG. 15B in the foregoing method embodiments.

The apparatus 170 may further include at least one memory 1730, configured to store program instructions and/or data. The memory 1730 is coupled to the processor 1720. The coupling in this embodiment of this application may be an indirect coupling or a communication connection between apparatuses, units, or modules in an electrical form, a mechanical form, or another form, and is used for information exchange between the apparatuses, the units, or the modules. The processor 1720 may cooperate with the memory 1730. The processor 1720 may execute the program instructions stored in the memory 1730. At least one of the at least one memory may be included in the processor.

After the apparatus 170 is powered on, the processor 1720 may read a software program in the memory 1730, interpret and execute instructions of the software program, and process data of the software program. When data needs to be sent wirelessly, the processor 1720 performs baseband processing on the to-be-sent data, and then outputs a baseband signal to a radio frequency circuit (not shown in the figure). The radio frequency circuit performs radio frequency processing on the baseband signal, and then sends a radio frequency signal to the outside in a form of an electromagnetic wave through an antenna. When data is sent to the apparatus 170, the radio frequency circuit receives a radio frequency signal through the antenna, converts the radio frequency signal into a baseband signal, and outputs the baseband signal to the processor 1720; and the processor 1720 converts the baseband signal into data and processes the data.

In another implementation, the radio frequency circuit and the antenna may be disposed independent of the processor 1720 that performs baseband processing. For example, in a distributed scenario, the radio frequency circuit and the antenna may be disposed remotely and independent of the communication apparatus.

A specific connection medium between the communication interface 1710, the processor 1720, and the memory 1730 is not limited in this embodiment of this application. In this embodiment of this application, the memory 1730, the processor 1720, and the communication interface 1710 are connected through a bus 1740 in FIG. 17. The bus is represented by using a thick line in FIG. 17. A manner of a connection between other components is merely an example for description, and is not limited thereto. The bus may be classified into an address bus, a data bus, a control bus, and the like. For ease of representation, only one thick line is used to represent the bus in FIG. 17, but this does not mean that there is only one bus or only one type of bus.

When the apparatus 170 is specifically an apparatus used in the terminal device or the access network device. For example, when the apparatus 170 is specifically a chip or a chip system, the communication interface 1710 may output or receive a baseband signal. When the apparatus 170 is specifically a terminal device or an access network device, the communication interface 1710 may output or receive a radio frequency signal. In this embodiment of this application, the processor may be a general-purpose processor, a digital signal processor, an application-specific integrated circuit, a field programmable gate array or another programmable logic device, a discrete gate or a transistor logic device, or a discrete hardware component, and may implement or perform the methods, operations, and logical block diagrams disclosed in this embodiment of this application. The general-purpose processor may be a microprocessor, any conventional processor, or the like. The operations in the methods disclosed with reference to embodiments of this application may be directly performed and completed by a hardware processor, or may be performed and completed by a combination of hardware in the processor and a software module.

An embodiment of this application further provides a computer-readable storage medium. The computer-readable storage medium stores instructions. When the instructions are run on a processor, the method procedures in the method embodiments in FIG. 13 to FIG. 15B are implemented.

An embodiment of this application further provides a computer program product. When the computer program product runs on a processor, the method procedures in FIG. 13 to FIG. 15B in the foregoing method embodiments are implemented.

## Claims

1. A communication method, comprising:
when at least two physical downlink control channel monitoring occasions PDCCH MOs overlap in time domain, determining a first SS set from at least two search space sets SS sets associated with the at least two PDCCH MOs, wherein the first SS set is associated with a first control resource set CORESET; and
monitoring a PDCCH on the first CORESET under one or more of the following conditions:
if the first SS set is configured for PDCCH repetition transmission in a frequency division multiplexing manner, determining a second SS set associated with the first SS set, and monitoring a PDCCH on the first CORESET and a second CORESET that is associated with the second SS set, wherein the first CORESET and the second CORESET correspond to different beams, the at least two PDCCH MOs comprise a PDCCH MO corresponding to the second SS set, the first SS set and the second SS set are configured for PDCCH repetition transmission in the frequency division multiplexing manner, and an association relationship between the first SS set and the second SS set is configured by using a radio resource control RRC parameter; or
if the first SS set is configured for PDCCH repetition transmission in a time division multiplexing manner, or the first SS set is configured for PDCCH independent transmission, monitoring a PDCCH on the first CORESET and a third CORESET, wherein a beam corresponding to the third CORESET and a beam corresponding to the first CORESET are simultaneous-reception beams, the third CORESET is associated with a third SS set, and the at least two PDCCH MOs comprise a PDCCH MO corresponding to the third SS set.

2. The method according to claim 1, wherein the method further comprises:
if the first CORESET and the second CORESET correspond to a same beam, monitoring a PDCCH on the first CORESET, the second CORESET, and a fourth CORESET, wherein
a beam corresponding to the fourth CORESET and the beam corresponding to the first CORESET or the second CORESET are simultaneous-reception beams, the fourth CORESET is associated with a fourth SS set, and the at least two PDCCH MOs comprise a PDCCH MO corresponding to the fourth SS set.

3. The method according to claim 1 or 2, wherein if beams corresponding to a plurality of CORESETs comprised in at least two CORESETs corresponding to the at least two PDCCH MOs and the beam corresponding to the first CORESET are simultaneous-reception beams, the third CORESET or the fourth CORESET is one of the plurality of CORESETs.

4. The method according to claim 3, wherein the third CORESET or the fourth CORESET is a CORESET in the plurality of CORESETs that meets a first predefined rule.

5. The method according to claim 1, wherein the method further comprises:
monitoring a PDCCH on a fifth CORESET and a sixth CORESET, wherein
at least two CORESETs corresponding to the at least two PDCCH MOs comprise the fifth CORESET and the sixth CORESET, the fifth CORESET and the first CORESET correspond to a same beam, and the sixth CORESET and the second CORESET correspond to a same beam.

6. The method according to claim 1, wherein the method further comprises:
monitoring a PDCCH on a fifth CORESET and a seventh CORESET, wherein
at least two CORESETs corresponding to the at least two PDCCH MOs comprise the fifth CORESET and the seventh CORESET, the fifth CORESET and the first CORESET correspond to a same beam, and the seventh CORESET and the third CORESET correspond to a same beam.

7. The method according to claim 2, wherein the method further comprises:
monitoring a PDCCH on an eighth CORESET and a ninth CORESET, wherein
at least two CORESETs corresponding to the at least two PDCCH MOs comprise the eighth CORESET and the ninth CORESET, the eighth CORESET and the first CORESET or the second CORESET correspond to a same beam, and the ninth CORESET and the fourth CORESET correspond to a same beam.

8. The method according to any one of claims 1 to 7, wherein the SS set is a common search space CSS set or a user-specific search space USS set.

9. The method according to any one of claims 1 to 8, wherein the first SS set is an SS set corresponding to a smallest search space set index in at least one SS set configured for a first cell, the first cell is a cell corresponding to a smallest cell index in cells for which one or more of the at least two SS sets are configured, the at least two SS sets comprise the at least one SS set configured for the first cell, and an SS set configured for each cell comprises a CSS in the cells for which the one or more of the at least two SS sets are configured.

10. The method according to any one of claims 1 to 8, wherein the first SS set is an SS set corresponding to a smallest search space set index in at least one SS set configured for a first cell, the first cell is a cell corresponding to a smallest cell index in cells for which one or more of the at least two SS sets are configured, the at least two SS sets comprise the at least one SS set configured for the first cell, and an SS set configured for each cell comprises a USS but does not comprise a CSS in the cells for which the one or more of the at least two SS sets are configured.

11. The method according to any one of claims 1 to 10, wherein the beam is represented by a QCL-TypeD property.

12. A communication method, comprising:
when at least two physical downlink control channel monitoring occasions PDCCH MOs overlap in time domain, determining a first SS set from at least two search space sets SS sets associated with the at least two PDCCH MOs; and
determining a first control resource set CORESET associated with the first SS set under one or more of the following conditions:
if the first SS set is configured for PDCCH repetition transmission in a frequency division multiplexing manner, determining a second SS set associated with the first SS set, and determining the first CORESET and a second CORESET that is associated with the second SS set, wherein the first CORESET and the second CORESET correspond to different beams, the at least two PDCCH MOs comprise a PDCCH MO corresponding to the second SS set, the first SS set and the second SS set are configured for PDCCH repetition transmission in the frequency division multiplexing manner, and an association relationship between the first SS set and the second SS set is configured by using a radio resource control RRC parameter; or
if the first SS set is configured for PDCCH repetition transmission in a time division multiplexing manner, or the first SS set is configured for PDCCH independent transmission, determining the first CORESET and a third CORESET, wherein a beam corresponding to the third CORESET and a beam corresponding to the first CORESET are simultaneous-reception beams, the third CORESET is associated with a third SS set, and the at least two PDCCH MOs comprise a PDCCH MO corresponding to the third SS set.

13. The method according to claim 12, wherein the method further comprises:
if the first CORESET and the second CORESET correspond to a same beam, determining the first CORESET, the second CORESET, and a fourth CORESET, wherein
a beam corresponding to the fourth CORESET and the beam corresponding to the first CORESET or the second CORESET are simultaneous-reception beams, the fourth CORESET is associated with a fourth SS set, and the at least two PDCCH MOs comprise a PDCCH MO corresponding to the fourth SS set.

14. The method according to claim 12 or 13, wherein if beams corresponding to a plurality of CORESETs comprised in at least two CORESETs corresponding to the at least two PDCCH MOs and the beam corresponding to the first CORESET are simultaneous-reception beams, the third CORESET or the fourth CORESET is one of the plurality of CORESETs.

15. The method according to claim 14, wherein the third CORESET or the fourth CORESET is a CORESET in the plurality of CORESETs that meets a first predefined rule.

16. The method according to claim 12, wherein the method further comprises:
determining a fifth CORESET and a sixth CORESET, wherein
at least two CORESETs corresponding to the at least two PDCCH MOs comprise the fifth CORESET and the sixth CORESET, the fifth CORESET and the first CORESET correspond to a same beam, and the sixth CORESET and the second CORESET correspond to a same beam.

17. The method according to claim 12, wherein the method further comprises:
determining a fifth CORESET and a seventh CORESET, wherein
at least two CORESETs corresponding to the at least two PDCCH MOs comprise the fifth CORESET and the seventh CORESET, the fifth CORESET and the first CORESET correspond to a same beam, and the seventh CORESET and the third CORESET correspond to a same beam.

18. The method according to claim 12, wherein the method further comprises:
determining an eighth CORESET and a ninth CORESET, wherein
at least two CORESETs corresponding to the at least two PDCCH MOs comprise the eighth CORESET and the ninth CORESET, the eighth CORESET and the first CORESET or the second CORESET correspond to a same beam, and the ninth CORESET and the fourth CORESET correspond to a same beam.

19. The method according to any one of claims 12 to 18, wherein the SS set is a common search space CSS set or a user-specific search space USS set.

20. The method according to any one of claims 12 to 19, wherein the first SS set is an SS set corresponding to a smallest search space set index in at least one SS set configured for a first cell, the first cell is a cell corresponding to a smallest cell index in cells for which one or more of the at least two SS sets are configured, the at least two SS sets comprise the at least one SS set configured for the first cell, and an SS set configured for each cell comprises a CSS in the cells for which the one or more of the at least two SS sets are configured.

21. The method according to any one of claims 12 to 19, wherein the first SS set is an SS set corresponding to a smallest search space set index in at least one SS set configured for a first cell, the first cell is a cell corresponding to a smallest cell index in cells for which one or more of the at least two SS sets are configured, the at least two SS sets comprise the at least one SS set configured for the first cell, and an SS set configured for each cell comprises a USS but does not comprise a CSS in the cells for which the one or more of the at least two SS sets are configured.

22. The method according to any one of claims 12 to 21, wherein the beam is represented by a QCL-TypeD property.

23. A communication apparatus, wherein the communication apparatus is a terminal device and comprises:
a processing unit, configured to: when at least two physical downlink control channel monitoring occasions PDCCH MOs overlap in time domain, determine a first SS set from at least two search space sets SS sets associated with the at least two PDCCH MOs, wherein the first SS set is associated with a first control resource set CORESET; and
a transceiver unit, configured to monitor a PDCCH on the first CORESET under one or more of the following conditions:
if the first SS set is configured for PDCCH repetition transmission in a frequency division multiplexing manner, determining, based on the processing unit, a second SS set associated with the first SS set, and monitoring a PDCCH on the first CORESET and a second CORESET that is associated with the second SS set, wherein the first CORESET and the second CORESET correspond to different beams, the at least two PDCCH MOs comprise a PDCCH MO corresponding to the second SS set, the first SS set and the second SS set are configured for PDCCH repetition transmission in the frequency division multiplexing manner, and an association relationship between the first SS set and the second SS set is configured by using a radio resource control RRC parameter; or
if the first SS set is configured for PDCCH repetition transmission in a time division multiplexing manner, or the first SS set is configured for PDCCH independent transmission, monitoring a PDCCH on the first CORESET and a third CORESET, wherein a beam corresponding to the third CORESET and a beam corresponding to the first CORESET are simultaneous-reception beams, the third CORESET is associated with a third SS set, and the at least two PDCCH MOs comprise a PDCCH MO corresponding to the third SS set.

24. The apparatus according to claim 23, wherein the processing unit is further configured to:
if the first CORESET and the second CORESET correspond to a same beam, monitor a PDCCH on the first CORESET, the second CORESET, and a fourth CORESET through the transceiver unit, wherein
a beam corresponding to the fourth CORESET and the beam corresponding to the first CORESET or the second CORESET are simultaneous-reception beams, the fourth CORESET is associated with a fourth SS set, and the at least two PDCCH MOs comprise a PDCCH MO corresponding to the fourth SS set.

25. The apparatus according to claim 23 or 24, wherein if beams corresponding to a plurality of CORESETs comprised in at least two CORESETs corresponding to the at least two PDCCH MOs and the beam corresponding to the first CORESET are simultaneous-reception beams, the third CORESET or the fourth CORESET is one of the plurality of CORESETs.

26. The apparatus according to claim 25, wherein the third CORESET or the fourth CORESET is a CORESET in the plurality of CORESETs that meets a first predefined rule.

27. The apparatus according to claim 23, wherein the transceiver unit is further configured to:
monitor a PDCCH on a fifth CORESET and a sixth CORESET, wherein
at least two CORESETs corresponding to the at least two PDCCH MOs comprise the fifth CORESET and the sixth CORESET, the fifth CORESET and the first CORESET correspond to a same beam, and the sixth CORESET and the second CORESET correspond to a same beam.

28. The apparatus according to claim 23, wherein the transceiver unit is further configured to:
monitor a PDCCH on a fifth CORESET and a seventh CORESET, wherein
at least two CORESETs corresponding to the at least two PDCCH MOs comprise the fifth CORESET and the seventh CORESET, the fifth CORESET and the first CORESET correspond to a same beam, and the seventh CORESET and the third CORESET correspond to a same beam.

29. The apparatus according to claim 24, wherein the transceiver unit is further configured to:
monitor a PDCCH on an eighth CORESET and a ninth CORESET, wherein
at least two CORESETs corresponding to the at least two PDCCH MOs comprise the eighth CORESET and the ninth CORESET, the eighth CORESET and the first CORESET or the second CORESET correspond to a same beam, and the ninth CORESET and the fourth CORESET correspond to a same beam.

30. The apparatus according to any one of claims 23 to 29, wherein the SS set is a common search space CSS set or a user-specific search space USS set.

31. The apparatus according to any one of claims 23 to 30, wherein the first SS set is an SS set corresponding to a smallest search space set index in at least one SS set configured for a first cell, the first cell is a cell corresponding to a smallest cell index in cells for which one or more of the at least two SS sets are configured, the at least two SS sets comprise the at least one SS set configured for the first cell, and an SS set configured for each cell comprises a CSS in the cells for which the one or more of the at least two SS sets are configured.

32. The apparatus according to any one of claims 23 to 30, wherein the first SS set is an SS set corresponding to a smallest search space set index in at least one SS set configured for a first cell, the first cell is a cell corresponding to a smallest cell index in cells for which one or more of the at least two SS sets are configured, the at least two SS sets comprise the at least one SS set configured for the first cell, and an SS set configured for each cell comprises a USS but does not comprise a CSS in the cells for which the one or more of the at least two SS sets are configured.

33. The apparatus according to any one of claims 23 to 32, wherein the beam is represented by a QCL-TypeD property.

34. The apparatus according to any one of claims 23 to 33, wherein the processing unit is a processor, and the transceiver unit is a transceiver.

35. A communication apparatus, wherein the communication apparatus is an access network device and comprises:
a processing unit, configured to: when at least two physical downlink control channel monitoring occasions PDCCH MOs overlap in time domain, determine a first SS set from at least two search space sets SS sets associated with the at least two PDCCH MOs, wherein
the processing unit is further configured to determine a first control resource set CORESET associated with the first SS set under one or more of the following conditions:
if the first SS set is configured for PDCCH repetition transmission in a frequency division multiplexing manner, determining a second SS set associated with the first SS set, and determining the first CORESET and a second CORESET that is associated with the second SS set, wherein the first CORESET and the second CORESET correspond to different beams, the at least two PDCCH MOs comprise a PDCCH MO corresponding to the second SS set, the first SS set and the second SS set are configured for PDCCH repetition transmission in the frequency division multiplexing manner, and an association relationship between the first SS set and the second SS set is configured by using a radio resource control RRC parameter; or
if the first SS set is configured for PDCCH repetition transmission in a time division multiplexing manner, or the first SS set is configured for PDCCH independent transmission, determining the first CORESET and a third CORESET, wherein a beam corresponding to the third CORESET and a beam corresponding to the first CORESET are simultaneous-reception beams, the third CORESET is associated with a third SS set, and the at least two PDCCH MOs comprise a PDCCH MO corresponding to the third SS set.

36. The apparatus according to claim 35, wherein the processing unit is further configured to:
if the first CORESET and the second CORESET correspond to a same beam, determine the first CORESET, the second CORESET, and a fourth CORESET, wherein
a beam corresponding to the fourth CORESET and the beam corresponding to the first CORESET or the second CORESET are simultaneous-reception beams, the fourth CORESET is associated with a fourth SS set, and the at least two PDCCH MOs comprise a PDCCH MO corresponding to the fourth SS set.

37. The apparatus according to claim 35 or 36, wherein if beams corresponding to a plurality of CORESETs comprised in at least two CORESETs corresponding to the at least two PDCCH MOs and the beam corresponding to the first CORESET are simultaneous-reception beams, the third CORESET or the fourth CORESET is one of the plurality of CORESETs.

38. The apparatus according to claim 37, wherein the third CORESET or the fourth CORESET is a CORESET in the plurality of CORESETs that meets a first predefined rule.

39. The apparatus according to claim 35, wherein the processing unit is further configured to:
determine a fifth CORESET and a sixth CORESET, wherein
at least two CORESETs corresponding to the at least two PDCCH MOs comprise the fifth CORESET and the sixth CORESET, the fifth CORESET and the first CORESET correspond to a same beam, and the sixth CORESET and the second CORESET correspond to a same beam.

40. The apparatus according to claim 35, wherein the processing unit is further configured to:
determine a fifth CORESET and a seventh CORESET, wherein
at least two CORESETs corresponding to the at least two PDCCH MOs comprise the fifth CORESET and the seventh CORESET, the fifth CORESET and the first CORESET correspond to a same beam, and the seventh CORESET and the third CORESET correspond to a same beam.

41. The apparatus according to claim 35, wherein the processing unit is further configured to:
determine an eighth CORESET and a ninth CORESET, wherein
at least two CORESETs corresponding to the at least two PDCCH MOs comprise the eighth CORESET and the ninth CORESET, the eighth CORESET and the first CORESET or the second CORESET correspond to a same beam, and the ninth CORESET and the fourth CORESET correspond to a same beam.

42. The apparatus according to any one of claims 35 to 41, wherein the SS set is a common search space CSS set or a user-specific search space USS set.

43. The apparatus according to any one of claims 25 to 42, wherein the first SS set is an SS set corresponding to a smallest search space set index in at least one SS set configured for a first cell, the first cell is a cell corresponding to a smallest cell index in cells for which one or more of the at least two SS sets are configured, the at least two SS sets comprise the at least one SS set configured for the first cell, and an SS set configured for each cell comprises a CSS in the cells for which the one or more of the at least two SS sets are configured.

44. The apparatus according to any one of claims 25 to 42, wherein the first SS set is an SS set corresponding to a smallest search space set index in at least one SS set configured for a first cell, the first cell is a cell corresponding to a smallest cell index in cells for which one or more of the at least two SS sets are configured, the at least two SS sets comprise the at least one SS set configured for the first cell, and an SS set configured for each cell comprises a USS but does not comprise a CSS in the cells for which the one or more of the at least two SS sets are configured.

45. The apparatus according to any one of claims 25 to 44, wherein the beam is represented by a QCL-TypeD property.

46. The apparatus according to any one of claims 35 to 45, wherein the processing unit is a processor.

47. A communication apparatus, comprising at least one processor, wherein the at least one processor is configured to execute a computer program or instructions stored in at least one memory, so that the apparatus implements the method according to any one of claims 1 to 11, or implements the method according to any one of claims 12 to 22.

48. The apparatus according to claim 47, wherein the communication apparatus further comprises the at least one memory.

49. A computer-readable storage medium, wherein the storage medium stores a computer program or instructions, and when the computer program or the instructions are executed by a computer, the method according to any one of claims 1 to 11 or the method according to any one of claims 12 to 22 is implemented.

50. A computer program product, wherein the computer program product comprises computer program code, and when the computer program code is run on a computer, the method according to any one of claims 1 to 11 or the method according to any one of claims 12 to 22 is implemented.
